(19)

Europäisches
Patentamt
European
Patent Office
Office européen
des brevets

(11) **EP 3 603 399 A1**

(12) **EUROPEAN PATENT APPLICATION**

(43) Date of publication:
**05.02.2020 Bulletin 2020/06**

(21) Application number: **18186930.6**

(22) Date of filing: **02.08.2018**

(51) Int Cl.:
***A01N 43/80*** (2006.01)     ***A01N 43/50*** (2006.01)
***A01P 13/00*** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BASF SE
67056 Ludwigshafen am Rhein (DE)**

(72) Inventors:
• **ZAGAR, Cyrill
Research Triangle Park, NC 27709 (US)**

• **BOWE, Steven Joseph
Research Triangle Park, NC 27709 (US)**
• **FASSLER, Nicholas T
Research Triangle Park, NC 27709 (US)**
• **KELLER, Kyle Edward
Research Triangle Park, NC 27709 (US)**

(74) Representative: **BASF IP Association
BASF SE
G-FLP-C006
67056 Ludwigshafen (DE)**

(54) **HERBICIDAL MIXTURES COMPRISING ISOXAFLUTOLE, PYROXASULFONE AND AN IMIDAZOLINONE HERBICIDE; AND THEIR USE IN SOYBEAN AND COTTON CULTURES**

(57)     The present invention relates to herbicidal mixtures comprising isoxaflutole, pyroxasulfone and an imidazolinone herbicide. The herbicidal mixtures may comprise at least one further herbicide selected from the group consisting of glyphosate and its salts, glufosinate and its salts, L-glufosinate (glufosinate-P) and its salts, dicamba and its salts and esters, 2,4-D and its salts and esters, bicyclopyrone, fenquinotrione, mesotrione, tembotrione, tolpyralate and toprame-zone. Furthermore, the invention relates to methods and uses applying the herbicidal mixtures, especially for controlling undesirable vegetation in in soybean and cotton cultures.

**EP 3 603 399 A1**

**Description**

The present invention relates to a herbicidal mixture comprising isoxaflutole (compound I), pyroxasulfone (compound II), at least one imidazolinone herbicide selected from the group consisting of imazamox, imazapyr, imazapic, imazaquin and imazethapyr and their salts (compound III) and optionally at least one further herbicide selected from the group consisting of glyphosate and its salts, glufosinate and its salts, L-glufosinate (glufosinate-P) and its salts, dicamba and its salts and esters, 2,4-D and its salts and esters, bicyclopyrone, fenquinotrione, mesotrione, tembotrione, tolpyralate and topramezone (compound IV).

The invention also relates to methods and uses for controlling undesirable vegetation in HPPD-tolerant soybeans and HPPD-tolerant cotton.

Isoxaflutole is a herbicide that acts through inhibition of the plant enzyme hydroxyphenylpyruvate dioxygenase (HPPD).

Tolerant or resistant soybean or cotton varieties (e.g. transgenic soybean or cotton varieties) provide the option to use herbicides, which are originally not selective, in respective tolerant or resistant soybeans or cotton in addition to conventional weed control system. One example is isoxaflutole which cannot be used in conventional soybeans or cotton because the crops are not sufficiently tolerant against its herbicidal action; but which can achieve effective weed control by post- and particulary by pre-emergence application in HPPD tolerant soybeans or cotton. Isoxaflutole is a broad-spectrum herbicide that controls many grass and broadleaf herbicide species; however, there are a few tough to control species or resistant biotypes that it does not fully control. Another challenge is the duration of action, or the degradation rate of the herbicide. Furthermore, changes in the sensitivity of harmful plants, which may occur upon prolonged use of the herbicides or within a geographical limited area, must also be taken into consideration. The resulting loss of action against individual plants can sometimes compensated for to a certain extent by higher application rates of the herbicides. However, there is always a demand for methods to achieve the herbicidal effect with lower application rates of active compounds to reduce not only the amount of an active compound required for application, but also the amount of formulation auxiliaries. Thus, low application rates are for economic and environmental reasons an objective to enhance the eco-friendliness of the herbicide treatment.

One possibility for improving the use profile of a herbicide is the combination of the herbicide in question with one or more other active compounds which have the desired additional properties. However, the combined use of a plurality of active compounds may lead to phenomena of a chemical, physical and biological incompatibility (e.g. instability of a coformulation, decomposition of an active compound or antagonism in the biological action of the active compounds).

Thus, finding effective isoxaflutole combinations with an additional herbicide faces the challenge that in many instances the effectiveness of such combinations is not satisfactory and high application rates are still required to achieve an acceptable weed control.

Thus, it is an object of the present invention to find combinations of active compounds with a favorable profile of action, high stability and, ideally, synergistically enhanced activity for application in HPPD tolerant soybean or cotton, which allows the application rate to be reduced in comparison with solutions provided by prior art mixtures. Moreover, the persistence of the herbicidal activity of the mixture should be sufficiently long in order to achieve control of the weeds over a sufficient long time period thus allowing a more flexible application. The mixtures should also show an accelerated action on harmful plants and not affect the growth of the soybean or cotton plant.

Surprisingly, it has been found that mixtures of isoxaflutole and the herbicidal compounds II, III and optionally IV show enhanced herbicide action against undesirable vegetation in pre-emergence or post-emergence use in HPPD tolerant soybeans or cotton and/or show superior compatibility with the crop plant, i.e. their use leads to a reduced damage of the soybean or cotton plants and/or does not result in increased damage of the soybean or cotton plants, if compared to isoxaflutole alone.

Thus, the present invention relates to herbicidal mixtures of

1) isoxaflutole as compound I; and
2) pyroxasulfone as compound II; and
3) an imidazolinone herbicide selected from the group consisting of imazamox, imazapyr, imazapic, imazaquin and imazethapyr and their salts (compound III); and
4) optionally at least one further herbicide selected from the group consisting of glyphosate and its salts, glufosinate and its salts, L-glufosinate (glufosinate-P) and its salts, dicamba and its salts and esters, 2,4-D and its salts and esters, bicyclopyrone, fenquinotrione, mesotrione, tembotrione, tolpyralate and topramezone (compound IV).

Compounds I, II, III and IV as well as their pesticidal action and methods for producing them are generally known, for example in the Pesticide Manual V5.2 (ISBN 978 1 901396 85 0) (2008-2011) and the Compendium of Pesticide Common Names website (http://www.alanwood.net/pesticides/), amongst other sources.

In the inventive mixtures the weight ratio of compound I to compound II is preferably from 15:1 to 1:15, more preferably 10:1 to 1:10, in particular from 5:1 to 1:5.

In the inventive mixtures the weight ratio of compound I to compound III is preferably from 15:1 to 1:15, more preferably 10:1 to 1:10, in particular from 5:1 to 1:5.

In the inventive mixtures the weight ratio of compound I to compound IV is preferably from 100:1 to 1:1000, more preferably 10:1 to 1:100.

Preferred compounds III are imazamox, imazamox ammonium, imazapyr, imazapyr isopropylammonium, imazapyr ammonium, imazapic, imazapic ammonium, imazaquin, imazaquin ammonium, imazethapyr and imazethapyr ammonium. Particularly preferred are imazamox, imazamox ammonium, imazethapyr and imazethapyr ammonium, in particular imazethapyr and imazethapyr ammonium.

Preferred compounds IV are glyphosate, glyphosate dimethylammmonium, glyphosate isopropylammonium, glyphosate potassium, glyphosate trimesium (sulfosate), glufosinate, glufosinate ammonium, glufosinate sodium, L-glufosinate, L-glufosinate ammonium, L-glufosinate sodium, dicamba, dicamba ethanolamine salt, dicamba diglycolamine salt, dicamba potassium and dicamba BAPMA salt (i. e. dicamba N,N-bis(3-aminopropyl)methylamine salt), 2,4-D, 2,4-D choline salt, bicyclopyrone, fenquinotrione, mesotrione, tembotrione, tolpyralate and topramezone. Particularly preferred are glyphosate, glyphosate dimethylammmonium, glyphosate isopropylammonium, glyphosate potassium, glufosinate, glufosinate ammonium, L-glufosinate, L-glufosinate ammonium, L-glufosinate sodium, dicamba, dicamba ethanolamine salt, dicamba diglycolamine salt, dicamba potassium and dicamba BAPMA salt (i. e. dicamba N,N-bis(3-aminopropyl)methylamine salt), 2,4-D, 2,4-D choline salt, bicyclopyrone, fenquinotrione, mesotrione, tembotrione, tolpyralate and topramezone, in particular glyphosate, glyphosate dimethylammmonium, glyphosate isopropylammonium, glyphosate potassium, glufosinate, glufosinate ammonium, dicamba, dicamba ethanolamine salt, dicamba diglycolamine salt, dicamba potassium and dicamba BAPMA salt (i. e. dicamba N,N-bis(3-aminopropyl)methylamine salt), 2,4-D, 2,4-D choline salt, mesotrione, tolpyralate and topramezone.

In a particularly preferred embodiment of the invention, compound III is imazethapyr or imazethapyr ammonium and there is no compound IV present.

In another particularly preferred embodiment of the invention, compound III is imazethapyr or imazethapyr ammonium and compound IV is selected from the group comprising glyphosate, glyphosate dimethylammmonium, glyphosate isopropylammonium and glyphosate potassium.

In another particularly preferred embodiment of the invention, compound III is imazethapyr or imazethapyr ammonium and compound IV is selected from the group comprising glufosinate and glufosinate ammonium.

In another particularly preferred embodiment of the invention, compound III is imazethapyr or imazethapyr ammonium and compound IV is selected from the group comprising L-glufosinate, L-glufosinate ammonium and L-glufosinate sodium.

In another particularly preferred embodiment of the invention, compound III is imazethapyr or imazethapyr ammonium and compound IV is selected from the group comprising dicamba, dicamba ethanolamine salt, dicamba diglycolamine salt, dicamba potassium and dicamba BAPMA salt.

In another particularly preferred embodiment of the invention, compound III is imazethapyr or imazethapyr ammonium and a first compound IV is selected from the group comprising glyphosate, glyphosate dimethylammmonium, glyphosate isopropylammonium and glyphosate potassium and a second compound IV is selected from the group comprising dicamba, dicamba ethanolamine salt, dicamba diglycolamine salt, dicamba potassium and dicamba BAPMA salt.

In another particularly preferred embodiment of the invention, compound III is imazethapyr or imazethapyr ammonium and compound IV is selected from the group comprising 2,4-D and 2,4-D choline salt.

In another particularly preferred embodiment of the invention, compound III is imazethapyr or imazethapyr ammonium and a first compound IV is selected from the group comprising glyphosate, glyphosate dimethylammmonium, glyphosate isopropylammonium and glyphosate potassium and a second compound IV is selected from the group comprising 2,4-D and 2,4-D choline salt.

In another particularly preferred embodiment of the invention, compound III is imazethapyr or imazethapyr ammonium and compound IV is mesotrione.

In another particularly preferred embodiment of the invention, compound III is imazethapyr or imazethapyr ammonium and compound IV is topramezone.

In another particularly preferred embodiment of the invention, compound III is imazethapyr or imazethapyr ammonium and compound IV is tolpyralate.

Preferred mixtures of the present invention are listed in table 2, whereby the abbreviations are shown in table 1:

Table 1

| Compound | Abbreviation |
|---|---|
| imazamox | III-1 |
| imazamox ammonium | III-2 |
| imazapyr | III-3 |
| imazapyr isopropylammonium | III-4 |
| imazapyr ammonium | III-5 |
| imazapic | III-6 |
| imazapic ammonium | III-7 |
| imazaquin | III-8 |
| imazaquin ammonium | III-9 |

| Compound | Abbreviation |
|---|---|
| imazethapyr | III-10 |
| imazethapyr ammonium | III-11 |
| glyphosate | IV-1 |
| glyphosate dimethylammonium | IV-2 |
| glyphosate isopropylammonium | IV-3 |
| glyphosate potassium | IV-4 |
| glyphosate trimesium (sulfosate) | IV-5 |

| Compound | Abbreviation |
|---|---|
| glufosinate | IV-6 |
| glufosinate ammonium | IV-7 |
| glufosinate sodium | IV-8 |
| L-glufosinate | IV-9 |
| L-glufosinate ammonium | IV-10 |
| L-glufosinate sodium | IV-11 |
| dicamba | IV-12 |
| dicamba ethanolamine salt | IV-13 |
| dicamba diglycolamine salt | IV-14 |
| dicamba potassium | IV-15 |

| Compound | Abbreviation |
|---|---|
| dicamba BAPMA salt | IV-16 |
| 2,4-D | IV-17 |
| 2,4-D choline salt | IV-18 |
| bicyclopyrone | IV-19 |
| fenquinotrione | IV-20 |
| mesotrione | IV-21 |
| tembotrione | IV-22 |
| tolpyralate | IV-23 |
| topramezone | IV-24 |

Table 2

| No | I | II | III | IV | | No | I | II | III | IV |
|----|---|----|----|----|---|----|---|----|----|----|
| M-1 | I | II | III-1 | - | | M-29 | I | II | III-1 | IV-18 |
| M-2 | I | II | III-2 | - | | M-30 | I | II | III-1 | IV-19 |
| M-3 | I | II | III-3 | - | | M-31 | I | II | III-1 | IV-20 |
| M-4 | I | II | III-4 | - | | M-32 | I | II | III-1 | IV-21 |
| M-5 | I | II | III-5 | - | | M-33 | I | II | III-1 | IV-22 |
| M-6 | I | II | III-6 | - | | M-34 | I | II | III-1 | IV-23 |
| M-7 | I | II | III-7 | - | | M-35 | I | II | III-1 | IV-24 |
| M-8 | I | II | III-8 | - | | M-36 | I | II | III-2 | IV-1 |
| M-9 | I | II | III-9 | - | | M-37 | I | II | III-2 | IV-2 |
| M-10 | I | II | III-10 | - | | M-38 | I | II | III-2 | IV-3 |
| M-11 | I | II | III-11 | - | | M-39 | I | II | III-2 | IV-4 |
| M-12 | I | II | III-1 | IV-1 | | M-40 | I | II | III-2 | IV-5 |
| M-13 | I | II | III-1 | IV-2 | | M-41 | I | II | III-2 | IV-6 |
| M-14 | I | II | III-1 | IV-3 | | M-42 | I | II | III-2 | IV-7 |
| M-15 | I | II | III-1 | IV-4 | | M-43 | I | II | III-2 | IV-8 |
| M-16 | I | II | III-1 | IV-5 | | M-44 | I | II | III-2 | IV-9 |
| M-17 | I | II | III-1 | IV-6 | | M-45 | I | II | III-2 | IV-10 |
| M-18 | I | II | III-1 | IV-7 | | M-46 | I | II | III-2 | IV-11 |
| M-19 | I | II | III-1 | IV-8 | | M-47 | I | II | III-2 | IV-12 |
| M-20 | I | II | III-1 | IV-9 | | M-48 | I | II | III-2 | IV-13 |
| M-21 | I | II | III-1 | IV-10 | | M-49 | I | II | III-2 | IV-14 |
| M-22 | I | II | III-1 | IV-11 | | M-50 | I | II | III-2 | IV-15 |
| M-23 | I | II | III-1 | IV-12 | | M-51 | I | II | III-2 | IV-16 |
| M-24 | I | II | III-1 | IV-13 | | M-52 | I | II | III-2 | IV-17 |
| M-25 | I | II | III-1 | IV-14 | | M-53 | I | II | III-2 | IV-18 |
| M-26 | I | II | III-1 | IV-15 | | M-54 | I | II | III-2 | IV-19 |
| M-27 | I | II | III-1 | IV-16 | | M-55 | I | II | III-2 | IV-20 |
| M-28 | I | II | III-1 | IV-17 | | M-56 | I | II | III-2 | IV-21 |

| No | I | II | III | IV |
|---|---|---|---|---|
| M-57 | I | II | III-2 | IV-22 |
| M-58 | I | II | III-2 | IV-23 |
| M-59 | I | II | III-2 | IV-24 |
| M-60 | I | II | III-3 | IV-1 |
| M-61 | I | II | III-3 | IV-2 |
| M-62 | I | II | III-3 | IV-3 |
| M-63 | I | II | III-3 | IV-4 |
| M-64 | I | II | III-3 | IV-5 |
| M-65 | I | II | III-3 | IV-6 |
| M-66 | I | II | III-3 | IV-7 |
| M-67 | I | II | III-3 | IV-8 |
| M-68 | I | II | III-3 | IV-9 |
| M-69 | I | II | III-3 | IV-10 |
| M-70 | I | II | III-3 | IV-11 |
| M-71 | I | II | III-3 | IV-12 |
| M-72 | I | II | III-3 | IV-13 |
| M-73 | I | II | III-3 | IV-14 |
| M-74 | I | II | III-3 | IV-15 |
| M-75 | I | II | III-3 | IV-16 |
| M-76 | I | II | III-3 | IV-17 |
| M-77 | I | II | III-3 | IV-18 |
| M-78 | I | II | III-3 | IV-19 |
| M-79 | I | II | III-3 | IV-20 |
| M-80 | I | II | III-3 | IV-21 |
| M-81 | I | II | III-3 | IV-22 |
| M-82 | I | II | III-3 | IV-23 |
| M-83 | I | II | III-3 | IV-24 |
| M-84 | I | II | III-4 | IV-1 |
| M-85 | I | II | III-4 | IV-2 |
| M-86 | I | II | III-4 | IV-3 |
| M-87 | I | II | III-4 | IV-4 |
| M-88 | I | II | III-4 | IV-5 |
| M-89 | I | II | III-4 | IV-6 |
| M-90 | I | II | III-4 | IV-7 |
| M-91 | I | II | III-4 | IV-8 |
| M-92 | I | II | III-4 | IV-9 |
| M-93 | I | II | III-4 | IV-10 |
| M-94 | I | II | III-4 | IV-11 |
| M-95 | I | II | III-4 | IV-12 |
| M-96 | I | II | III-4 | IV-13 |
| M-97 | I | II | III-4 | IV-14 |

| No | I | II | III | IV |
|---|---|---|---|---|
| M-98 | I | II | III-4 | IV-15 |
| M-99 | I | II | III-4 | IV-16 |
| M-100 | I | II | III-4 | IV-17 |
| M-101 | I | II | III-4 | IV-18 |
| M-102 | I | II | III-4 | IV-19 |
| M-103 | I | II | III-4 | IV-20 |
| M-104 | I | II | III-4 | IV-21 |
| M-105 | I | II | III-4 | IV-22 |
| M-106 | I | II | III-4 | IV-23 |
| M-107 | I | II | III-4 | IV-24 |
| M-108 | I | II | III-5 | IV-1 |
| M-109 | I | II | III-5 | IV-2 |
| M-110 | I | II | III-5 | IV-3 |
| M-111 | I | II | III-5 | IV-4 |
| M-112 | I | II | III-5 | IV-5 |
| M-113 | I | II | III-5 | IV-6 |
| M-114 | I | II | III-5 | IV-7 |
| M-115 | I | II | III-5 | IV-8 |
| M-116 | I | II | III-5 | IV-9 |
| M-117 | I | II | III-5 | IV-10 |
| M-118 | I | II | III-5 | IV-11 |
| M-119 | I | II | III-5 | IV-12 |
| M-120 | I | II | III-5 | IV-13 |
| M-121 | I | II | III-5 | IV-14 |
| M-122 | I | II | III-5 | IV-15 |
| M-123 | I | II | III-5 | IV-16 |
| M-124 | I | II | III-5 | IV-17 |
| M-125 | I | II | III-5 | IV-18 |
| M-126 | I | II | III-5 | IV-19 |
| M-127 | I | II | III-5 | IV-20 |
| M-128 | I | II | III-5 | IV-21 |
| M-129 | I | II | III-5 | IV-22 |
| M-130 | I | II | III-5 | IV-23 |
| M-131 | I | II | III-5 | IV-24 |
| M-132 | I | II | III-6 | IV-1 |
| M-133 | I | II | III-6 | IV-2 |
| M-134 | I | II | III-6 | IV-3 |
| M-135 | I | II | III-6 | IV-4 |
| M-136 | I | II | III-6 | IV-5 |
| M-137 | I | II | III-6 | IV-6 |
| M-138 | I | II | III-6 | IV-7 |

| No | I | II | III | IV |
|---|---|---|---|---|
| M-139 | I | II | III-6 | IV-8 |
| M-140 | I | II | III-6 | IV-9 |
| M-141 | I | II | III-6 | IV-10 |
| M-142 | I | II | III-6 | IV-11 |
| M-143 | I | II | III-6 | IV-12 |
| M-144 | I | II | III-6 | IV-13 |
| M-145 | I | II | III-6 | IV-14 |
| M-146 | I | II | III-6 | IV-15 |
| M-147 | I | II | III-6 | IV-16 |
| M-148 | I | II | III-6 | IV-17 |
| M-149 | I | II | III-6 | IV-18 |
| M-150 | I | II | III-6 | IV-19 |
| M-151 | I | II | III-6 | IV-20 |
| M-152 | I | II | III-6 | IV-21 |
| M-153 | I | II | III-6 | IV-22 |
| M-154 | I | II | III-6 | IV-23 |
| M-155 | I | II | III-6 | IV-24 |
| M-156 | I | II | III-7 | IV-1 |
| M-157 | I | II | III-7 | IV-2 |
| M-158 | I | II | III-7 | IV-3 |
| M-159 | I | II | III-7 | IV-4 |
| M-160 | I | II | III-7 | IV-5 |
| M-161 | I | II | III-7 | IV-6 |
| M-162 | I | II | III-7 | IV-7 |
| M-163 | I | II | III-7 | IV-8 |
| M-164 | I | II | III-7 | IV-9 |
| M-165 | I | II | III-7 | IV-10 |
| M-166 | I | II | III-7 | IV-11 |
| M-167 | I | II | III-7 | IV-12 |
| M-168 | I | II | III-7 | IV-13 |
| M-169 | I | II | III-7 | IV-14 |
| M-170 | I | II | III-7 | IV-15 |
| M-171 | I | II | III-7 | IV-16 |
| M-172 | I | II | III-7 | IV-17 |
| M-173 | I | II | III-7 | IV-18 |
| M-174 | I | II | III-7 | IV-19 |
| M-175 | I | II | III-7 | IV-20 |
| M-176 | I | II | III-7 | IV-21 |
| M-177 | I | II | III-7 | IV-22 |
| M-178 | I | II | III-7 | IV-23 |
| M-179 | I | II | III-7 | IV-24 |

| No | I | II | III | IV |
|---|---|---|---|---|
| M-180 | I | II | III-8 | IV-1 |
| M-181 | I | II | III-8 | IV-2 |
| M-182 | I | II | III-8 | IV-3 |
| M-183 | I | II | III-8 | IV-4 |
| M-184 | I | II | III-8 | IV-5 |
| M-185 | I | II | III-8 | IV-6 |
| M-186 | I | II | III-8 | IV-7 |
| M-187 | I | II | III-8 | IV-8 |
| M-188 | I | II | III-8 | IV-9 |
| M-189 | I | II | III-8 | IV-10 |
| M-190 | I | II | III-8 | IV-11 |
| M-191 | I | II | III-8 | IV-12 |
| M-192 | I | II | III-8 | IV-13 |
| M-193 | I | II | III-8 | IV-14 |
| M-194 | I | II | III-8 | IV-15 |
| M-195 | I | II | III-8 | IV-16 |
| M-196 | I | II | III-8 | IV-17 |
| M-197 | I | II | III-8 | IV-18 |
| M-198 | I | II | III-8 | IV-19 |
| M-199 | I | II | III-8 | IV-20 |
| M-200 | I | II | III-8 | IV-21 |
| M-201 | I | II | III-8 | IV-22 |
| M-202 | I | II | III-8 | IV-23 |
| M-203 | I | II | III-8 | IV-24 |
| M-204 | I | II | III-9 | IV-1 |
| M-205 | I | II | III-9 | IV-2 |
| M-206 | I | II | III-9 | IV-3 |
| M-207 | I | II | III-9 | IV-4 |
| M-208 | I | II | III-9 | IV-5 |
| M-209 | I | II | III-9 | IV-6 |
| M-210 | I | II | III-9 | IV-7 |
| M-211 | I | II | III-9 | IV-8 |
| M-212 | I | II | III-9 | IV-9 |
| M-213 | I | II | III-9 | IV-10 |
| M-214 | I | II | III-9 | IV-11 |
| M-215 | I | II | III-9 | IV-12 |
| M-216 | I | II | III-9 | IV-13 |
| M-217 | I | II | III-9 | IV-14 |
| M-218 | I | II | III-9 | IV-15 |
| M-219 | I | II | III-9 | IV-16 |
| M-220 | I | II | III-9 | IV-17 |

| No | I | II | III | IV | No | I | II | III | IV |
|---|---|---|---|---|---|---|---|---|---|
| M-221 | I | II | III-9 | IV-18 | M-262 | I | II | III-11 | IV-11 |
| M-222 | I | II | III-9 | IV-19 | M-263 | I | II | III-11 | IV-12 |
| M-223 | I | II | III-9 | IV-20 | M-264 | I | II | III-11 | IV-13 |
| M-224 | I | II | III-9 | IV-21 | M-265 | I | II | III-11 | IV-14 |
| M-225 | I | II | III-9 | IV-22 | M-266 | I | II | III-11 | IV-15 |
| M-226 | I | II | III-9 | IV-23 | M-267 | I | II | III-11 | IV-16 |
| M-227 | I | II | III-9 | IV-24 | M-268 | I | II | III-11 | IV-17 |
| M-228 | I | II | III-10 | IV-1 | M-269 | I | II | III-11 | IV-18 |
| M-229 | I | II | III-10 | IV-2 | M-270 | I | II | III-11 | IV-19 |
| M-230 | I | II | III-10 | IV-3 | M-271 | I | II | III-11 | IV-20 |
| M-231 | I | II | III-10 | IV-4 | M-272 | I | II | III-11 | IV-21 |
| M-232 | I | II | III-10 | IV-5 | M-273 | I | II | III-11 | IV-22 |
| M-233 | I | II | III-10 | IV-6 | M-274 | I | II | III-11 | IV-23 |
| M-234 | I | II | III-10 | IV-7 | M-275 | I | II | III-11 | IV-24 |
| M-235 | I | II | III-10 | IV-8 | M-276 | I | II | III-10 | IV-1 + IV-12 |
| M-236 | I | II | III-10 | IV-9 | M-277 | I | II | III-10 | IV-1 + IV-13 |
| M-237 | I | II | III-10 | IV-10 | M-278 | I | II | III-10 | IV-1 + IV-14 |
| M-238 | I | II | III-10 | IV-11 | M-279 | I | II | III-10 | IV-1 + IV-15 |
| M-239 | I | II | III-10 | IV-12 | M-280 | I | II | III-10 | IV-1 + IV-16 |
| M-240 | I | II | III-10 | IV-13 | M-281 | I | II | III-10 | IV-1 + IV-17 |
| M-241 | I | II | III-10 | IV-14 | M-282 | I | II | III-10 | IV-1 + IV-18 |
| M-242 | I | II | III-10 | IV-15 | M-283 | I | II | III-10 | IV-2 + IV-12 |
| M-243 | I | II | III-10 | IV-16 | M-284 | I | II | III-10 | IV-2 + IV-13 |
| M-244 | I | II | III-10 | IV-17 | M-285 | I | II | III-10 | IV-2 + IV-14 |
| M-245 | I | II | III-10 | IV-18 | M-286 | I | II | III-10 | IV-2 + IV-15 |
| M-246 | I | II | III-10 | IV-19 | M-287 | I | II | III-10 | IV-2 + IV-16 |
| M-247 | I | II | III-10 | IV-20 | M-288 | I | II | III-10 | IV-2 + IV-17 |
| M-248 | I | II | III-10 | IV-21 | M-289 | I | II | III-10 | IV-2 + IV-18 |
| M-249 | I | II | III-10 | IV-22 | M-290 | I | II | III-10 | IV-3 + IV-12 |
| M-250 | I | II | III-10 | IV-23 | M-291 | I | II | III-10 | IV-3 + IV-13 |
| M-251 | I | II | III-10 | IV-24 | M-292 | I | II | III-10 | IV-3 + IV-14 |
| M-252 | I | II | III-11 | IV-1 | M-293 | I | II | III-10 | IV-3 + IV-15 |
| M-253 | I | II | III-11 | IV-2 | M-294 | I | II | III-10 | IV-3 + IV-16 |
| M-254 | I | II | III-11 | IV-3 | M-295 | I | II | III-10 | IV-3 + IV-17 |
| M-255 | I | II | III-11 | IV-4 | M-296 | I | II | III-10 | IV-3 + IV-18 |
| M-256 | I | II | III-11 | IV-5 | M-297 | I | II | III-10 | IV-4 + IV-12 |
| M-257 | I | II | III-11 | IV-6 | M-298 | I | II | III-10 | IV-4 + IV-13 |
| M-258 | I | II | III-11 | IV-7 | M-299 | I | II | III-10 | IV-4 + IV-14 |
| M-259 | I | II | III-11 | IV-8 | M-300 | I | II | III-10 | IV-4 + IV-15 |
| M-260 | I | II | III-11 | IV-9 | M-301 | I | II | III-10 | IV-4 + IV-16 |
| M-261 | I | II | III-11 | IV-10 | M-302 | I | II | III-10 | IV-4 + IV-17 |

| No | I | II | III | IV |
|---|---|---|---|---|
| M-303 | I | II | III-10 | IV-4 + IV-18 |
| M-304 | I | II | III-10 | IV-5 + IV-12 |
| M-305 | I | II | III-10 | IV-5 + IV-13 |
| M-306 | I | II | III-10 | IV-5 + IV-14 |
| M-307 | I | II | III-10 | IV-5 + IV-15 |
| M-308 | I | II | III-10 | IV-5 + IV-16 |
| M-309 | I | II | III-10 | IV-5 + IV-17 |
| M-310 | I | II | III-10 | IV-5 + IV-18 |
| M-311 | I | II | III-11 | IV-1 + IV-12 |
| M-312 | I | II | III-11 | IV-1 + IV-13 |
| M-313 | I | II | III-11 | IV-1 + IV-14 |
| M-314 | I | II | III-11 | IV-1 + IV-15 |
| M-315 | I | II | III-11 | IV-1 + IV-16 |
| M-316 | I | II | III-11 | IV-1 + IV-17 |
| M-317 | I | II | III-11 | IV-1 + IV-18 |
| M-318 | I | II | III-11 | IV-2 + IV-12 |
| M-319 | I | II | III-11 | IV-2 + IV-13 |
| M-320 | I | II | III-11 | IV-2 + IV-14 |
| M-321 | I | II | III-11 | IV-2 + IV-15 |
| M-322 | I | II | III-11 | IV-2 + IV-16 |
| M-323 | I | II | III-11 | IV-2 + IV-17 |
| M-324 | I | II | III-11 | IV-2 + IV-18 |

| No | I | II | III | IV |
|---|---|---|---|---|
| M-325 | I | II | III-11 | IV-3 + IV-12 |
| M-326 | I | II | III-11 | IV-3 + IV-13 |
| M-327 | I | II | III-11 | IV-3 + IV-14 |
| M-328 | I | II | III-11 | IV-3 + IV-15 |
| M-329 | I | II | III-11 | IV-3 + IV-16 |
| M-330 | I | II | III-11 | IV-3 + IV-17 |
| M-331 | I | II | III-11 | IV-3 + IV-18 |
| M-332 | I | II | III-11 | IV-4 + IV-12 |
| M-333 | I | II | III-11 | IV-4 + IV-13 |
| M-334 | I | II | III-11 | IV-4 + IV-14 |
| M-335 | I | II | III-11 | IV-4 + IV-15 |
| M-336 | I | II | III-11 | IV-4 + IV-16 |
| M-337 | I | II | III-11 | IV-4 + IV-17 |
| M-338 | I | II | III-11 | IV-4 + IV-18 |
| M-339 | I | II | III-11 | IV-5 + IV-12 |
| M-340 | I | II | III-11 | IV-5 + IV-13 |
| M-341 | I | II | III-11 | IV-5 + IV-14 |
| M-342 | I | II | III-11 | IV-5 + IV-15 |
| M-343 | I | II | III-11 | IV-5 + IV-16 |
| M-344 | I | II | III-11 | IV-5 + IV-17 |
| M-345 | I | II | III-11 | IV-5 + IV-18 |

Thus, more preferred are mixtures are M-1, M-2, M-3, M-4, M-5, M-6, M-7, M-8, M-9, M-10, M-11, M-12, M-13, M-14, M-15, M-16, M-17, M-18, M-19, M-20, M-21, M-22, M-23, M-24, M-25, M-26, M-27, M-28, M-29, M-30, M-31, M-32, M-33, M-34, M-35, M-36, M-37, M-38, M-39, M-40, M-41, M-42, M-43, M-44, M-45, M-46, M-47, M-48, M-49, M-50, M-51, M-52, M-53, M-54, M-55, M-56, M-57, M-58, M-59, M-228, M-229, M-230, M-231, M-232, M-233, M-234, M-235, M-236, M-237, M-238, M-239, M-240, M-241, M-242, M-243, M-244, M-245, M-246, M-247, M-248, M-249, M-250, M-251, M-252, M-253, M-254, M-255, M-256, M-257, M-258, M-259, M-260, M-261, M-262, M-263, M-264, M-265, M-266, M-267, M-268, M-269, M-270, M-271, M-272, M-273, M-274, M-275, M-276, M-277, M-278, M-279, M-280, M-281, M-282, M-283, M-284, M-285, M-286, M-287, M-288, M-289, M-290, M-291, M-292, M-293, M-294, M-295, M-296, M-297, M-298, M-299, M-300, M-301, M-302, M-303, M-304, M-305, M-306, M-307, M-308, M-309, M-310, M-311, M-312, M-313, M-314, M-315, M-316, M-317, M-318, M-319, M-320, M-321, M-322, M-323, M-324, M-325, M-326, M-327, M-328, M-329, M-330, M-331, M-332, M-333, M-334, M-335, M-336, M-337, M-338, M-339, M-340, M-341, M-342, M-343, M-344 and M-345.

Most preferred are mixtures M-10, M-11, M-228, M-229, M-230, M-231, M-232, M-233, M-234, M-235, M-236, M-237, M-238, M-239, M-240, M-241, M-242, M-243, M-244, M-245, M-248, M-250, M-251, M-252, M-253, M-254, M-255, M-256, M-257, M-258, M-259, M-260, M-261, M-262, M-263, M-264, M-265, M-266, M-267, M-268, M-269, M-272, M-274, M-275, M-276, M-277, M-278, M-279, M-280, M-281, M-282, M-283, M-284, M-285, M-286, M-287, M-288, M-289, M-290, M-291, M-292, M-293, M-294, M-295, M-296, M-297, M-298, M-299, M-300, M-301, M-302, M-303, M-304, M-305, M-306, M-307, M-308, M-309, M-310, M-311, M-312, M-313, M-314, M-315, M-316, M-317, M-318, M-319, M-320, M-321, M-322, M-323, M-324, M-325, M-326, M-327, M-328, M-329, M-330, M-331, M-332, M-333, M-334, M-335, M-336, M-337, M-338, M-339, M-340, M-341, M-342, M-343, M-344 and M-345.

All above-referred mixtures are herein below referred to as "inventive mixtures".

The inventive mixtures can further contain one or more insecticides, fungicides, herbicides.

The inventive mixtures can be converted into customary types of agrochemical mixtures, e. g. solutions, emulsions, suspensions, dusts, powders, pastes, granules, pressings, capsules, and mixtures thereof. Examples for mixture types are suspensions (e.g. SC, OD, FS), emulsifiable concentrates (e.g. EC), emulsions (e.g. EW, EO, ES, ME), capsules (e.g. CS, ZC), pastes, pastilles, wetable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further mixtures types are defined in the "Catalogue of pesticide formulation types and international coding system", Technical Monograph No. 2, 6th Ed. May 2008, CropLife International.

The mixtures are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders. Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.). Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsitiued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the inventive mixtures on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

Examples for mixture types and their preparation are:

i) Water-soluble concentrates (SL, LS)

10-60 wt% of an inventive mixture and 5-15 wt% wetting agent (e.g. alcohol alkoxylates) are dissolved in water and/or in a water-soluble solvent (e.g. alcohols) ad 100 wt%. The active substance dissolves upon dilution with water.

ii) Dispersible concentrates (DC)

5-25 wt% of an inventive mixture and 1-10 wt% dispersant (e. g. polyvinylpyrrolidone) are dissolved in organic solvent (e.g. cyclohexanone) ad 100 wt%. Dilution with water gives a dispersion.

iii) Emulsifiable concentrates (EC)

15-70 wt% of an inventive mixture and 5-10 wt% emulsifiers (e.g. calcium dodecylbenzenesulfonate and castor oil ethoxylate) are dissolved in water-insoluble organic solvent (e.g. aromatic hydrocarbon) ad 100 wt%. Dilution with water gives an emulsion.

iv) Emulsions (EW, EO, ES)

5-40 wt% of an inventive mixture and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.

v) Suspensions (SC, OD, FS)

In an agitated ball mill, 20-60 wt% of an inventive mixture are comminuted with addition of 2-10 wt% dispersants and wetting agents (e.g. sodium lignosulfonate and alcohol ethoxylate), 0.1-2 wt% thickener (e.g. xanthan gum) and water ad 100 wt% to give a fine active substance suspension. Dilution with water gives a stable suspension of the active substance. For FS type mixture up to 40 wt% binder (e.g. polyvinylalcohol) is added.

vi) Water-dispersible granules and water-soluble granules (WG, SG)

50-80 wt% of an inventive mixture are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)

50-80 wt% of an inventive mixture are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.

viii) Gel (GW, GF)

In an agitated ball mill, 5-25 wt% of an inventive mixture are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.

ix) Microemulsion (ME)

5-20 wt% of an inventive mixture are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100 %. This mixture is stirred for 1 h to produce spontaneously a thermodynamicallystable microemulsion.

x) Microcapsules (CS)

An oil phase comprising 5-50 wt% of an inventive mixture, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of an inventive mixture according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS mixture.

xi) Dustable powders (DP, DS)

1-10 wt% of an inventive mixture are ground finely and mixed intimately with solid carrier (e.g. finely divided kaolin) ad 100 wt%.

x) Granules (GR, FG)

0.5-30 wt% of an inventive mixture is ground finely and associated with solid carrier (e.g. silicate) ad 100 wt%. Granulation is achieved by extrusion, spray-drying or fluidized bed.

xii) Ultra-low volume liquids (UL)

1-50 wt% of an inventive mixture are dissolved in organic solvent (e.g. aromatic hydrocarbon) ad 100 wt%.

The mixtures types i) to xii) may optionally comprise further auxiliaries, such as 0.1-1 wt% bactericides, 5-15 wt% anti-freezing agents, 0.1-1 wt% anti-foaming agents, and 0.1-1 wt% colorants.

The resulting agrochemical mixtures generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

Solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds.

The mixtures in question give, after two-to-tenfold dilution, active substance concentrations of from 0.01 to 60% by weight, preferably from 0.1 to 40%, in the ready-to-use preparations. Application can be carried out before or during sowing. Methods for applying the inventive mixtures and mixtures thereof, respectively, on to plant propagation material, especially seeds include dressing, coating, pelleting, dusting, soaking and in-furrow application methods of the propagation material. Preferably, the inventive mixtures or the mixtures thereof, respectively, are applied on to the plant propagation material by a method such that germination is not induced, e. g. by seed dressing, pelleting, coating and dusting.

Various types of oils, wetters, adjuvants, fertilizer, or micronutrients, and further pesticides (e.g. herbicides, insecticides, fungicides, growth regulators, safeners) may be added to the active substances or the inventive mixtures comprising them as premix or, if appropriate not until immediately prior to use (tank mix). These agents can be admixed with the inventive mixtures in a weight ratio of 1:100 to 100:1, preferably 1:10 to 10:1.

The user applies the mixture according to the invention usually from a predosage device, a knapsack sprayer, a spray tank, a spray plane, or an irrigation system. Usually, the agrochemical mixture is made up with water, buffer, and/or further auxiliaries to the desired application concentration and the ready-to-use spray liquor or the agrochemical mixture according to the invention is thus obtained. Usually, 20 to 2000 liters, preferably 50 to 400 liters, of the ready-to-use spray liquor are applied per hectare of agricultural useful area.

The inventive mixtures provide excellent pre- and post-emergence control of weeds in HPPD tolerant soybeans and cotton. Thus, in the methods and uses of the invention, the compounds present in the inventive mixtures can be applied for pre-emergence (before the emergence of undesirable vegetation) or post-emergence (i.e., during and/or after emergence of the undesirable vegetation).

Thus, the invention relates to a method of an inventive mixture for controlling undesirable vegetation in HPPD tolerant soybeans and cotton, which comprises applying the compounds present in the inventive mixtures to a locus of planted crops where undesirable vegetation occurs or might occur. The application is done before the emergence of undesirable vegetation or during and/or after emergence of the undesirable vegetation.

The application can be done after seeding of the soybeans or during and/or after emergence of the soybeans.

The term "locus", as used herein, means the area in which the vegetation or plants are growing or will grow, typically a field.

As used herein, the terms "controlling" and "combating" are synonyms.

As used herein, the terms "undesirable vegetation", "undesirable species", "undesirable plants", "harmful plants", "undesirable weeds", or "harmfull weeds" are synonyms.

When using the inventive mixtures in the methods of the present invention, the active compounds present in the inventive mixtures can be applied simultaneously or in succession, where undesirable vegetation may occur. Herein, it is immaterial whether compounds present in the inventive mixtures are formulated jointly or separately and applied jointly or separately, and, in the case of separate application, in which order the application takes place. It is only necessary, that the compounds present in the inventive mixtures are applied in a time frame, which allows simultaneous action of the active ingredients on the undesirable plants.

In the above-mentioned methods of controlling weeds by application of the inventive mixtures, the inventive mixtures have an outstanding herbicidal activity against a broad spectrum of economically important monocotyledonous and dicotyledonous harmful plants. The inventive mixtures also act efficiently on perennial weeds which produce shoots from rhizomes, rootstocks or other perennial organs and which are difficult to control. In this context, it does not matter whether the compounds of the inventive mixtures are applied before sowing, pre-emergence or post-emergence. Pre-emergence application is preferred.

The inventive mixtures are suitable for controlling a large number of harmful plants in agricultural crops, including monocotyledonous weeds, in particular annual weeds such as gramineous weeds (grasses) including Echinochloa species such as barnyardgrass (Echinochloa crusgalli var. crus-galli), Echinchloa walteri (Pursh) Heller, jungle rice (Echinochloa colona), Echinochloa crus-pavonis, Echinochloa oryzicola, Digitaria species such as crabgrass (Digitaria sanguinalis), Digitaria horizontalis, sourgrass (Digitaria insularis) or naked crabgrass (Digitaria nuda), Setaria species such as green foxtail (Setaria viridis), giant foxtail (Setaria faberii), yellow foxtail (Setaria glauca or Setaria pumila) or Setaria verticillata, Sorghum species such as johnsongrass (Sorghum halepense Pers.), Avena species such as wild oats (Avena fatua), Avena sterillis or Avena strigosa, Cenchrus species such as Cenchrus species such as field sandbur (Cenchrus pauciflorus) or Cenchrus echinatus, Bromus species such as Bromus japonicus Thunb, Bromus sterilis or Bromus tectorum, Lolium species, Phalaris species such as Phalaris brachystachys, Phalaris minor or Phalaris persicaria, Eriochloa species, Panicum species such as fall panicum (Panicum dichotomiflorum), Panicum fasciculatum or Panicum maximum, Brachiaria species, annual bluegrass (Poa annua), Alopecurus species such as blackgrass (Alopecurus myosuroides), Alopecurus aequalis Sobol or Alopecurus japonicus Steud, Aegilops species such as Aegilops cylindrica or Aegylops tauschii, Apera spica-venti, Eleusine indica, Cynodon dactylon, couch grass (Agropyron repens or Elymus repens), Agrostis alba, Beckmannia syzigachne (Steud.) Fernald, Chloris species such as Chloris virgata, Commelina species such as Commelina benghalensis, Commelina communis, Commelina diffusa or Commelina erecta, Dactyloctenium aegyptium, Hordeum jubatum, Hordeum leporinum, Imperata cylindrica, Ischaemum rogusum, Ixophorus unisetus, Leerisa hexandra, Leersia japonica, Leptochloa species such as Leptochloa chinensis, Leptochloa fascicularis, Leptochloa filiformis or Leptochloa panicoides, Lolium species such as Lolium multiflorum, Lolium perenne, Lolium persicum or rigid ryegrass (Lolium rigidum), Luziola subintegra, Murdannia nudiflora (L.) Brenan, Oryza latifolia, Oryza rufipogon, Paspalum distichum, Paspalum species, Pennisetum americanum, Pennisetum purpureum, Phleum paniculatum, Phragmites australia, Ploypogon fugax. N., Poa species such as Poa annua or Poa trivialis L., Puccinellia distans, Rottboellia cochinchinensis, Sclerochloa kengiana (Ohwi) Tzvel., Trichloris crinita, Urochloa or Brachiaria species such as Brachiaria decumbens, Brachiaria plantaginea, Brachiaria platyphylla, Urochloa panicoides, Urochloa ramosa and the like.

The inventive mixtures are also suitable for controlling a large number of dicotyledonous weeds, in particular broad leaf weeds including Polygonum species such as wild buckwheat (Polygonum convolvolus), Polygonum pensilvanicum, Polygonum persicaria or prostrate knotweed (Polygonum aviculare), Amaranthus species such as pigweed (Amaranthus retroflexus), Palmer amaranth (Amaranthus palmeri), tall waterhemp (Amaranthus tuberculatus or Amaranthus rudis), redroot pigweed (Amaranthus retroflexus), green amaranth (Amaranthus hybridus), purple amaranth (Amaranthus lividus), prickly amaranth (Amaranthus spinosus) or Amaranthus quitensis, Chenopodium species such as common lambsquarters (Chenopodium album L.), Chenopodium serotinum or Quinoa (Chenopodium quinoa), Sida species such as prickly sida (Sida spinosa L.), Ambrosia species such as common ragweed (Ambrosia artemisiifolia) or giant ragweed (Ambrosia trifida), Acanthospermum species, Anthemis species such as Anthemis arvensis or Anthemis cotula, Atriplex species, Cirsium species such as Cirsium arvense, Convolvulus species such as field bindweed (Convolvulus arvensis), Conyza species such as horseweed (Conyza canadensis, Erigeron canadensis) or hairy fleabane (Conyza bonariensis, Erigeron bonariensis), Cassia species, Datura species such as jimsonweed (Datura stramonium), Euphorbia species such as toothed spurge (Euphorbia dentata), Euphorbia hirta, Euphorbia helioscopia or fireplant (Euphorbia heterophylla), Geranium species such as Geranium donianum or Geranium pusillum, Galinsoga species, morningglory (Ipomoea species), Lamium species such as henbit dead-nettle (Lamium amplexicaule), Malva species such as dwarf mallow (Malva neglecta) or cheeseweed (Malwa parviflora), Matricaria species such as chamomile (Matricaria chamomilla) or Matricaria inodora, Sysimbrium species, Solanum species such as black nightshade (Solanum nigrum), Xanthium species, Veronica species such as Veronica polita, Viola species, common chickweed (Stellaria media), velvetleaf (Abutilon theophrasti), Sesbania species such as Sesbania exaltata, Sesbania herbacea or hemp sesbania (Sesbania exaltata Cory), Anoda cristata, Bidens species such as Bidens frondosa or Bidens pilosa, Brassica kaber, Capsella species such as Capsella media or Capsella bursa-pastoris, Centaurea cyanus, Galeopsis tetrahit, Galium aparine, Helianthus annuus, Desmodium tortuosum, Kochia scoparia, Mercurialis annua, Myosotis arvensis, Papaver rhoeas, Raphanus species such as wild radish (Raphanus raphanistrum), Salsola species such as Salsola tragus or Salsola kali, Sinapis arvensis, Sonchus species sucha Sonchus asper, Sonchus arvensis or Sonchus oleraceus, Thlaspi arvense, Tagetes minuta, Richardia species such as Richardia scabra or Richardia brasiliensis, Aeschynomeme species such as Aeschynomene denticulata, Aeschynomene indica orAeschynomene rudis, Alisma species such as Alisma canaliculatum orAlisma plantago-aquatica, Borreria species such as Borreria verticillata, Brassica rapa, Carduus acanthoides, Parietaria debilis, Portulaca oleracea, Ipomoea species such as Ipomoea grandifolia, Ipomoea hederacea, Ipomoea indivisa, Ipomoea lacunose, Ipomoea lonchophylla or Ipomoea wrightii,, Senna obtusifolia, Sida species such as arrowleaf sida (Sida rhombifolia) or prickly sida (Sida spinosa), Spermacoce latifolia, Tridax procumbens, Trianthema portulacastrum, Parthenium hysterophorus, Portulaca oleracea, Acalypha australis, Ammi majus, Atriplex species, Orobanche species, Mercurialis annua, Cirsium arvense, Calystegia sepium, Stellaria media, Lamium species, Viola species, Celosia argentea, Melampodium divaricatum, Cleome viscosa, Molugo verticilatus, Borhevia erecta, Gomphrena species, Nicandra physalodes, Ricinus communis, Geranium dissectum, Alternanthera species such as Altnernanthera philoxeroides or Alternanthera tenella, Ammannia species such as Ammania coccinea, Anacamtodon fortunei Mitt., Anagallis arvensis, Aneilema keisak, Arenaria serpyllifolia, Argemone mexicana, Asphodelus tenuifolius, Atriplex patula, Bacopa rotundifolia, Brassica napus, Caperonia species sucha as Caperonia castaneifolia or Caperonia palustris, Cephalanoplos segetum, Corynopus didymus, Crepis capillaris, Crepis tectorum, Croton lobatus, Descuminia sophia (L.), Descurainia pinnata, Echinodorus grandiflorus, Eclipta alba, Eclipta prostrata, Eichhornia crassipes, Eleocharis species, Equisetum arvense, Fallopia convolvulus, Fallopia convolvulus, Heteranthera limosa, Jussiaea species, Kallstroemia maxima, Lactuca serriola, Lathyrus aphaca, Launea mudicaulis, Leucas chinensis, Limnocharis flava, Lindernia dubia, Lindernia pyxidaria, Litospermum arvense, Ludwigia species such as Ludwigia octovallis, Macroptilium lathyroides, Malachium aquaticum (L.), Melilotus species, Merremia aegyptia, Momordica charantia, Monochoria hastate, Monochoria vaginalis, Mucuna species, Murdannia nudiflora, Oxalis neaei, Phylanthus species, Physalis species, Pistia stratiotes, Potamogeton distinctus, Rorippa islandica, Rotala indica, Rotala ramosior, Rumex dentatus, Rumex obtusifolius, Sagittaria montevidensis, Sagittaria pygmaea Miq., Sagittaria sagittifolia, Sagittaria trifolia L., Senecio vulgaris, Sicyos polyacanthus, Silene gallica, chenopoSisymbrium species such as Sisymbrium oficinale, Solanum species, Spergula arvensis, Sphenoclea zeylanica, Trianthema spp., Tripleurospermum inodorum, Veronica species such as Veronica persica orVeronica polita Vicia sativa and the like.

The inventive mixtures are also suitable for controlling a large number of annual and perennial sedge weeds including Cyperus species such as purple nutsedge (Cyperus rotundus L.), yellow nutsedge (Cyperus esculentus L.), hime-kugu (Cyperus brevifolius H.), sedge weed (Cyperus microiria Steud), rice flatsedge (Cyperus iria L.), Cyperus difformis, Cyperus difformis L., Cyperus esculentus, Cyperus ferax, Cyperus flavus, Cyperus iria, Cyperus lanceolatus, Cyperus odoratus, Cyperus rotundus, Cyperus serotinus Rottb., Eleocharis acicularis, Eleocharis kuroguwai, Fimbristylis dichotoma, Fimbristylis miliacea, Scirpus grossus, Scirpus juncoides, Scirpus juncoides Roxb, Scirpus or Bolboschoenus maritimus, Scirpus or Schoenoplectus mucronatus, Scirpus planiculmis Fr. Schmidt and the like.

The inventive mixtures are also suitable for controlling weeds that are resistant to commonly used herbicides such as, for example, weeds that are resistant to glyphosate, weeds that are resistant to auxin inhibitor herbicides such as e. g. 2,4-D or dicamba, weeds that are resistant to photosynthesis inhibitors such as e. g. atrazine, weeds that are resistant to ALS inhibitors such as e. g. sulfonylureas, imidazolinones or triazolopyrimidines, weeds that are resistant to ACCase inhibitors such as e. g. clodinafop, clethodim or pinoxaden or weeds that are resistant to protoporphyrinogen-IX-oxidase inhibitors such as e. g. sulfentrazone, flumioxazine, fomesafen or acifluorfen, for example the weeds that are listed in the International Survey of Resistant Weeds (http://www.weedscience.org/Summary/SpeciesbySOATable.aspx). In particular, they are suitable for controlling the resistant weeds that are listed in the International Survey of Resistant Weeds, for example ACCase resistant Echinochloa crus-galli, Avena fatua, Alopecurus myosuroides, Echinochloa colona, Alopecurus japonicus, Bromus tectorum, Hordeum murinum, Ischaemum rugosum, Setaria viridis, Sorghum halepense, Alopecurus aequalis, Apera spica-venti, Avena sterilis, Beckmannia szygachne, Bromus diandrus, Digitaria sanguinalis, Echinocloa oryzoides, Echinochloa phyllopogon, Phalaris minor, Phalaris paradoxa, Setaria faberi, Setaria viridis, Brachypodium distachyon, Bromus diandrus, Bromus sterilis, Cynosurus echinatus, Digitaria insularis, Digitaria ischaemum, Leptochloa chinensis, Phalaris brachystachis, Rotboellia cochinchinensis, Digitaria ciliaris, Ehrharta longiflora, Eriochloa punctata, Leptochloa panicoides, Lolium persicum, Polypogon fugax, Sclerochloa kengiana, Snowdenia polystacha, Sorghum sudanese and Brachiaria plantaginea, ALS inhibitor resistant Echinochloa crus-galli, Poa annua, Avena fatua, Alopecurus myosuroides, Echinochloa colona, Amaranthus hybridus, Amaranthus palmeri, Amaranthus rudis, Conyza sumatrensis, Amaranthus retroflexus, Ambrosia artemisifolia, Conyza canadensis, Kochia scoparia, Raphanus raphanistrum, Senecio vernalis, Alopecurus japonicus, Bidens pilosa, Bromus tectorum, Chenopodium album, Conyza bonariensis, Hordeum murinum, Ischaemum rugosum, Senecio vulgaris, Setaria viridis, Sisymbrium orientale, Sorghum halepense, Alopecurus aequalis, Amaranthus blitum, Amaranthus powellii, Apera spica-venti, Avena sterilis, Brassica rapa, Bromus diandrus, Descurainia sophia, Digitaria sanguinalis, Echinochloa oryzoides, Echinochloa phyllopogon, Euphorbia heterophylla, Lactuca serriola, Phalaris minor, Phalaris paradoxa, Setaria faberi, Setaria viridis, Sinapis arvensis, Solanum ptycanthum, Sonchus oleraceus, Stellaria media, Amaranthus blitoides, Amaranthus spinosus, Amaranthus viridis, Ambrosia trifida, Bidens subalternans, Bromus diandrus, Bromus sterilis, Capsella bursa-pastoris, Centaurea cyanus, Cynosurus echinatus, Cyperus difformis, Fimbristilis miliacea, Galeopsis tetrahit, Galium aparine, Galium spurium, Helianthus annuus, Hirschfeldia incana, Limnocharis flava, Limnophila erecta, Papaver rhoeas, Parthenium hysterophorus, Phalaris brachystachis, Polygonum convolvulus, Polygonum lapathifolium, Polygonum persicaria, Ranunculus acris, Rottboellia cochinchinensis, Sagittaria montevidensis, Salsola tragus, Schoenoplectus mucronatus, Setaria pumila, Sonchus asper, Xanthium strumarium, Ageratum conyzoides, Alisma canaliculatum, Alisma plantago-aquatica, Ammannia auriculata, Ammannia coccinea, Ammannia arvensis, Anthemis cotula, Bacopa rotundifolia, Bifora radians, Blyxa aubertii, Brassica tournefortii, Bromus japonicus, Bromus secalinus, Lithospermum arvense, Camelina microcarpa, Chamaesyce maculata, Chrysanthemum coronarium, Clidemia hirta, Crepis tectorum, Cuscuta pentagona, Cyperus brevifolis, Cyperus compressus, Cyperus esculentus, Cyperus iria, Cyperus odoratus, Damasonium minus, Diplotaxis erucoides, Diplotaxis tenuifolia, Dopatrum junceum, Echium plantagineum, Elatine triandra, Eleocharis acicularis, Erucaria hispanica, Erysimum repandum, Galium tricornutum, Iva xanthifolia, Ixophorus unisetus, Lamium amplexicaule, Limnophilia sessiliflora, Lindernia dubia, Lindernia micrantha, Lindernia procumbens, Ludwigia prostrata, Matricaria recutita, Mesembryanthemum crystallinum, Monochoria korsakowii, Monochoria vaginalis, Myosoton aquaticum, Neslia paniculata, Oryza sativa var. sylvatica, Pentzia suffruticosa, Picris hieracioides, Raphanus sativus, Rapistrum rugosum, Rorippa indica, Rotala indica, Rotala pusilla, Rumex dentatus, Sagittaria guayensis, Sagittaria pygmaea, Sagittaria trifolia, Schoenoplectus fluviatilis, Schoenoplectus juncoides, Schoenoplectus wallichii, Sida spinosa, Silene gallica, Sinapis alba, Sisymbrium thellungii, Sorghum bicolor, Spergula arvensis, Thlaspi arvense, Tripleurospermum perforatum, Vaccaria hispanica and Vicia sativa, photosynthesis inhibitor resistant Echinochloa crus-galli, Poa annua, Alopecurus myosuroides, Echinochloa colona, Amaranthus hybridus, Amaranthus palmeri, Amaranthus rudis, Conyza sumatrensis, Amaranthus retroflexus, Ambrosia artemisifolia, Conyza canadensis, Kochia scoparia, Raphanus raphanistrum, Senecio vernalis, Alopecurus japonicus, Bidens pilosa, Bromus tectorum, Chenopodium album, Conyza bonariensis, Ischaemum rugosum, Senecio vulgaris, Setaria viridis, Sisymbrium orientale, Amaranthus blitum, Amaranthus powellii, Apera spica-venti, Beckmannia syzigachne, Brassica rapa, Digitaria sanguinalis, Euphorbia heterophylla, Phalaris minor, Phalaris paradoxa, Setaria faberi, Setaria viridis, Sinapis arvensis, Solanum ptycanthum, Stellaria media, Amaranthus blitoides, Amaranthus viridis, Bidens subalternans, Brachypodium distachyon, Capsella bursa-pastoris, Chloris barbata, Cyperus difformis, Echinochloa erecta, Epilobium ciliatum, Polygonum aviculare, Polygonum convolvulus, Polygonum lapathifolium, Polygonum persicaria, Portulaca oleracea, Schoenoplectus mucronatus, Setaria pumila, Solanum nigrum, Sonchus asper, Urochloa panicoides, Vulpia bromoides, Abutilon theophrasti, Amaranthus albus, Amaranthus cruentus, Arabidopsis thaliana, Arenaria serpyllifolia, Bidens tripartita, Chenopodium album, Chenopodium ficifolium, Chenopodium polyspermum, Crypsis schoenoides, Datura stramonium, Epilobium tetragonum, Galinsoga ciliata, Matricaria discoidea, Panicum capillare, Panicum dichotomiflorum, Plantago lagopus, Polygonum hydopiper, Polygonum pensylvanicum, Polygonum monspeliensis, Rostraria, smyrnacea, Rumex acetosella, Setaria verticillata and Urtica urens, PS-I-electron diversion inhibitor resistant Poa annua, Conyza sumatrensis, Conyza canadensis, Alopecurus japonicus, Bidens pilosa, Conyza bonariensis, Hordeum murinum, Ischaemum rugosum, Amaranthus blitum, Solanum ptycanthum, Arctotheca calendula, Epilobium ciliatum, Hedyotis verticillata, Solanum nigrum, Vulpia bromoides, Convolvulus arvensis, Crassocephalum crepidioides, Cuphea carthagensis, Erigeron philadelphicus, Gamochaeta pensylvanica, Landoltia punctata, Lepidium virginicum, Mazus fauriei, Mazus pumilus, Mitracarpus hirtus, Sclerochloa dura, Solanum americanum and Youngia japonica, glyphosate resistant Poa annua, Echinochloa colona, Amaranthus hybridus, Amaranthus palmeri, Amaranthus rudis, Conyza sumatrensis, Ambrosia artemisifolia, Conyza canadensis, Kochia scoparia, Raphanus raphanistrum, Bidens pilosa, Conyza bonariensis, Hordeum murinum, Sorghum halepense, Brassica rapa, Bromus diandrus, Lactuca serriola, Sonchus oleraceus, Amaranthus spinosus, Ambrosia trifida, Digitaria insularis, Hedyotis verticillata, Helianthus annuus, Parthenium hysterophorus, Plantago lanceolata, Salsola tragus, Urochloa panicoides, Brachiaria eruciformis, Bromus rubens, Chloris elata, Chloris truncata, Chloris virgata, Cynodon hirsutus, Lactuca saligna, Leptochloa virgata, Paspalum paniculatum and Tridax procumbens, microtubule assembly inhibitor resistant Echinochloa crusgalli, Poa annua, Avena fatua, Alopecurus myosuroides, Amaranthus palmeri, Setaria viridis, Sorghum halepense, Alopecurus aequalis, Beckmannia syzigachne and Fumaria densifloria, auxin herbicide resistant Echinochloa crus-galli, Echinochloa colona, Amaranthus hybridus, Amaranthus rudis, Conyza sumatrensis, Kochia scoparia, Raphanus raphanistrum, Chenopodim album, Sisymbrium orientale, Descurainia sophia, Lactuca serriola, Sinapis arvensis, Sonchus oleraceus, Stellaria media, Arctotheca calendula, Centaurea cyanus, Digitaria ischaemum, Fimbristylis miliacea, Galeopsis tetrahit, Galium aparine, Galium spurium, Hirschfeldia incana, Limnocharis flava, Limnocharis erecta, Papaver rhoeas, Plantago lanceolata, Ranunculus acris, Carduus nutans, Carduus pycnocephalus, Centaurea soltitialis, Centaurea stoebe ssp.

Micranthos, Cirsium arvense, Commelina diffusa, Echinochloa crus-pavonis, Soliva sessilis and Sphenoclea zeylanica, HPPD inhibitor resistant Amaranthus palmeri and Amaranthus rudis, PPO inhibitor resistant Acalypha australis, Amaranthus hybridus, Amaranthus palmeri, Amaranthus retroflexus, Amaranthus rudis, Ambrosia artemisifolia, Avena fatua, Conyza sumatrensis, Descurainia sophia, Euphorbia heterophylla and Senecio vernalis, carotenoid biosynthesis inhibitor resistant Hydrilla verticillata, Raphanus raphanistrum, Senecio vernalis and Sisymbrium orientale, VLCFA inhibitor resistant Alopecurus myosuroides, Avena fatua and Echinochloa crus-galli.

If the compounds of the inventive mixtures are applied to the soil surface before germination, then the weed seedlings are either prevented completely from emerging, or the weeds grow until they have reached the cotyledon stage but then their growth stops, and, eventually, after three to four weeks have elapsed, they die completely.

If the active compounds of the inventive mixtures are applied post-emergence to the green parts of the plants, growth likewise stops drastically a very short time after the treatment and the weed plants remain at the growth stage of the point of time of application, or they die completely after a certain time, so that in this manner competition by the weeds, which is harmful to the soybean plants, is eliminated at a very early point in time and in a sustained manner.

When the active compounds of the inventive mixtures are used jointly, superadditive (=synergistic) effects are observed. This means that the effect in the combinations exceeds the expected total of the effects of the individual herbicides employed. The synergistic effects allow the application rate to be reduced, a broader spectrum of broad-leaved weeds and weed grasses to be controlled, the herbicidal effect to take place more rapidly, the duration of action to be longer, the harmful plants to be controlled better while using only one, or few, applications, and the application period which is possible to be extended. In some cases, uptake of the compositions also reduces the amount of harmful constituents in the crop plant, such as nitrogen or oleic acid.

The active compounds of the inventive mixtures can be used jointly or in succession. They can also conveniently be combined with further herbicide treatments to treatment combinations that ensure a more complete or long-lasting weed control, or to ensure control of weeds that are resistant against certain herbicides through combined action of mutiple herbicides with different modes of action.

In particular, the active compounds of the inventive mixtures and further herbicides can be used in any of the soybean treatment combinations outlined below that consist of pre-plant burn down, pre-emergence and post-emergence treatments. These treatment combinations can be particularly suitable if the soybean crop is, besides being HPPD tolerant, also tolerant to the action of one or more herbicides present in the treatment combination, including tolerance that is a result of breeding and/or genetic modification. Such tolerant plants include glufosinate tolerant soybeans, glyphosate tolerant soybeans and soybeans that are tolerant to auxin herbicides (e. g. 2,4-D, dicamba) and/or PPO herbicides (e. g. carfentrazone-ethyl, saflufenacil, sulfentrazone, trifludimoxazin, pyraflufen-ethyl, tiafenacil).

The following active compounds of the inventive mixtures and further herbicides are particularly suitable as pre-plant burn-down weed control components in such soybean treatment combinations: Glufosinate, glufosinate ammonium, glufosinate sodium, L-glufosinate, L-glufosinate ammonium, L-glufosinate sodium, glyphosate, glyphosate dimethylammonium, glyphosate potassium, glyphosate isopropylammonium, paraquat, tiafenacil, trifludimoxazin, saflufenacil, sulfentrazone, flumioxazin, fomesafen, carfentrazone-ethyl, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6, S-3100), cloransulam-methyl, chlorimuron-ethyl, imazethapyr, imazethapyr ammonium, 2,4-D, 2,4-D choline salt, dicamba, dicamba ethanolamine salt, dicamba diglycolamine salt, dicamba potassium and dicamba BAPMA salt (i. e. dicamba N,N-bis(3-aminopropyl)methylamine salt).

The following active compounds of the inventive mixtures and further herbicides are particularly suitable as pre-emergence weed control components in such soybean treatment combinations: isoxaflutole, pyroxasulfone, isoxaflutole/pyroxasulfone, isoxaflutole/pyroxasulfone/imazethapyr, isoxaflutole/pyroxasulfone/imazethapyr ammonium, isoxaflutole/pyroxasulfone/imazapic, isoxaflutole/pyroxasulfone/imazapic ammonium, isoxaflutole/pyroxasulfone/imazaquin, isoxaflutole/pyroxasulfone/imazaquin ammonium, isoxaflutole/mesotrione, isoxaflutole/mesotrione/pyroxasulfone, mesotrione/pyroxasulfone, pyroxasulfone/imazethapyr, isoxaflutole/imazethapyr, mesotrione/imazethapyr, acetochlor, metolachlor, (S)-metolachlor, dimethenamid, dimethenamid-P, pethoxamid, cloransulam-methyl, chlorimuron-ethyl, thifensulfuron-methyl, imazethapyr, imazethapyr ammonium, trifludimoxazin, saflufenacil, sulfentrazone, flumioxazin, fomesafen, trifluralin, pendimethalin, metribuzin, mesotrione, tembotrione, bicyclopyrone and fenquinotrione.

The following active compounds of the inventive mixtures and further herbicides are particularly suitable for post-emergence weed control components in such soybean treatment combinations: Glufosinate, glufosinate ammonium, glufosinate sodium, L-glufosinate, L-glufosinate ammonium, L-glufosinate sodium, glyphosate, glyphosate dimethylammonium, glyphosate potassium, glyphosate isopropylammonium, imazamox, imazamox ammonium, imazethapyr, imazethapyr ammonium, bentazone, bentazone sodium, isoxaflutole, topramezone, mesotrione, tolpyralate, isoxaflutole/mesotrione, isoxaflutole/topramezone, mesotrione/topramezone, isoxaflutole/tolpyralate, tembotrione, bicyclopyrone, fenquinotrione, carfentrazone-ethyl, saflufenacil, sulfentrazone, trifludimoxazin, saflufenacil/trifludimoxazin, pyraflufen-ethyl, tiafenacil, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6, S-3100), pyroxasulfone, isoxaflutole/pyroxasulfone, isoxaflutole/pyroxasulfone/imazethapyr, isoxaflutole/pyroxasulfone/imazethapyr ammonium, isoxaflutole/pyroxasulfone/imazamox, isoxaflutole/pyroxasulfone/imazamox ammonium, isoxaflutole/mesotrione/pyroxasulfone, mesotrione/pyroxasulfone, topramezone/pyroxasulfone, pyroxasulfone/imazamox, pyroxasulfone/imazamox ammonium, 2,4-D, 2,4-D choline salt, dicamba, dicamba ethanolamine salt, dicamba diglycolamine salt, dicamba potassium and dicamba BAPMA salt.

Particularly suitable soybean treatment combinations of active compounds of the inventive mixtures and further herbicides are:

The soybean treatment combinations S1.1 to S 1.1007 in which one of the soybean treatment combinations listed in the following table is combined with post-emergence use of glufosinate.

| Treatment combination | Pre-plant burn-down | Pre-emergence |
|---|---|---|
| S-1 | Glufosinate | Isoxaflutole |
| S-2 | Glufosinate | Pyroxasulfone |
| S-3 | Glufosinate | Isoxaflutole + pyroxasulfone |
| S-4 | Glufosinate | Isoxaflutole + pyroxasulfone + imazethapyr |

16

(continued)

| Treatment combination | Pre-plant burn-down | Pre-emergence |
|---|---|---|
| S-5 | Glufosinate | Isoxaflutole + pyroxasulfone + imazethapyr ammonium |
| S-6 | Glufosinate | Isoxaflutole + imazethapyr |
| S-7 | Glufosinate | Isoxaflutole + imazethapyr ammonium |
| S-8 | Glufosinate | Pyroxasulfone + imazethapyr |
| S-9 | Glufosinate | Pyroxasulfone + imazethapyr ammonium |
| S-10 | Glufosinate | Imazethapyr |
| S-11 | Glufosinate | Imazethapyr ammonium |
| S-12 | Glufosinate | Isoxaflutole + pyroxasulfone + imazapic |
| S-13 | Glufosinate | Isoxaflutole + pyroxasulfone + imazapic ammonium |
| S-14 | Glufosinate | Isoxaflutole + imazapic |
| S-15 | Glufosinate | Isoxaflutole + imazapic ammonium |
| S-16 | Glufosinate | Pyroxasulfone + imazapic |
| S-17 | Glufosinate | Pyroxasulfone + imazapic ammonium |
| S-18 | Glufosinate | I mazapic |
| S-19 | Glufosinate | Imazapic ammonium |
| S-20 | Glufosinate | Isoxaflutole + pyroxasulfone + imazaquin |
| S-21 | Glufosinate | Isoxaflutole + pyroxasulfone + imazaquin ammonium |
| S-22 | Glufosinate | Isoxaflutole + imazaquin |
| S-23 | Glufosinate | Isoxaflutole + imazaquin ammonium |
| S-24 | Glufosinate | Pyroxasulfone + imazaquin |
| S-25 | Glufosinate | Pyroxasulfone + imazaquin ammonium |
| S-26 | Glufosinate | Imazaquin |
| S-27 | Glufosinate | Imazaquin ammonium |
| S-28 | Glufosinate | Isoxaflutole + mesotrione |
| S-29 | Glufosinate | Isoxaflutole + mesotrione + pyroxasulfone |
| S-30 | Glufosinate | Mesotrione + pyroxasulfone |
| S-31 | Glufosinate | Mesotrione + pyroxasulfone + ima-zethapyr |
| S-32 | Glufosinate | Mesotrione + pyroxasulfone + imazethapyr ammonium |
| S-33 | Glufosinate | Mesotrione + imazethapyr |
| S-34 | Glufosinate | Mesotrione + imazethapyr ammonium |
| S-35 | Glufosinate | Acetochlor |
| S-36 | Glufosinate | metolachlor |
| S-37 | Glufosinate | (S)-metolachlor |
| S-38 | Glufosinate | Dimethenamid |
| S-39 | Glufosinate | Dimethenamid-P |
| S-40 | Glufosinate | Pethoxamid |

(continued)

| Treatment combination | Pre-plant burn-down | Pre-emergence |
|---|---|---|
| S-41 | Glufosinate | Cloransulam-methyl |
| S-42 | Glufosinate | Chlorimuron-ethyl |
| S-43 | Glufosinate | Thifensulfuron-methyl |
| S-44 | Glufosinate | Saflufenacil |
| S-45 | Glufosinate | Trifludimoxazin |
| S-46 | Glufosinate | Sulfentrazone |
| S-47 | Glufosinate | Flumioxazin |
| S-48 | Glufosinate | Fomesafen |
| S-49 | Glufosinate | Trifluralin |
| S-50 | Glufosinate | Pendimethalin |
| S-51 | Glufosinate | Metribuzin |
| S-52 | Glufosinate | Mesotrione |
| S-53 | Glufosinate | Tembotrione |
| S-54 | Glufosinate | Bicyclopyrone |
| S-55 | Glufosinate | Fenquinotrione |
| S-56 | Glufosinate ammonium | Isoxaflutole |
| S-57 | Glufosinate ammonium | Pyroxasulfone |
| S-58 | Glufosinate ammonium | Isoxaflutole + pyroxasulfone |
| S-59 | Glufosinate ammonium | Isoxaflutole + pyroxasulfone + imazethapyr |
| S-60 | Glufosinate ammonium | Isoxaflutole + pyroxasulfone + imazethapyr ammonium |
| S-61 | Glufosinate ammonium | Isoxaflutole + imazethapyr |
| S-62 | Glufosinate ammonium | Isoxaflutole + imazethapyr ammonium |
| S-63 | Glufosinate ammonium | Pyroxasulfone + imazethapyr |
| S-64 | Glufosinate ammonium | Pyroxasulfone + imazethapyr ammonium |
| S-65 | Glufosinate ammonium | Imazethapyr |
| S-66 | Glufosinate ammonium | Imazethapyr ammonium |
| S-67 | Glufosinate ammonium | Isoxaflutole + pyroxasulfone + imazapic |
| S-68 | Glufosinate ammonium | Isoxaflutole + pyroxasulfone + imazapic ammonium |
| S-69 | Glufosinate ammonium | Isoxaflutole + imazapic |
| S-70 | Glufosinate ammonium | Isoxaflutole + imazapic ammonium |
| S-71 | Glufosinate ammonium | Pyroxasulfone + imazapic |
| S-72 | Glufosinate ammonium | Pyroxasulfone + imazapic ammonium |
| S-73 | Glufosinate ammonium | Imazapic |
| S-74 | Glufosinate ammonium | Imazapic ammonium |
| S-75 | Glufosinate ammonium | Isoxaflutole + pyroxasulfone + imazaquin |
| S-76 | Glufosinate ammonium | Isoxaflutole + pyroxasulfone + imazaquin ammonium |
| S-77 | Glufosinate ammonium | Isoxaflutole + imazaquin |

(continued)

| Treatment combination | Pre-plant burn-down | Pre-emergence |
|---|---|---|
| S-78 | Glufosinate ammonium | Isoxaflutole + imazaquin ammonium |
| S-79 | Glufosinate ammonium | Pyroxasulfone + imazaquin |
| S-80 | Glufosinate ammonium | Pyroxasulfone + imazaquin ammonium |
| S-81 | Glufosinate ammonium | Imazaquin |
| S-82 | Glufosinate ammonium | Imazaquin ammonium |
| S-83 | Glufosinate ammonium | Isoxaflutole + mesotrione |
| S-84 | Glufosinate ammonium | Isoxaflutole + mesotrione + pyroxasulfone |
| S-85 | Glufosinate ammonium | Mesotrione + pyroxasulfone |
| S-86 | Glufosinate ammonium | Mesotrione + pyroxasulfone + imazethapyr |
| S-87 | Glufosinate ammonium | Mesotrione + pyroxasulfone + imazethapyr ammonium |
| S-88 | Glufosinate ammonium | Mesotrione + imazethapyr |
| S-89 | Glufosinate ammonium | Mesotrione + imazethapyr ammonium |
| S-90 | Glufosinate ammonium | Acetochlor |
| S-91 | Glufosinate ammonium | metolachlor |
| S-92 | Glufosinate ammonium | (S)-metolachlor |
| S-93 | Glufosinate ammonium | Dimethenamid |
| S-94 | Glufosinate ammonium | Dimethenamid-P |
| S-95 | Glufosinate ammonium | Pethoxamid |
| S-96 | Glufosinate ammonium | Cloransulam-methyl |
| S-97 | Glufosinate ammonium | Chlorimuron-ethyl |
| S-98 | Glufosinate ammonium | Thifensulfuron-methyl |
| S-99 | Glufosinate ammonium | Saflufenacil |
| S-100 | Glufosinate ammonium | Trifludimoxazin |
| S-101 | Glufosinate ammonium | Sulfentrazone |
| S-102 | Glufosinate ammonium | Flumioxazin |
| S-103 | Glufosinate ammonium | Fomesafen |
| S-104 | Glufosinate ammonium | Trifluralin |
| S-105 | Glufosinate ammonium | Pendimethalin |
| S-106 | Glufosinate ammonium | Metribuzin |
| S-107 | Glufosinate ammonium | Mesotrione |
| S-108 | Glufosinate ammonium | Tembotrione |
| S-109 | Glufosinate ammonium | Bicyclopyrone |
| S-110 | Glufosinate ammonium | Fenquinotrione |
| S-111 | L-Glufosinate | Isoxaflutole |
| S-112 | L-Glufosinate | Pyroxasulfone |
| S-113 | L-Glufosinate | Isoxaflutole + pyroxasulfone |
| S-114 | L-Glufosinate | Isoxaflutole + pyroxasulfone + imazethapyr |

(continued)

| Treatment combination | Pre-plant burn-down | Pre-emergence |
|---|---|---|
| S-115 | L-Glufosinate | Isoxaflutole + pyroxasulfone + imazethapyr ammonium |
| S-116 | L-Glufosinate | Isoxaflutole + imazethapyr |
| S-117 | L-Glufosinate | Isoxaflutole + imazethapyr ammonium |
| S-118 | L-Glufosinate | Pyroxasulfone + imazethapyr |
| S-119 | L-Glufosinate | Pyroxasulfone + imazethapyr ammonium |
| S-120 | L-Glufosinate | Imazethapyr |
| S-121 | L-Glufosinate | Imazethapyr ammonium |
| S-122 | L-Glufosinate | Isoxaflutole + pyroxasulfone + imazapic |
| S-123 | L-Glufosinate | Isoxaflutole + pyroxasulfone + imazapic ammonium |
| S-124 | L-Glufosinate | Isoxaflutole + imazapic |
| S-125 | L-Glufosinate | Isoxaflutole + imazapic ammonium |
| S-126 | L-Glufosinate | Pyroxasulfone + imazapic |
| S-127 | L-Glufosinate | Pyroxasulfone + imazapic ammonium |
| S-128 | L-Glufosinate | Imazapic |
| S-129 | L-Glufosinate | Imazapic ammonium |
| S-130 | L-Glufosinate | Isoxaflutole + pyroxasulfone + imazaquin |
| S-131 | L-Glufosinate | Isoxaflutole + pyroxasulfone + imazaquin ammonium |
| S-132 | L-Glufosinate | Isoxaflutole + imazaquin |
| S-133 | L-Glufosinate | Isoxaflutole + imazaquin ammonium |
| S-134 | L-Glufosinate | Pyroxasulfone + imazaquin |
| S-135 | L-Glufosinate | Pyroxasulfone + imazaquin ammonium |
| S-136 | L-Glufosinate | Imazaquin |
| S-137 | L-Glufosinate | Imazaquin ammonium |
| S-138 | L-Glufosinate | Isoxaflutole + mesotrione |
| S-139 | L-Glufosinate | Isoxaflutole + mesotrione + pyroxasulfone |
| S-140 | L-Glufosinate | Mesotrione + pyroxasulfone |
| S-141 | L-Glufosinate | Mesotrione + pyroxasulfone + imazethapyr |
| S-142 | L-Glufosinate | Mesotrione + pyroxasulfone + imazethapyr ammonium |
| S-143 | L-Glufosinate | Mesotrione + imazethapyr |
| S-144 | L-Glufosinate | Mesotrione + imazethapyr ammonium |
| S-145 | L-Glufosinate | Acetochlor |
| S-146 | L-Glufosinate | metolachlor |
| S-147 | L-Glufosinate | (S)-metolachlor |
| S-148 | L-Glufosinate | Dimethenamid |
| S-149 | L-Glufosinate | Dimethenamid-P |
| S-150 | L-Glufosinate | Pethoxamid |

(continued)

| Treatment combination | Pre-plant burn-down | Pre-emergence |
|---|---|---|
| S-151 | L-Glufosinate | Cloransulam-methyl |
| S-152 | L-Glufosinate | Chlorimuron-ethyl |
| S-153 | L-Glufosinate | Thifensulfuron-methyl |
| S-154 | L-Glufosinate | Saflufenacil |
| S-155 | L-Glufosinate | Trifludimoxazin |
| S-156 | L-Glufosinate | Sulfentrazone |
| S-157 | L-Glufosinate | Flumioxazin |
| S-158 | L-Glufosinate | Fomesafen |
| S-159 | L-Glufosinate | Trifluralin |
| S-160 | L-Glufosinate | Pendimethalin |
| S-161 | L-Glufosinate | Metribuzin |
| S-162 | L-Glufosinate | Mesotrione |
| S-163 | L-Glufosinate | Tembotrione |
| S-164 | L-Glufosinate | Bicyclopyrone |
| S-165 | L-Glufosinate | Fenquinotrione |
| S-166 | L-Glufosinate ammonium | Isoxaflutole |
| S-167 | L-Glufosinate ammonium | Pyroxasulfone |
| S-168 | L-Glufosinate ammonium | Isoxaflutole + pyroxasulfone |
| S-169 | L-Glufosinate ammonium | Isoxaflutole + pyroxasulfone + imazethapyr |
| S-170 | L-Glufosinate ammonium | Isoxaflutole + pyroxasulfone + imazethapyr ammonium |
| S-171 | L-Glufosinate ammonium | Isoxaflutole + imazethapyr |
| S-172 | L-Glufosinate ammonium | Isoxaflutole + imazethapyr ammonium |
| S-173 | L-Glufosinate ammonium | Pyroxasulfone + imazethapyr |
| S-174 | L-Glufosinate ammonium | Pyroxasulfone + imazethapyr ammonium |
| S-175 | L-Glufosinate ammonium | Imazethapyr |
| S-176 | L-Glufosinate ammonium | Imazethapyr ammonium |
| S-177 | L-Glufosinate ammonium | Isoxaflutole + pyroxasulfone + imazapic |
| S-178 | L-Glufosinate ammonium | Isoxaflutole + pyroxasulfone + imazapic ammonium |
| S-179 | L-Glufosinate ammonium | Isoxaflutole + imazapic |
| S-180 | L-Glufosinate ammonium | Isoxaflutole + imazapic ammonium |
| S-181 | L-Glufosinate ammonium | Pyroxasulfone + imazapic |
| S-182 | L-Glufosinate ammonium | Pyroxasulfone + imazapic ammonium |
| S-183 | L-Glufosinate ammonium | Imazapic |
| S-184 | L-Glufosinate ammonium | Imazapic ammonium |
| S-185 | L-Glufosinate ammonium | Isoxaflutole + pyroxasulfone + imazaquin |
| S-186 | L-Glufosinate ammonium | Isoxaflutole + pyroxasulfone + imazaquin ammonium |
| S-187 | L-Glufosinate ammonium | Isoxaflutole + imazaquin |

(continued)

| Treatment combination | Pre-plant burn-down | Pre-emergence |
|---|---|---|
| S-188 | L-Glufosinate ammonium | Isoxaflutole + imazaquin ammonium |
| S-189 | L-Glufosinate ammonium | Pyroxasulfone + imazaquin |
| S-190 | L-Glufosinate ammonium | Pyroxasulfone + imazaquin ammonium |
| S-191 | L-Glufosinate ammonium | Imazaquin |
| S-192 | L-Glufosinate ammonium | Imazaquin ammonium |
| S-193 | L-Glufosinate ammonium | Isoxaflutole + mesotrione |
| S-194 | L-Glufosinate ammonium | Isoxaflutole + mesotrione + pyroxasulfone |
| S-195 | L-Glufosinate ammonium | Mesotrione + pyroxasulfone |
| S-196 | L-Glufosinate ammonium | Mesotrione + pyroxasulfone + imazethapyr |
| S-197 | L-Glufosinate ammonium | Mesotrione + pyroxasulfone + imazethapyr ammonium |
| S-198 | L-Glufosinate ammonium | Mesotrione + imazethapyr |
| S-199 | L-Glufosinate ammonium | Mesotrione + imazethapyr ammonium |
| S-200 | L-Glufosinate ammonium | Acetochlor |
| S-201 | L-Glufosinate ammonium | metolachlor |
| S-202 | L-Glufosinate ammonium | (S)-metolachlor |
| S-203 | L-Glufosinate ammonium | Dimethenamid |
| S-204 | L-Glufosinate ammonium | Dimethenamid-P |
| S-205 | L-Glufosinate ammonium | Pethoxamid |
| S-206 | L-Glufosinate ammonium | Cloransulam-methyl |
| S-207 | L-Glufosinate ammonium | Chlorimuron-ethyl |
| S-208 | L-Glufosinate ammonium | Thifensulfuron-methyl |
| S-209 | L-Glufosinate ammonium | Saflufenacil |
| S-210 | L-Glufosinate ammonium | Trifludimoxazin |
| S-211 | L-Glufosinate ammonium | Sulfentrazone |
| S-212 | L-Glufosinate ammonium | Flumioxazin |
| S-213 | L-Glufosinate ammonium | Fomesafen |
| S-214 | L-Glufosinate ammonium | Trifluralin |
| S-215 | L-Glufosinate ammonium | Pendimethalin |
| S-216 | L-Glufosinate ammonium | Metribuzin |
| S-217 | L-Glufosinate ammonium | Mesotrione |
| S-218 | L-Glufosinate ammonium | Tembotrione |
| S-219 | L-Glufosinate ammonium | Bicyclopyrone |
| S-220 | L-Glufosinate ammonium | Fenquinotrione |
| S-221 | L-Glufosinate sodium | Isoxaflutole |
| S-222 | L-Glufosinate sodium | Pyroxasulfone |
| S-223 | L-Glufosinate sodium | Isoxaflutole + pyroxasulfone |
| S-224 | L-Glufosinate sodium | Isoxaflutole + pyroxasulfone + imazethapyr |

(continued)

| Treatment combination | Pre-plant burn-down | Pre-emergence |
|---|---|---|
| S-225 | L-Glufosinate sodium | Isoxaflutole + pyroxasulfone + imazethapyr ammonium |
| S-226 | L-Glufosinate sodium | Isoxaflutole + imazethapyr |
| S-227 | L-Glufosinate sodium | Isoxaflutole + imazethapyr ammonium |
| S-228 | L-Glufosinate sodium | Pyroxasulfone + imazethapyr |
| S-229 | L-Glufosinate sodium | Pyroxasulfone + imazethapyr ammonium |
| S-230 | L-Glufosinate sodium | Imazethapyr |
| S-231 | L-Glufosinate sodium | Imazethapyr ammonium |
| S-232 | L-Glufosinate sodium | Isoxaflutole + pyroxasulfone + imazapic |
| S-233 | L-Glufosinate sodium | Isoxaflutole + pyroxasulfone + imazapic ammonium |
| S-234 | L-Glufosinate sodium | Isoxaflutole + imazapic |
| S-235 | L-Glufosinate sodium | Isoxaflutole + imazapic ammonium |
| S-236 | L-Glufosinate sodium | Pyroxasulfone + imazapic |
| S-237 | L-Glufosinate sodium | Pyroxasulfone + imazapic ammonium |
| S-238 | L-Glufosinate sodium | I mazapic |
| S-239 | L-Glufosinate sodium | Imazapic ammonium |
| S-240 | L-Glufosinate sodium | Isoxaflutole + pyroxasulfone + imazaquin |
| S-241 | L-Glufosinate sodium | Isoxaflutole + pyroxasulfone + imazaquin ammonium |
| S-242 | L-Glufosinate sodium | Isoxaflutole + imazaquin |
| S-243 | L-Glufosinate sodium | Isoxaflutole + imazaquin ammonium |
| S-244 | L-Glufosinate sodium | Pyroxasulfone + imazaquin |
| S-245 | L-Glufosinate sodium | Pyroxasulfone + imazaquin ammonium |
| S-246 | L-Glufosinate sodium | Imazaquin |
| S-247 | L-Glufosinate sodium | Imazaquin ammonium |
| S-248 | L-Glufosinate sodium | Isoxaflutole + mesotrione |
| S-249 | L-Glufosinate sodium | Isoxaflutole + mesotrione + pyroxasulfone |
| S-250 | L-Glufosinate sodium | Mesotrione + pyroxasulfone |
| S-251 | L-Glufosinate sodium | Mesotrione + pyroxasulfone + imazethapyr |
| S-252 | L-Glufosinate sodium | Mesotrione + pyroxasulfone + imazethapyr ammonium |
| S-253 | L-Glufosinate sodium | Mesotrione + imazethapyr |
| S-254 | L-Glufosinate sodium | Mesotrione + imazethapyr ammonium |
| S-255 | L-Glufosinate sodium | Acetochlor |
| S-256 | L-Glufosinate sodium | metolachlor |
| S-257 | L-Glufosinate sodium | (S)-metolachlor |
| S-258 | L-Glufosinate sodium | Dimethenamid |
| S-259 | L-Glufosinate sodium | Dimethenamid-P |
| S-260 | L-Glufosinate sodium | Pethoxamid |

(continued)

| Treatment combination | Pre-plant burn-down | Pre-emergence |
|---|---|---|
| S-261 | L-Glufosinate sodium | Cloransulam-methyl |
| S-262 | L-Glufosinate sodium | Chlorimuron-ethyl |
| S-263 | L-Glufosinate sodium | Thifensulfuron-methyl |
| S-264 | L-Glufosinate sodium | Saflufenacil |
| S-265 | L-Glufosinate sodium | Trifludimoxazin |
| S-266 | L-Glufosinate sodium | Sulfentrazone |
| S-267 | L-Glufosinate sodium | Flumioxazin |
| S-268 | L-Glufosinate sodium | Fomesafen |
| S-269 | L-Glufosinate sodium | Trifluralin |
| S-270 | L-Glufosinate sodium | Pendimethalin |
| S-271 | L-Glufosinate sodium | Metribuzin |
| S-272 | L-Glufosinate sodium | Mesotrione |
| S-273 | L-Glufosinate sodium | Tembotrione |
| S-274 | L-Glufosinate sodium | Bicyclopyrone |
| S-275 | L-Glufosinate sodium | Fenquinotrione |
| S-276 | Glyphosate | Isoxaflutole |
| S-277 | Glyphosate | Pyroxasulfone |
| S-278 | Glyphosate | Isoxaflutole + pyroxasulfone |
| S-279 | Glyphosate | Isoxaflutole + pyroxasulfone + imazethapyr |
| S-280 | Glyphosate | Isoxaflutole + pyroxasulfone + imazetha-pyr ammonium |
| S-281 | Glyphosate | Isoxaflutole + imazethapyr |
| S-282 | Glyphosate | Isoxaflutole + imazethapyr ammonium |
| S-283 | Glyphosate | Pyroxasulfone + imazethapyr |
| S-284 | Glyphosate | Pyroxasulfone + imazethapyr ammonium |
| S-285 | Glyphosate | Imazethapyr |
| S-286 | Glyphosate | Imazethapyr ammonium |
| S-287 | Glyphosate | Isoxaflutole + pyroxasulfone + imazapic |
| S-288 | Glyphosate | Isoxaflutole + pyroxasulfone + imazapic ammonium |
| S-289 | Glyphosate | Isoxaflutole + imazapic |
| S-290 | Glyphosate | Isoxaflutole + imazapic ammonium |
| S-291 | Glyphosate | Pyroxasulfone + imazapic |
| S-292 | Glyphosate | Pyroxasulfone + imazapic ammonium |
| S-293 | Glyphosate | I mazapic |
| S-294 | Glyphosate | Imazapic ammonium |
| S-295 | Glyphosate | Isoxaflutole + pyroxasulfone + imazaquin |
| S-296 | Glyphosate | Isoxaflutole + pyroxasulfone + imazaquin ammonium |
| S-297 | Glyphosate | Isoxaflutole + imazaquin |

(continued)

| Treatment combination | Pre-plant burn-down | Pre-emergence |
|---|---|---|
| S-298 | Glyphosate | Isoxaflutole + imazaquin ammonium |
| S-299 | Glyphosate | Pyroxasulfone + imazaquin |
| S-300 | Glyphosate | Pyroxasulfone + imazaquin ammonium |
| S-301 | Glyphosate | Imazaquin |
| S-302 | Glyphosate | Imazaquin ammonium |
| S-303 | Glyphosate | Isoxaflutole + mesotrione |
| S-304 | Glyphosate | Isoxaflutole + mesotrione + pyroxasulfone |
| S-305 | Glyphosate | Mesotrione + pyroxasulfone |
| S-306 | Glyphosate | Mesotrione + pyroxasulfone + imazethapyr |
| S-307 | Glyphosate | Mesotrione + pyroxasulfone + imazethapyr ammonium |
| S-308 | Glyphosate | Mesotrione + imazethapyr |
| S-309 | Glyphosate | Mesotrione + imazethapyr ammonium |
| S-310 | Glyphosate | Acetochlor |
| S-311 | Glyphosate | metolachlor |
| S-312 | Glyphosate | (S)-metolachlor |
| S-313 | Glyphosate | Dimethenamid |
| S-314 | Glyphosate | Dimethenamid-P |
| S-315 | Glyphosate | Pethoxamid |
| S-316 | Glyphosate | Cloransulam-methyl |
| S-317 | Glyphosate | Chlorimuron-ethyl |
| S-318 | Glyphosate | Thifensulfuron-methyl |
| S-319 | Glyphosate | Saflufenacil |
| S-320 | Glyphosate | Trifludimoxazin |
| S-321 | Glyphosate | Sulfentrazone |
| S-322 | Glyphosate | Flumioxazin |
| S-323 | Glyphosate | Fomesafen |
| S-324 | Glyphosate | Trifluralin |
| S-325 | Glyphosate | Pendimethalin |
| S-326 | Glyphosate | Metribuzin |
| S-327 | Glyphosate | Mesotrione |
| S-328 | Glyphosate | Tembotrione |
| S-329 | Glyphosate | Bicyclopyrone |
| S-330 | Glyphosate | Fenquinotrione |
| S-331 | Glyphosate dimethylammonium | Isoxaflutole |
| S-332 | Glyphosate dimethylammonium | Pyroxasulfone |
| S-333 | Glyphosate dimethylammonium | Isoxaflutole + pyroxasulfone |
| S-334 | Glyphosate dimethylammonium | Isoxaflutole + pyroxasulfone + imazethapyr |

(continued)

| Treatment combination | Pre-plant burn-down | Pre-emergence |
|---|---|---|
| S-335 | Glyphosate dimethylammonium | Isoxaflutole + pyroxasulfone + imazethapyr ammonium |
| S-336 | Glyphosate dimethylammonium | Isoxaflutole + imazethapyr |
| S-337 | Glyphosate dimethylammonium | Isoxaflutole + imazethapyr ammonium |
| S-338 | Glyphosate dimethylammonium | Pyroxasulfone + imazethapyr |
| S-339 | Glyphosate dimethylammonium | Pyroxasulfone + imazethapyr ammonium |
| S-340 | Glyphosate dimethylammonium | Imazethapyr |
| S-341 | Glyphosate dimethylammonium | Imazethapyr ammonium |
| S-342 | Glyphosate dimethylammonium | Isoxaflutole + pyroxasulfone + imazapic |
| S-343 | Glyphosate dimethylammonium | Isoxaflutole + pyroxasulfone + imazapic ammonium |
| S-344 | Glyphosate dimethylammonium | Isoxaflutole + imazapic |
| S-345 | Glyphosate dimethylammonium | Isoxaflutole + imazapic ammonium |
| S-346 | Glyphosate dimethylammonium | Pyroxasulfone + imazapic |
| S-347 | Glyphosate dimethylammonium | Pyroxasulfone + imazapic ammonium |
| S-348 | Glyphosate dimethylammonium | I mazapic |
| S-349 | Glyphosate dimethylammonium | Imazapic ammonium |
| S-350 | Glyphosate dimethylammonium | Isoxaflutole + pyroxasulfone + imazaquin |
| S-351 | Glyphosate dimethylammonium | Isoxaflutole + pyroxasulfone + imazaquin ammonium |
| S-352 | Glyphosate dimethylammonium | Isoxaflutole + imazaquin |
| S-353 | Glyphosate dimethylammonium | Isoxaflutole + imazaquin ammonium |
| S-354 | Glyphosate dimethylammonium | Pyroxasulfone + imazaquin |
| S-355 | Glyphosate dimethylammonium | Pyroxasulfone + imazaquin ammonium |
| S-356 | Glyphosate dimethylammonium | Imazaquin |
| S-357 | Glyphosate dimethylammonium | Imazaquin ammonium |
| S-358 | Glyphosate dimethylammonium | Isoxaflutole + mesotrione |
| S-359 | Glyphosate dimethylammonium | Isoxaflutole + mesotrione + pyroxasulfone |
| S-360 | Glyphosate dimethylammonium | Mesotrione + pyroxasulfone |
| S-361 | Glyphosate dimethylammonium | Mesotrione + pyroxasulfone + imazethapyr |
| S-362 | Glyphosate dimethylammonium | Mesotrione + pyroxasulfone + imazethapyr ammonium |
| S-363 | Glyphosate dimethylammonium | Mesotrione + imazethapyr |
| S-364 | Glyphosate dimethylammonium | Mesotrione + imazethapyr ammonium |
| S-365 | Glyphosate dimethylammonium | Acetochlor |
| S-366 | Glyphosate dimethylammonium | metolachlor |
| S-367 | Glyphosate dimethylammonium | (S)-metolachlor |
| S-368 | Glyphosate dimethylammonium | Dimethenamid |
| S-369 | Glyphosate dimethylammonium | Dimethenamid-P |
| S-370 | Glyphosate dimethylammonium | Pethoxamid |

(continued)

| Treatment combination | Pre-plant burn-down | Pre-emergence |
|---|---|---|
| S-371 | Glyphosate dimethylammonium | Cloransulam-methyl |
| S-372 | Glyphosate dimethylammonium | Chlorimuron-ethyl |
| S-373 | Glyphosate dimethylammonium | Thifensulfuron-methyl |
| S-374 | Glyphosate dimethylammonium | Saflufenacil |
| S-375 | Glyphosate dimethylammonium | Trifludimoxazin |
| S-376 | Glyphosate dimethylammonium | Sulfentrazone |
| S-377 | Glyphosate dimethylammonium | Flumioxazin |
| S-378 | Glyphosate dimethylammonium | Fomesafen |
| S-379 | Glyphosate dimethylammonium | Trifluralin |
| S-380 | Glyphosate dimethylammonium | Pendimethalin |
| S-381 | Glyphosate dimethylammonium | Metribuzin |
| S-382 | Glyphosate dimethylammonium | Mesotrione |
| S-383 | Glyphosate dimethylammonium | Tembotrione |
| S-384 | Glyphosate dimethylammonium | Bicyclopyrone |
| S-385 | Glyphosate dimethylammonium | Fenquinotrione |
| S-386 | Glyphosate potassium | Isoxaflutole |
| S-387 | Glyphosate potassium | Pyroxasulfone |
| S-388 | Glyphosate potassium | Isoxaflutole + pyroxasulfone |
| S-389 | Glyphosate potassium | Isoxaflutole + pyroxasulfone + imazethapyr |
| S-390 | Glyphosate potassium | Isoxaflutole + pyroxasulfone + imazethapyr ammonium |
| S-391 | Glyphosate potassium | Isoxaflutole + imazethapyr |
| S-392 | Glyphosate potassium | Isoxaflutole + imazethapyr ammonium |
| S-393 | Glyphosate potassium | Pyroxasulfone + imazethapyr |
| S-394 | Glyphosate potassium | Pyroxasulfone + imazethapyr ammonium |
| S-395 | Glyphosate potassium | Imazethapyr |
| S-396 | Glyphosate potassium | Imazethapyr ammonium |
| S-397 | Glyphosate potassium | Isoxaflutole + pyroxasulfone + imazapic |
| S-398 | Glyphosate potassium | Isoxaflutole + pyroxasulfone + imazapic ammonium |
| S-399 | Glyphosate potassium | Isoxaflutole + imazapic |
| S-400 | Glyphosate potassium | Isoxaflutole + imazapic ammonium |
| S-401 | Glyphosate potassium | Pyroxasulfone + imazapic |
| S-402 | Glyphosate potassium | Pyroxasulfone + imazapic ammonium |
| S-403 | Glyphosate potassium | Imazapic |
| S-404 | Glyphosate potassium | Imazapic ammonium |
| S-405 | Glyphosate potassium | Isoxaflutole + pyroxasulfone + imazaquin |
| S-406 | Glyphosate potassium | Isoxaflutole + pyroxasulfone + imazaquin ammonium |
| S-407 | Glyphosate potassium | Isoxaflutole + imazaquin |

(continued)

| Treatment combination | Pre-plant burn-down | Pre-emergence |
|---|---|---|
| S-408 | Glyphosate potassium | Isoxaflutole + imazaquin ammonium |
| S-409 | Glyphosate potassium | Pyroxasulfone + imazaquin |
| S-410 | Glyphosate potassium | Pyroxasulfone + imazaquin ammonium |
| S-411 | Glyphosate potassium | Imazaquin |
| S-412 | Glyphosate potassium | Imazaquin ammonium |
| S-413 | Glyphosate potassium | Isoxaflutole + mesotrione |
| S-414 | Glyphosate potassium | Isoxaflutole + mesotrione + pyroxasulfone |
| S-415 | Glyphosate potassium | Mesotrione + pyroxasulfone |
| S-416 | Glyphosate potassium | Mesotrione + pyroxasulfone + imazethapyr |
| S-417 | Glyphosate potassium | Mesotrione + pyroxasulfone + imazethapyr ammonium |
| S-418 | Glyphosate potassium | Mesotrione + imazethapyr |
| S-419 | Glyphosate potassium | Mesotrione + imazethapyr ammonium |
| S-420 | Glyphosate potassium | Acetochlor |
| S-421 | Glyphosate potassium | metolachlor |
| S-422 | Glyphosate potassium | (S)-metolachlor |
| S-423 | Glyphosate potassium | Dimethenamid |
| S-424 | Glyphosate potassium | Dimethenamid-P |
| S-425 | Glyphosate potassium | Pethoxamid |
| S-426 | Glyphosate potassium | Cloransulam-methyl |
| S-427 | Glyphosate potassium | Chlorimuron-ethyl |
| S-428 | Glyphosate potassium | Thifensulfuron-methyl |
| S-429 | Glyphosate potassium | Saflufenacil |
| S-430 | Glyphosate potassium | Trifludimoxazin |
| S-431 | Glyphosate potassium | Sulfentrazone |
| S-432 | Glyphosate potassium | Flumioxazin |
| S-433 | Glyphosate potassium | Fomesafen |
| S-434 | Glyphosate potassium | Trifluralin |
| S-435 | Glyphosate potassium | Pendimethalin |
| S-436 | Glyphosate potassium | Metribuzin |
| S-437 | Glyphosate potassium | Mesotrione |
| S-438 | Glyphosate potassium | Tembotrione |
| S-439 | Glyphosate potassium | Bicyclopyrone |
| S-440 | Glyphosate potassium | Fenquinotrione |
| S-441 | Glyphosate isopropylammonium | Isoxaflutole |
| S-442 | Glyphosate isopropylammonium | Pyroxasulfone |
| S-443 | Glyphosate isopropylammonium | Isoxaflutole + pyroxasulfone |
| S-444 | Glyphosate isopropylammonium | Isoxaflutole + pyroxasulfone + imazethapyr |

(continued)

| Treatment combination | Pre-plant burn-down | Pre-emergence |
|---|---|---|
| S-445 | Glyphosate isopropylammonium | Isoxaflutole + pyroxasulfone + imazethapyr ammonium |
| S-446 | Glyphosate isopropylammonium | Isoxaflutole + imazethapyr |
| S-447 | Glyphosate isopropylammonium | Isoxaflutole + imazethapyr ammonium |
| S-448 | Glyphosate isopropylammonium | Pyroxasulfone + imazethapyr |
| S-449 | Glyphosate isopropylammonium | Pyroxasulfone + imazethapyr ammonium |
| S-450 | Glyphosate isopropylammonium | Imazethapyr |
| S-451 | Glyphosate isopropylammonium | Imazethapyr ammonium |
| S-452 | Glyphosate isopropylammonium | Isoxaflutole + pyroxasulfone + imazapic |
| S-453 | Glyphosate isopropylammonium | Isoxaflutole + pyroxasulfone + imazapic ammonium |
| S-454 | Glyphosate isopropylammonium | Isoxaflutole + imazapic |
| S-455 | Glyphosate isopropylammonium | Isoxaflutole + imazapic ammonium |
| S-456 | Glyphosate isopropylammonium | Pyroxasulfone + imazapic |
| S-457 | Glyphosate isopropylammonium | Pyroxasulfone + imazapic ammonium |
| S-458 | Glyphosate isopropylammonium | Imazapic |
| S-459 | Glyphosate isopropylammonium | Imazapic ammonium |
| S-460 | Glyphosate isopropylammonium | Isoxaflutole + pyroxasulfone + imazaquin |
| S-461 | Glyphosate isopropylammonium | Isoxaflutole + pyroxasulfone + imazaquin ammonium |
| S-462 | Glyphosate isopropylammonium | Isoxaflutole + imazaquin |
| S-463 | Glyphosate isopropylammonium | Isoxaflutole + imazaquin ammonium |
| S-464 | Glyphosate isopropylammonium | Pyroxasulfone + imazaquin |
| S-465 | Glyphosate isopropylammonium | Pyroxasulfone + imazaquin ammonium |
| S-466 | Glyphosate isopropylammonium | Imazaquin |
| S-467 | Glyphosate isopropylammonium | Imazaquin ammonium |
| S-468 | Glyphosate isopropylammonium | Isoxaflutole + mesotrione |
| S-469 | Glyphosate isopropylammonium | Isoxaflutole + mesotrione + pyroxasulfone |
| S-470 | Glyphosate isopropylammonium | Mesotrione + pyroxasulfone |
| S-471 | Glyphosate isopropylammonium | Mesotrione + pyroxasulfone + imazethapyr |
| S-472 | Glyphosate isopropylammonium | Mesotrione + pyroxasulfone + imazethapyr ammonium |
| S-473 | Glyphosate isopropylammonium | Mesotrione + imazethapyr |
| S-474 | Glyphosate isopropylammonium | Mesotrione + imazethapyr ammonium |
| S-475 | Glyphosate isopropylammonium | Acetochlor |
| S-476 | Glyphosate isopropylammonium | metolachlor |
| S-477 | Glyphosate isopropylammonium | (S)-metolachlor |
| S-478 | Glyphosate isopropylammonium | Dimethenamid |
| S-479 | Glyphosate isopropylammonium | Dimethenamid-P |
| S-480 | Glyphosate isopropylammonium | Pethoxamid |

(continued)

| Treatment combination | Pre-plant burn-down | Pre-emergence |
|---|---|---|
| S-481 | Glyphosate isopropylammonium | Cloransulam-methyl |
| S-482 | Glyphosate isopropylammonium | Chlorimuron-ethyl |
| S-483 | Glyphosate isopropylammonium | Thifensulfuron-methyl |
| S-484 | Glyphosate isopropylammonium | Saflufenacil |
| S-485 | Glyphosate isopropylammonium | Trifludimoxazin |
| S-486 | Glyphosate isopropylammonium | Sulfentrazone |
| S-487 | Glyphosate isopropylammonium | Flumioxazin |
| S-488 | Glyphosate isopropylammonium | Fomesafen |
| S-489 | Glyphosate isopropylammonium | Trifluralin |
| S-490 | Glyphosate isopropylammonium | Pendimethalin |
| S-491 | Glyphosate isopropylammonium | Metribuzin |
| S-492 | Glyphosate isopropylammonium | Mesotrione |
| S-493 | Glyphosate isopropylammonium | Tembotrione |
| S-494 | Glyphosate isopropylammonium | Bicyclopyrone |
| S-495 | Glyphosate isopropylammonium | Fenquinotrione |
| S-496 | Saflufenacil | Isoxaflutole |
| S-497 | Saflufenacil | Pyroxasulfone |
| S-498 | Saflufenacil | Isoxaflutole + pyroxasulfone |
| S-499 | Saflufenacil | Isoxaflutole + pyroxasulfone + imazethapyr |
| S-500 | Saflufenacil | Isoxaflutole + pyroxasulfone + imazethapyr ammonium |
| S-501 | Saflufenacil | Isoxaflutole + imazethapyr |
| S-502 | Saflufenacil | Isoxaflutole + imazethapyr ammonium |
| S-503 | Saflufenacil | Pyroxasulfone + imazethapyr |
| S-504 | Saflufenacil | Pyroxasulfone + imazethapyr ammonium |
| S-505 | Saflufenacil | Imazethapyr |
| S-506 | Saflufenacil | Imazethapyr ammonium |
| S-507 | Saflufenacil | Isoxaflutole + pyroxasulfone + imazapic |
| S-508 | Saflufenacil | Isoxaflutole + pyroxasulfone + imazapic ammonium |
| S-509 | Saflufenacil | Isoxaflutole + imazapic |
| S-510 | Saflufenacil | Isoxaflutole + imazapic ammonium |
| S-511 | Saflufenacil | Pyroxasulfone + imazapic |
| S-512 | Saflufenacil | Pyroxasulfone + imazapic ammonium |
| S-513 | Saflufenacil | Imazapic |
| S-514 | Saflufenacil | Imazapic ammonium |
| S-515 | Saflufenacil | Isoxaflutole + pyroxasulfone + imazaquin |
| S-516 | Saflufenacil | Isoxaflutole + pyroxasulfone + imazaquin ammonium |
| S-517 | Saflufenacil | Isoxaflutole + imazaquin |

(continued)

| Treatment combination | Pre-plant burn-down | Pre-emergence |
|---|---|---|
| S-518 | Saflufenacil | Isoxaflutole + imazaquin ammonium |
| S-519 | Saflufenacil | Pyroxasulfone + imazaquin |
| S-520 | Saflufenacil | Pyroxasulfone + imazaquin ammonium |
| S-521 | Saflufenacil | Imazaquin |
| S-522 | Saflufenacil | Imazaquin ammonium |
| S-523 | Saflufenacil | Isoxaflutole + mesotrione |
| S-524 | Saflufenacil | Isoxaflutole + mesotrione + pyroxasulfone |
| S-525 | Saflufenacil | Mesotrione + pyroxasulfone |
| S-526 | Saflufenacil | Mesotrione + pyroxasulfone + imazethapyr |
| S-527 | Saflufenacil | Mesotrione + pyroxasulfone + imazetha-pyr ammonium |
| S-528 | Saflufenacil | Mesotrione + imazethapyr |
| S-529 | Saflufenacil | Mesotrione + imazethapyr ammonium |
| S-530 | Saflufenacil | Acetochlor |
| S-531 | Saflufenacil | metolachlor |
| S-532 | Saflufenacil | (S)-metolachlor |
| S-533 | Saflufenacil | Dimethenamid |
| S-534 | Saflufenacil | Dimethenamid-P |
| S-535 | Saflufenacil | Pethoxamid |
| S-536 | Saflufenacil | Cloransulam-methyl |
| S-537 | Saflufenacil | Chlorimuron-ethyl |
| S-538 | Saflufenacil | Thifensulfuron-methyl |
| S-539 | Saflufenacil | Saflufenacil |
| S-540 | Saflufenacil | Trifludimoxazin |
| S-541 | Saflufenacil | Sulfentrazone |
| S-542 | Saflufenacil | Flumioxazin |
| S-543 | Saflufenacil | Fomesafen |
| S-544 | Saflufenacil | Trifluralin |
| S-545 | Saflufenacil | Pendimethalin |
| S-546 | Saflufenacil | Metribuzin |
| S-547 | Saflufenacil | Mesotrione |
| S-548 | Saflufenacil | Tembotrione |
| S-549 | Saflufenacil | Bicyclopyrone |
| S-550 | Saflufenacil | Fenquinotrione |
| S-551 | Trifludimoxazin | Isoxaflutole |
| S-552 | Trifludimoxazin | Pyroxasulfone |
| S-553 | Trifludimoxazin | Isoxaflutole + pyroxasulfone |
| S-554 | Trifludimoxazin | Isoxaflutole + pyroxasulfone + imazethapyr |

(continued)

| Treatment combination | Pre-plant burn-down | Pre-emergence |
|---|---|---|
| S-555 | Trifludimoxazin | Isoxaflutole + pyroxasulfone + imazethapyr ammonium |
| S-556 | Trifludimoxazin | Isoxaflutole + imazethapyr |
| S-557 | Trifludimoxazin | Isoxaflutole + imazethapyr ammonium |
| S-558 | Trifludimoxazin | Pyroxasulfone + imazethapyr |
| S-559 | Trifludimoxazin | Pyroxasulfone + imazethapyr ammonium |
| S-560 | Trifludimoxazin | Imazethapyr |
| S-561 | Trifludimoxazin | Imazethapyr ammonium |
| S-562 | Trifludimoxazin | Isoxaflutole + pyroxasulfone + imazapic |
| S-563 | Trifludimoxazin | Isoxaflutole + pyroxasulfone + imazapic ammonium |
| S-564 | Trifludimoxazin | Isoxaflutole + imazapic |
| S-565 | Trifludimoxazin | Isoxaflutole + imazapic ammonium |
| S-566 | Trifludimoxazin | Pyroxasulfone + imazapic |
| S-567 | Trifludimoxazin | Pyroxasulfone + imazapic ammonium |
| S-568 | Trifludimoxazin | Imazapic |
| S-569 | Trifludimoxazin | Imazapic ammonium |
| S-570 | Trifludimoxazin | Isoxaflutole + pyroxasulfone + imazaquin |
| S-571 | Trifludimoxazin | Isoxaflutole + pyroxasulfone + imazaquin ammonium |
| S-572 | Trifludimoxazin | Isoxaflutole + imazaquin |
| S-573 | Trifludimoxazin | Isoxaflutole + imazaquin ammonium |
| S-574 | Trifludimoxazin | Pyroxasulfone + imazaquin |
| S-575 | Trifludimoxazin | Pyroxasulfone + imazaquin ammonium |
| S-576 | Trifludimoxazin | Imazaquin |
| S-577 | Trifludimoxazin | Imazaquin ammonium |
| S-578 | Trifludimoxazin | Isoxaflutole + mesotrione |
| S-579 | Trifludimoxazin | Isoxaflutole + mesotrione + pyroxasulfone |
| S-580 | Trifludimoxazin | Mesotrione + pyroxasulfone |
| S-581 | Trifludimoxazin | Mesotrione + pyroxasulfone + imazethapyr |
| S-582 | Trifludimoxazin | Mesotrione + pyroxasulfone + imazethapyr ammonium |
| S-583 | Trifludimoxazin | Mesotrione + imazethapyr |
| S-584 | Trifludimoxazin | Mesotrione + imazethapyr ammonium |
| S-585 | Trifludimoxazin | Acetochlor |
| S-586 | Trifludimoxazin | metolachlor |
| S-587 | Trifludimoxazin | (S)-metolachlor |
| S-588 | Trifludimoxazin | Dimethenamid |
| S-589 | Trifludimoxazin | Dimethenamid-P |
| S-590 | Trifludimoxazin | Pethoxamid |

(continued)

| Treatment combination | Pre-plant burn-down | Pre-emergence |
|---|---|---|
| S-591 | Trifludimoxazin | Cloransulam-methyl |
| S-592 | Trifludimoxazin | Chlorimuron-ethyl |
| S-593 | Trifludimoxazin | Thifensulfuron-methyl |
| S-594 | Trifludimoxazin | Saflufenacil |
| S-595 | Trifludimoxazin | Trifludimoxazin |
| S-596 | Trifludimoxazin | Sulfentrazone |
| S-597 | Trifludimoxazin | Flumioxazin |
| S-598 | Trifludimoxazin | Fomesafen |
| S-599 | Trifludimoxazin | Trifluralin |
| S-600 | Trifludimoxazin | Pendimethalin |
| S-601 | Trifludimoxazin | Metribuzin |
| S-602 | Trifludimoxazin | Mesotrione |
| S-603 | Trifludimoxazin | Tembotrione |
| S-604 | Trifludimoxazin | Bicyclopyrone |
| S-605 | Trifludimoxazin | Fenquinotrione |
| S-606 | Saflufenacil + trifludimoxazin | Isoxaflutole |
| S-607 | Saflufenacil + trifludimoxazin | Pyroxasulfone |
| S-608 | Saflufenacil + trifludimoxazin | Isoxaflutole + pyroxasulfone |
| S-609 | Saflufenacil + trifludimoxazin | Isoxaflutole + pyroxasulfone + imazethapyr |
| S-610 | Saflufenacil + trifludimoxazin | Isoxaflutole + pyroxasulfone + imazethapyr ammonium |
| S-611 | Saflufenacil + trifludimoxazin | Isoxaflutole + imazethapyr |
| S-612 | Saflufenacil + trifludimoxazin | Isoxaflutole + imazethapyr ammonium |
| S-613 | Saflufenacil + trifludimoxazin | Pyroxasulfone + imazethapyr |
| S-614 | Saflufenacil + trifludimoxazin | Pyroxasulfone + imazethapyr ammonium |
| S-615 | Saflufenacil + trifludimoxazin | Imazethapyr |
| S-616 | Saflufenacil + trifludimoxazin | Imazethapyr ammonium |
| S-617 | Saflufenacil + trifludimoxazin | Isoxaflutole + pyroxasulfone + imazapic |
| S-618 | Saflufenacil + trifludimoxazin | Isoxaflutole + pyroxasulfone + imazapic ammonium |
| S-619 | Saflufenacil + trifludimoxazin | Isoxaflutole + imazapic |
| S-620 | Saflufenacil + trifludimoxazin | Isoxaflutole + imazapic ammonium |
| S-621 | Saflufenacil + trifludimoxazin | Pyroxasulfone + imazapic |
| S-622 | Saflufenacil + trifludimoxazin | Pyroxasulfone + imazapic ammonium |
| S-623 | Saflufenacil + trifludimoxazin | Imazapic |
| S-624 | Saflufenacil + trifludimoxazin | Imazapic ammonium |
| S-625 | Saflufenacil + trifludimoxazin | Isoxaflutole + pyroxasulfone + imazaquin |
| S-626 | Saflufenacil + trifludimoxazin | Isoxaflutole + pyroxasulfone + imazaquin ammonium |
| S-627 | Saflufenacil + trifludimoxazin | Isoxaflutole + imazaquin |

(continued)

| Treatment combination | Pre-plant burn-down | Pre-emergence |
|---|---|---|
| S-628 | Saflufenacil + trifludimoxazin | Isoxaflutole + imazaquin ammonium |
| S-629 | Saflufenacil + trifludimoxazin | Pyroxasulfone + imazaquin |
| S-630 | Saflufenacil + trifludimoxazin | Pyroxasulfone + imazaquin ammonium |
| S-631 | Saflufenacil + trifludimoxazin | Imazaquin |
| S-632 | Saflufenacil + trifludimoxazin | Imazaquin ammonium |
| S-633 | Saflufenacil + trifludimoxazin | Isoxaflutole + mesotrione |
| S-634 | Saflufenacil + trifludimoxazin | Isoxaflutole + mesotrione + pyroxasulfone |
| S-635 | Saflufenacil + trifludimoxazin | Mesotrione + pyroxasulfone |
| S-636 | Saflufenacil + trifludimoxazin | Mesotrione + pyroxasulfone + imazethapyr |
| S-637 | Saflufenacil + trifludimoxazin | Mesotrione + pyroxasulfone + imazethapyr ammonium |
| S-638 | Saflufenacil + trifludimoxazin | Mesotrione + imazethapyr |
| S-639 | Saflufenacil + trifludimoxazin | Mesotrione + imazethapyr ammonium |
| S-640 | Saflufenacil + trifludimoxazin | Acetochlor |
| S-641 | Saflufenacil + trifludimoxazin | metolachlor |
| S-642 | Saflufenacil + trifludimoxazin | (S)-metolachlor |
| S-643 | Saflufenacil + trifludimoxazin | Dimethenamid |
| S-644 | Saflufenacil + trifludimoxazin | Dimethenamid-P |
| S-645 | Saflufenacil + trifludimoxazin | Pethoxamid |
| S-646 | Saflufenacil + trifludimoxazin | Cloransulam-methyl |
| S-647 | Saflufenacil + trifludimoxazin | Chlorimuron-ethyl |
| S-648 | Saflufenacil + trifludimoxazin | Thifensulfuron-methyl |
| S-649 | Saflufenacil + trifludimoxazin | Saflufenacil |
| S-650 | Saflufenacil + trifludimoxazin | Trifludimoxazin |
| S-651 | Saflufenacil + trifludimoxazin | Sulfentrazone |
| S-652 | Saflufenacil + trifludimoxazin | Flumioxazin |
| S-653 | Saflufenacil + trifludimoxazin | Fomesafen |
| S-654 | Saflufenacil + trifludimoxazin | Trifluralin |
| S-655 | Saflufenacil + trifludimoxazin | Pendimethalin |
| S-656 | Saflufenacil + trifludimoxazin | Metribuzin |
| S-657 | Saflufenacil + trifludimoxazin | Mesotrione |
| S-658 | Saflufenacil + trifludimoxazin | Tembotrione |
| S-659 | Saflufenacil + trifludimoxazin | Bicyclopyrone |
| S-660 | Saflufenacil + trifludimoxazin | Fenquinotrione |
| S-661 | Dicamba | Isoxaflutole |
| S-662 | Dicamba | Pyroxasulfone |
| S-663 | Dicamba | Isoxaflutole + pyroxasulfone |
| S-664 | Dicamba | Isoxaflutole + pyroxasulfone + imazethapyr |

(continued)

| Treatment combination | Pre-plant burn-down | Pre-emergence |
|---|---|---|
| S-665 | Dicamba | Isoxaflutole + pyroxasulfone + imazethapyr ammonium |
| S-666 | Dicamba | Isoxaflutole + imazethapyr |
| S-667 | Dicamba | Isoxaflutole + imazethapyr ammonium |
| S-668 | Dicamba | Pyroxasulfone + imazethapyr |
| S-669 | Dicamba | Pyroxasulfone + imazethapyr ammonium |
| S-670 | Dicamba | Imazethapyr |
| S-671 | Dicamba | Imazethapyr ammonium |
| S-672 | Dicamba | Isoxaflutole + pyroxasulfone + imazapic |
| S-673 | Dicamba | Isoxaflutole + pyroxasulfone + imazapic ammonium |
| S-674 | Dicamba | Isoxaflutole + imazapic |
| S-675 | Dicamba | Isoxaflutole + imazapic ammonium |
| S-676 | Dicamba | Pyroxasulfone + imazapic |
| S-677 | Dicamba | Pyroxasulfone + imazapic ammonium |
| S-678 | Dicamba | Imazapic |
| S-679 | Dicamba | Imazapic ammonium |
| S-680 | Dicamba | Isoxaflutole + pyroxasulfone + imazaquin |
| S-681 | Dicamba | Isoxaflutole + pyroxasulfone + imazaquin ammonium |
| S-682 | Dicamba | Isoxaflutole + imazaquin |
| S-683 | Dicamba | Isoxaflutole + imazaquin ammonium |
| S-684 | Dicamba | Pyroxasulfone + imazaquin |
| S-685 | Dicamba | Pyroxasulfone + imazaquin ammonium |
| S-686 | Dicamba | Imazaquin |
| S-687 | Dicamba | Imazaquin ammonium |
| S-688 | Dicamba | Isoxaflutole + mesotrione |
| S-689 | Dicamba | Isoxaflutole + mesotrione + pyroxasulfone |
| S-690 | Dicamba | Mesotrione + pyroxasulfone |
| S-691 | Dicamba | Mesotrione + pyroxasulfone + imazethapyr |
| S-692 | Dicamba | Mesotrione + pyroxasulfone + imazethapyr ammonium |
| S-693 | Dicamba | Mesotrione + imazethapyr |
| S-694 | Dicamba | Mesotrione + imazethapyr ammonium |
| S-695 | Dicamba | Acetochlor |
| S-696 | Dicamba | metolachlor |
| S-697 | Dicamba | (S)-metolachlor |
| S-698 | Dicamba | Dimethenamid |
| S-699 | Dicamba | Dimethenamid-P |
| S-700 | Dicamba | Pethoxamid |

(continued)

| Treatment combination | Pre-plant burn-down | Pre-emergence |
|---|---|---|
| S-701 | Dicamba | Cloransulam-methyl |
| S-702 | Dicamba | Chlorimuron-ethyl |
| S-703 | Dicamba | Thifensulfuron-methyl |
| S-704 | Dicamba | Saflufenacil |
| S-705 | Dicamba | Trifludimoxazin |
| S-706 | Dicamba | Sulfentrazone |
| S-707 | Dicamba | Flumioxazin |
| S-708 | Dicamba | Fomesafen |
| S-709 | Dicamba | Trifluralin |
| S-710 | Dicamba | Pendimethalin |
| S-711 | Dicamba | Metribuzin |
| S-712 | Dicamba | Mesotrione |
| S-713 | Dicamba | Tembotrione |
| S-714 | Dicamba | Bicyclopyrone |
| S-715 | Dicamba | Fenquinotrione |
| S-716 | Dicamba ethanolamine salt | Isoxaflutole |
| S-717 | Dicamba ethanolamine salt | Pyroxasulfone |
| S-718 | Dicamba ethanolamine salt | Isoxaflutole + pyroxasulfone |
| S-719 | Dicamba ethanolamine salt | Isoxaflutole + pyroxasulfone + imazethapyr |
| S-720 | Dicamba ethanolamine salt | Isoxaflutole + pyroxasulfone + imazethapyr ammonium |
| S-721 | Dicamba ethanolamine salt | Isoxaflutole + imazethapyr |
| S-722 | Dicamba ethanolamine salt | Isoxaflutole + imazethapyr ammonium |
| S-723 | Dicamba ethanolamine salt | Pyroxasulfone + imazethapyr |
| S-724 | Dicamba ethanolamine salt | Pyroxasulfone + imazethapyr ammonium |
| S-725 | Dicamba ethanolamine salt | Imazethapyr |
| S-726 | Dicamba ethanolamine salt | Imazethapyr ammonium |
| S-727 | Dicamba ethanolamine salt | Isoxaflutole + pyroxasulfone + imazapic |
| S-728 | Dicamba ethanolamine salt | Isoxaflutole + pyroxasulfone + imazapic ammonium |
| S-729 | Dicamba ethanolamine salt | Isoxaflutole + imazapic |
| S-730 | Dicamba ethanolamine salt | Isoxaflutole + imazapic ammonium |
| S-731 | Dicamba ethanolamine salt | Pyroxasulfone + imazapic |
| S-732 | Dicamba ethanolamine salt | Pyroxasulfone + imazapic ammonium |
| S-733 | Dicamba ethanolamine salt | Imazapic |
| S-734 | Dicamba ethanolamine salt | Imazapic ammonium |
| S-735 | Dicamba ethanolamine salt | Isoxaflutole + pyroxasulfone + imazaquin |
| S-736 | Dicamba ethanolamine salt | Isoxaflutole + pyroxasulfone + imazaquin ammonium |
| S-737 | Dicamba ethanolamine salt | Isoxaflutole + imazaquin |

(continued)

| Treatment combination | Pre-plant burn-down | Pre-emergence |
|---|---|---|
| S-738 | Dicamba ethanolamine salt | Isoxaflutole + imazaquin ammonium |
| S-739 | Dicamba ethanolamine salt | Pyroxasulfone + imazaquin |
| S-740 | Dicamba ethanolamine salt | Pyroxasulfone + imazaquin ammonium |
| S-741 | Dicamba ethanolamine salt | Imazaquin |
| S-742 | Dicamba ethanolamine salt | Imazaquin ammonium |
| S-743 | Dicamba ethanolamine salt | Isoxaflutole + mesotrione |
| S-744 | Dicamba ethanolamine salt | Isoxaflutole + mesotrione + pyroxasulfone |
| S-745 | Dicamba ethanolamine salt | Mesotrione + pyroxasulfone |
| S-746 | Dicamba ethanolamine salt | Mesotrione + pyroxasulfone + imazethapyr |
| S-747 | Dicamba ethanolamine salt | Mesotrione + pyroxasulfone + imazethapyr ammonium |
| S-748 | Dicamba ethanolamine salt | Mesotrione + imazethapyr |
| S-749 | Dicamba ethanolamine salt | Mesotrione + imazethapyr ammonium |
| S-750 | Dicamba ethanolamine salt | Acetochlor |
| S-751 | Dicamba ethanolamine salt | metolachlor |
| S-752 | Dicamba ethanolamine salt | (S)-metolachlor |
| S-753 | Dicamba ethanolamine salt | Dimethenamid |
| S-754 | Dicamba ethanolamine salt | Dimethenamid-P |
| S-755 | Dicamba ethanolamine salt | Pethoxamid |
| S-756 | Dicamba ethanolamine salt | Cloransulam-methyl |
| S-757 | Dicamba ethanolamine salt | Chlorimuron-ethyl |
| S-758 | Dicamba ethanolamine salt | Thifensulfuron-methyl |
| S-759 | Dicamba ethanolamine salt | Saflufenacil |
| S-760 | Dicamba ethanolamine salt | Trifludimoxazin |
| S-761 | Dicamba ethanolamine salt | Sulfentrazone |
| S-762 | Dicamba ethanolamine salt | Flumioxazin |
| S-763 | Dicamba ethanolamine salt | Fomesafen |
| S-764 | Dicamba ethanolamine salt | Trifluralin |
| S-765 | Dicamba ethanolamine salt | Pendimethalin |
| S-766 | Dicamba ethanolamine salt | Metribuzin |
| S-767 | Dicamba ethanolamine salt | Mesotrione |
| S-768 | Dicamba ethanolamine salt | Tembotrione |
| S-769 | Dicamba ethanolamine salt | Bicyclopyrone |
| S-770 | Dicamba ethanolamine salt | Fenquinotrione |
| S-771 | Dicamba diglycolamine salt | Isoxaflutole |
| S-772 | Dicamba diglycolamine salt | Pyroxasulfone |
| S-773 | Dicamba diglycolamine salt | Isoxaflutole + pyroxasulfone |
| S-774 | Dicamba diglycolamine salt | Isoxaflutole + pyroxasulfone + imazethapyr |

(continued)

| Treatment combination | Pre-plant burn-down | Pre-emergence |
|---|---|---|
| S-775 | Dicamba diglycolamine salt | Isoxaflutole + pyroxasulfone + imazethapyr ammonium |
| S-776 | Dicamba diglycolamine salt | Isoxaflutole + imazethapyr |
| S-777 | Dicamba diglycolamine salt | Isoxaflutole + imazethapyr ammonium |
| S-778 | Dicamba diglycolamine salt | Pyroxasulfone + imazethapyr |
| S-779 | Dicamba diglycolamine salt | Pyroxasulfone + imazethapyr ammonium |
| S-780 | Dicamba diglycolamine salt | Imazethapyr |
| S-781 | Dicamba diglycolamine salt | Imazethapyr ammonium |
| S-782 | Dicamba diglycolamine salt | Isoxaflutole + pyroxasulfone + imazapic |
| S-783 | Dicamba diglycolamine salt | Isoxaflutole + pyroxasulfone + imazapic ammonium |
| S-784 | Dicamba diglycolamine salt | Isoxaflutole + imazapic |
| S-785 | Dicamba diglycolamine salt | Isoxaflutole + imazapic ammonium |
| S-786 | Dicamba diglycolamine salt | Pyroxasulfone + imazapic |
| S-787 | Dicamba diglycolamine salt | Pyroxasulfone + imazapic ammonium |
| S-788 | Dicamba diglycolamine salt | Imazapic |
| S-789 | Dicamba diglycolamine salt | Imazapic ammonium |
| S-790 | Dicamba diglycolamine salt | Isoxaflutole + pyroxasulfone + imazaquin |
| S-791 | Dicamba diglycolamine salt | Isoxaflutole + pyroxasulfone + imazaquin ammonium |
| S-792 | Dicamba diglycolamine salt | Isoxaflutole + imazaquin |
| S-793 | Dicamba diglycolamine salt | Isoxaflutole + imazaquin ammonium |
| S-794 | Dicamba diglycolamine salt | Pyroxasulfone + imazaquin |
| S-795 | Dicamba diglycolamine salt | Pyroxasulfone + imazaquin ammonium |
| S-796 | Dicamba diglycolamine salt | Imazaquin |
| S-797 | Dicamba diglycolamine salt | Imazaquin ammonium |
| S-798 | Dicamba diglycolamine salt | Isoxaflutole + mesotrione |
| S-799 | Dicamba diglycolamine salt | Isoxaflutole + mesotrione + pyroxasulfone |
| S-800 | Dicamba diglycolamine salt | Mesotrione + pyroxasulfone |
| S-801 | Dicamba diglycolamine salt | Mesotrione + pyroxasulfone + imazethapyr |
| S-802 | Dicamba diglycolamine salt | Mesotrione + pyroxasulfone + imazethapyr ammonium |
| S-803 | Dicamba diglycolamine salt | Mesotrione + imazethapyr |
| S-804 | Dicamba diglycolamine salt | Mesotrione + imazethapyr ammonium |
| S-805 | Dicamba diglycolamine salt | Acetochlor |
| S-806 | Dicamba diglycolamine salt | metolachlor |
| S-807 | Dicamba diglycolamine salt | (S)-metolachlor |
| S-808 | Dicamba diglycolamine salt | Dimethenamid |
| S-809 | Dicamba diglycolamine salt | Dimethenamid-P |
| S-810 | Dicamba diglycolamine salt | Pethoxamid |

(continued)

| Treatment combination | Pre-plant burn-down | Pre-emergence |
|---|---|---|
| S-811 | Dicamba diglycolamine salt | Cloransulam-methyl |
| S-812 | Dicamba diglycolamine salt | Chlorimuron-ethyl |
| S-813 | Dicamba diglycolamine salt | Thifensulfuron-methyl |
| S-814 | Dicamba diglycolamine salt | Saflufenacil |
| S-815 | Dicamba diglycolamine salt | Trifludimoxazin |
| S-816 | Dicamba diglycolamine salt | Sulfentrazone |
| S-817 | Dicamba diglycolamine salt | Flumioxazin |
| S-818 | Dicamba diglycolamine salt | Fomesafen |
| S-819 | Dicamba diglycolamine salt | Trifluralin |
| S-820 | Dicamba diglycolamine salt | Pendimethalin |
| S-821 | Dicamba diglycolamine salt | Metribuzin |
| S-822 | Dicamba diglycolamine salt | Mesotrione |
| S-823 | Dicamba diglycolamine salt | Tembotrione |
| S-824 | Dicamba diglycolamine salt | Bicyclopyrone |
| S-825 | Dicamba diglycolamine salt | Fenquinotrione |
| S-826 | Dicamba potassium | Isoxaflutole |
| S-827 | Dicamba potassium | Pyroxasulfone |
| S-828 | Dicamba potassium | Isoxaflutole + pyroxasulfone |
| S-829 | Dicamba potassium | Isoxaflutole + pyroxasulfone + imazethapyr |
| S-830 | Dicamba potassium | Isoxaflutole + pyroxasulfone + imazethapyr ammonium |
| S-831 | Dicamba potassium | Isoxaflutole + imazethapyr |
| S-832 | Dicamba potassium | Isoxaflutole + imazethapyr ammonium |
| S-833 | Dicamba potassium | Pyroxasulfone + imazethapyr |
| S-834 | Dicamba potassium | Pyroxasulfone + imazethapyr ammonium |
| S-835 | Dicamba potassium | Imazethapyr |
| S-836 | Dicamba potassium | Imazethapyr ammonium |
| S-837 | Dicamba potassium | Isoxaflutole + pyroxasulfone + imazapic |
| S-838 | Dicamba potassium | Isoxaflutole + pyroxasulfone + imazapic ammonium |
| S-839 | Dicamba potassium | Isoxaflutole + imazapic |
| S-840 | Dicamba potassium | Isoxaflutole + imazapic ammonium |
| S-841 | Dicamba potassium | Pyroxasulfone + imazapic |
| S-842 | Dicamba potassium | Pyroxasulfone + imazapic ammonium |
| S-843 | Dicamba potassium | Imazapic |
| S-844 | Dicamba potassium | Imazapic ammonium |
| S-845 | Dicamba potassium | Isoxaflutole + pyroxasulfone + imazaquin |
| S-846 | Dicamba potassium | Isoxaflutole + pyroxasulfone + imazaquin ammonium |
| S-847 | Dicamba potassium | Isoxaflutole + imazaquin |

(continued)

| Treatment combination | Pre-plant burn-down | Pre-emergence |
|---|---|---|
| S-848 | Dicamba potassium | Isoxaflutole + imazaquin ammonium |
| S-849 | Dicamba potassium | Pyroxasulfone + imazaquin |
| S-850 | Dicamba potassium | Pyroxasulfone + imazaquin ammonium |
| S-851 | Dicamba potassium | Imazaquin |
| S-852 | Dicamba potassium | Imazaquin ammonium |
| S-853 | Dicamba potassium | Isoxaflutole + mesotrione |
| S-854 | Dicamba potassium | Isoxaflutole + mesotrione + pyroxasulfone |
| S-855 | Dicamba potassium | Mesotrione + pyroxasulfone |
| S-856 | Dicamba potassium | Mesotrione + pyroxasulfone + imazethapyr |
| S-857 | Dicamba potassium | Mesotrione + pyroxasulfone + imazethapyr ammonium |
| S-858 | Dicamba potassium | Mesotrione + imazethapyr |
| S-859 | Dicamba potassium | Mesotrione + imazethapyr ammonium |
| S-860 | Dicamba potassium | Acetochlor |
| S-861 | Dicamba potassium | metolachlor |
| S-862 | Dicamba potassium | (S)-metolachlor |
| S-863 | Dicamba potassium | Dimethenamid |
| S-864 | Dicamba potassium | Dimethenamid-P |
| S-865 | Dicamba potassium | Pethoxamid |
| S-866 | Dicamba potassium | Cloransulam-methyl |
| S-867 | Dicamba potassium | Chlorimuron-ethyl |
| S-868 | Dicamba potassium | Thifensulfuron-methyl |
| S-869 | Dicamba potassium | Saflufenacil |
| S-870 | Dicamba potassium | Trifludimoxazin |
| S-871 | Dicamba potassium | Sulfentrazone |
| S-872 | Dicamba potassium | Flumioxazin |
| S-873 | Dicamba potassium | Fomesafen |
| S-874 | Dicamba potassium | Trifluralin |
| S-875 | Dicamba potassium | Pendimethalin |
| S-876 | Dicamba potassium | Metribuzin |
| S-877 | Dicamba potassium | Mesotrione |
| S-878 | Dicamba potassium | Tembotrione |
| S-879 | Dicamba potassium | Bicyclopyrone |
| S-880 | Dicamba potassium | Fenquinotrione |
| S-881 | Dicamba BAPMA salt | Isoxaflutole |
| S-882 | Dicamba BAPMA salt | Pyroxasulfone |
| S-883 | Dicamba BAPMA salt | Isoxaflutole + pyroxasulfone |
| S-884 | Dicamba BAPMA salt | Isoxaflutole + pyroxasulfone + imazethapyr |

(continued)

| Treatment combination | Pre-plant burn-down | Pre-emergence |
|---|---|---|
| S-885 | Dicamba BAPMA salt | Isoxaflutole + pyroxasulfone + imazethapyr ammonium |
| S-886 | Dicamba BAPMA salt | Isoxaflutole + imazethapyr |
| S-887 | Dicamba BAPMA salt | Isoxaflutole + imazethapyr ammonium |
| S-888 | Dicamba BAPMA salt | Pyroxasulfone + imazethapyr |
| S-889 | Dicamba BAPMA salt | Pyroxasulfone + imazethapyr ammonium |
| S-890 | Dicamba BAPMA salt | Imazethapyr |
| S-891 | Dicamba BAPMA salt | Imazethapyr ammonium |
| S-892 | Dicamba BAPMA salt | Isoxaflutole + pyroxasulfone + imazapic |
| S-893 | Dicamba BAPMA salt | Isoxaflutole + pyroxasulfone + imazapic ammonium |
| S-894 | Dicamba BAPMA salt | Isoxaflutole + imazapic |
| S-895 | Dicamba BAPMA salt | Isoxaflutole + imazapic ammonium |
| S-896 | Dicamba BAPMA salt | Pyroxasulfone + imazapic |
| S-897 | Dicamba BAPMA salt | Pyroxasulfone + imazapic ammonium |
| S-898 | Dicamba BAPMA salt | Imazapic |
| S-899 | Dicamba BAPMA salt | Imazapic ammonium |
| S-900 | Dicamba BAPMA salt | Isoxaflutole + pyroxasulfone + imazaquin |
| S-901 | Dicamba BAPMA salt | Isoxaflutole + pyroxasulfone + imazaquin ammonium |
| S-902 | Dicamba BAPMA salt | Isoxaflutole + imazaquin |
| S-903 | Dicamba BAPMA salt | Isoxaflutole + imazaquin ammonium |
| S-904 | Dicamba BAPMA salt | Pyroxasulfone + imazaquin |
| S-905 | Dicamba BAPMA salt | Pyroxasulfone + imazaquin ammonium |
| S-906 | Dicamba BAPMA salt | Imazaquin |
| S-907 | Dicamba BAPMA salt | Imazaquin ammonium |
| S-908 | Dicamba BAPMA salt | Isoxaflutole + mesotrione |
| S-909 | Dicamba BAPMA salt | Isoxaflutole + mesotrione + pyroxasulfone |
| S-910 | Dicamba BAPMA salt | Mesotrione + pyroxasulfone |
| S-911 | Dicamba BAPMA salt | Mesotrione + pyroxasulfone + imazethapyr |
| S-912 | Dicamba BAPMA salt | Mesotrione + pyroxasulfone + imazethapyr ammonium |
| S-913 | Dicamba BAPMA salt | Mesotrione + imazethapyr |
| S-914 | Dicamba BAPMA salt | Mesotrione + imazethapyr ammonium |
| S-915 | Dicamba BAPMA salt | Acetochlor |
| S-916 | Dicamba BAPMA salt | metolachlor |
| S-917 | Dicamba BAPMA salt | (S)-metolachlor |
| S-918 | Dicamba BAPMA salt | Dimethenamid |
| S-919 | Dicamba BAPMA salt | Dimethenamid-P |
| S-920 | Dicamba BAPMA salt | Pethoxamid |

(continued)

| Treatment combination | Pre-plant burn-down | Pre-emergence |
|---|---|---|
| S-921 | Dicamba BAPMA salt | Cloransulam-methyl |
| S-922 | Dicamba BAPMA salt | Chlorimuron-ethyl |
| S-923 | Dicamba BAPMA salt | Thifensulfuron-methyl |
| S-924 | Dicamba BAPMA salt | Saflufenacil |
| S-925 | Dicamba BAPMA salt | Trifludimoxazin |
| S-926 | Dicamba BAPMA salt | Sulfentrazone |
| S-927 | Dicamba BAPMA salt | Flumioxazin |
| S-928 | Dicamba BAPMA salt | Fomesafen |
| S-929 | Dicamba BAPMA salt | Trifluralin |
| S-930 | Dicamba BAPMA salt | Pendimethalin |
| S-931 | Dicamba BAPMA salt | Metribuzin |
| S-932 | Dicamba BAPMA salt | Mesotrione |
| S-933 | Dicamba BAPMA salt | Tembotrione |
| S-934 | Dicamba BAPMA salt | Bicyclopyrone |
| S-935 | Dicamba BAPMA salt | Fenquinotrione |
| S-936 | - | Isoxaflutole |
| S-937 | - | Pyroxasulfone |
| S-938 | - | Isoxaflutole + pyroxasulfone |
| S-939 | - | Isoxaflutole + pyroxasulfone + imazethapyr |
| S-940 | - | Isoxaflutole + pyroxasulfone + imazethapyr ammonium |
| S-941 | - | Isoxaflutole + imazethapyr |
| S-942 | - | Isoxaflutole + imazethapyr ammonium |
| S-943 | - | Pyroxasulfone + imazethapyr |
| S-944 | - | Pyroxasulfone + imazethapyr ammonium |
| S-945 | - | Imazethapyr |
| S-946 | - | Imazethapyr ammonium |
| S-947 | - | Isoxaflutole + pyroxasulfone + imazapic |
| S-948 | - | Isoxaflutole + pyroxasulfone + imazapic ammonium |
| S-949 | - | Isoxaflutole + imazapic |
| S-950 | - | Isoxaflutole + imazapic ammonium |
| S-951 | - | Pyroxasulfone + imazapic |
| S-952 | - | Pyroxasulfone + imazapic ammonium |
| S-953 | - | Imazapic |
| S-954 | - | Imazapic ammonium |
| S-955 | - | Isoxaflutole + pyroxasulfone + imazaquin |
| S-956 | - | Isoxaflutole + pyroxasulfone + imazaquin ammonium |
| S-957 | - | Isoxaflutole + imazaquin |

(continued)

| Treatment combination | Pre-plant burn-down | Pre-emergence |
|---|---|---|
| S-958 | - | Isoxaflutole + imazaquin ammonium |
| S-959 | - | Pyroxasulfone + imazaquin |
| S-960 | - | Pyroxasulfone + imazaquin ammonium |
| S-961 | - | Imazaquin |
| S-962 | - | Imazaquin ammonium |
| S-963 | - | Isoxaflutole + mesotrione |
| S-964 | - | Isoxaflutole + mesotrione + pyroxasulfone |
| S-965 | - | Mesotrione + pyroxasulfone |
| S-966 | - | Mesotrione + pyroxasulfone + imazethapyr |
| S-967 | - | Mesotrione + pyroxasulfone + imazethapyr ammonium |
| S-968 | - | Mesotrione + imazethapyr |
| S-969 | - | Mesotrione + imazethapyr ammonium |
| S-970 | - | Acetochlor |
| S-971 | - | metolachlor |
| S-972 | - | (S)-metolachlor |
| S-973 | - | Dimethenamid |
| S-974 | - | Dimethenamid-P |
| S-975 | - | Pethoxamid |
| S-976 | - | Cloransulam-methyl |
| S-977 | - | Chlorimuron-ethyl |
| S-978 | - | Thifensulfuron-methyl |
| S-979 | - | Saflufenacil |
| S-980 | - | Trifludimoxazin |
| S-981 | - | Sulfentrazone |
| S-982 | - | Flumioxazin |
| S-983 | - | Fomesafen |
| S-984 | - | Trifluralin |
| S-985 | - | Pendimethalin |
| S-986 | - | Metribuzin |
| S-987 | - | Mesotrione |
| S-988 | - | Tembotrione |
| S-989 | - | Bicyclopyrone |
| S-990 | - | Fenquinotrione |
| S-991 | Glufosinate | - |
| S-992 | Glufosinate ammonium | - |
| S-993 | L-Glufosinate | - |
| S-994 | L-Glufosinate ammonium | - |

(continued)

| Treatment combination | Pre-plant burn-down | Pre-emergence |
|---|---|---|
| S-995 | L-Glufosinate sodium | - |
| S-996 | Glyphosate | - |
| S-997 | Glyphosate dimethylammonium | - |
| S-998 | Glyphosate potassium | - |
| S-999 | Glyphosate isopropylammonium | - |
| S-1000 | Saflufenacil | - |
| S-1001 | Trifludimoxazin | - |
| S-1002 | Saflufenacil + trifludimoxazin | - |
| S-1003 | Dicamba | - |
| S-1004 | Dicamba ethanolamine salt | - |
| S-1005 | Dicamba diglycolamine salt | - |
| S-1006 | Dicamba potassium | - |
| S-1007 | Dicamba BAPMA salt | - |

The soybean treatment combinations S2.1 to S2.1007 in which one of the soybean treatment combinations listed in the preceeding table is combined with post-emergence use of glufosinate ammonium.

The soybean treatment combinations S3.1 to S3.1007 in which one of the soybean treatment combinations listed in the preceeding table is combined with post-emergence use of L-glufosinate.

The soybean treatment combinations S4.1 to S4.1007 in which one of the soybean treatment combinations listed in the preceeding table is combined with post-emergence use of L-glufosinate ammonium.

The soybean treatment combinations S5.1 to S5.1007 in which one of the soybean treatment combinations listed in the preceeding table is combined with post-emergence use of L-glufosinate sodium.

The soybean treatment combinations S6.1 to S6.1007 in which one of the soybean treatment combinations listed in the preceeding table is combined with post-emergence use of glyphosate.

The soybean treatment combinations S7.1 to S7.1007 in which one of the soybean treatment combinations listed in the preceeding table is combined with post-emergence use of glyphosate dimethylammonium.

The soybean treatment combinations S8.1 to S8.1007 in which one of the soybean treatment combinations listed in the preceeding table is combined with post-emergence use of glyphosate potassium.

The soybean treatment combinations S9.1 to S9.1007 in which one of the soybean treatment combinations listed in the preceeding table is combined with post-emergence use of glyphosate isopropylammonium.

The soybean treatment combinations S10.1 to S10.1007 in which one of the soybean treatment combinations listed in the preceeding table is combined with post-emergence use of imazamox.

The soybean treatment combinations S11.1 to S11.1007 in which one of the soybean treatment combinations listed in the preceeding table is combined with post-emergence use of imazamox ammonium.

The soybean treatment combinations S12.1 to S12.1007 in which one of the soybean treatment combinations listed in the preceeding table is combined with post-emergence use of imazethapyr.

The soybean treatment combinations S13.1 to S13.1007 in which one of the soybean treatment combinations listed in the preceeding table is combined with post-emergence use of imazethapyr ammonium.

The soybean treatment combinations S14.1 to S14.1007 in which one of the soybean treatment combinations listed in the preceeding table is combined with post-emergence use of bentazone.

The soybean treatment combinations S15.1 to S15.1007 in which one of the soybean treatment combinations listed in the preceeding table is combined with post-emergence use of bentazone sodium.

The soybean treatment combinations S16.1 to S16.1007 in which one of the soybean treatment combinations listed in the preceeding table is combined with post-emergence use of isoxaflutole.

The soybean treatment combinations S17.1 to S17.1007 in which one of the soybean treatment combinations listed in the preceeding table is combined with post-emergence use of topramezone.

The soybean treatment combinations S18.1 to S18.1007 in which one of the soybean treatment combinations listed in the preceeding table is combined with post-emergence use of mesotrione.

The soybean treatment combinations S19.1 to S19.1007 in which one of the soybean treatment combinations listed in the preceeding table is combined with post-emergence use of tolpyralate.

The soybean treatment combinations S20.1 to S20.1007 in which one of the soybean treatment combinations listed in the preceeding table is combined with post-emergence use of isoxaflutole and mesotrione.

The soybean treatment combinations S21.1 to S21.1007 in which one of the soybean treatment combinations listed in the preceeding table is combined with post-emergence use of isoxaflutole and topramezone.

The soybean treatment combinations S22.1 to S22.1007 in which one of the soybean treatment combinations listed in the preceeding table is combined with post-emergence use of isoxaflutole and tolpyralate.

The soybean treatment combinations S23.1 to S23.1007 in which one of the soybean treatment combinations listed in the preceeding table is combined with post-emergence use of mesotrione and topramezone.

The soybean treatment combinations S24.1 to S24.1007 in which one of the soybean treatment combinations listed in the preceeding table is combined with post-emergence use of tembotrione.

The soybean treatment combinations S25.1 to S25.1007 in which one of the soybean treatment combinations listed in the preceeding table is combined with post-emergence use of bicyclopyrone.

The soybean treatment combinations S26.1 to S26.1007 in which one of the soybean treatment combinations listed in the preceeding table is combined with post-emergence use of fenquinotrione.

The soybean treatment combinations S27.1 to S27.1007 in which one of the soybean treatment combinations listed in the preceeding table is combined with post-emergence use of carfentrazone-ethyl.

The soybean treatment combinations S28.1 to S28.1007 in which one of the soybean treatment combinations listed in the preceeding table is combined with post-emergence use of saflufenacil.

The soybean treatment combinations S29.1 to S29.1007 in which one of the soybean treatment combinations listed in the preceeding table is combined with post-emergence use of sulfentrazone.

The soybean treatment combinations S30.1 to S30.1007 in which one of the soybean treatment combinations listed in the preceeding table is combined with post-emergence use of trifludimoxazin.

The soybean treatment combinations S31.1 to S31.1007 in which one of the soybean treatment combinations listed in the preceeding table is combined with post-emergence use of saflufenacil and trifludimoxazin.

The soybean treatment combinations S32.1 to S32.1007 in which one of the soybean treatment combinations listed in the preceeding table is combined with post-emergence use of pyraflufen-ethyl.

The soybean treatment combinations S33.1 to S33.1007 in which one of the soybean treatment combinations listed in the preceeding table is combined with post-emergence use of tiafenacil.

The soybean treatment combinations S34.1 to S34.1007 in which one of the soybean treatment combinations listed in the preceeding table is combined with post-emergence use of ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6, S-3100).

The soybean treatment combinations S35.1 to S35.1007 in which one of the soybean treatment combinations listed in the preceeding table is combined with post-emergence use of pyroxasulfone.

The soybean treatment combinations S36.1 to S36.1007 in which one of the soybean treatment combinations listed in the preceeding table is combined with post-emergence use of isoxaflutole and pyroxasulfone.

The soybean treatment combinations S37.1 to S37.1007 in which one of the soybean treatment combinations listed in the preceeding table is combined with post-emergence use of isoxaflutole, pyroxasulfone and imazethapyr.

The soybean treatment combinations S38.1 to S38.1007 in which one of the soybean treatment combinations listed in the preceeding table is combined with post-emergence use of isoxaflutole, pyroxasulfone and imazethapyr ammonium.

The soybean treatment combinations S39.1 to S39.1007 in which one of the soybean treatment combinations listed in the preceeding table is combined with post-emergence use of isoxaflutole, pyroxasulfone and imazamox.

The soybean treatment combinations S40.1 to S40.1007 in which one of the soybean treatment combinations listed in the preceeding table is combined with post-emergence use of isoxaflutole, pyroxasulfone and imazamox ammonium.

The soybean treatment combinations S41.1 to S41.1007 in which one of the soybean treatment combinations listed in the preceeding table is combined with post-emergence use of isoxaflutole, mesotrione and pyroxasulfone.

The soybean treatment combinations S42.1 to S42.1007 in which one of the soybean treatment combinations listed in the preceeding table is combined with post-emergence use of mesotrione and pyroxasulfone.

The soybean treatment combinations S43.1 to S43.1007 in which one of the soybean treatment combinations listed in the preceeding table is combined with post-emergence use of topramezone and pyroxasulfone.

The soybean treatment combinations S44.1 to S44.1007 in which one of the soybean treatment combinations listed in the preceeding table is combined with post-emergence use of pyroxasulfone and imazamox.

The soybean treatment combinations S45.1 to S45.1007 in which one of the soybean treatment combinations listed in the preceeding table is combined with post-emergence use of pyroxasulfone and imazamox ammonium.

The soybean treatment combinations S46.1 to S46.1007 in which one of the soybean treatment combinations listed in the preceeding table is combined with post-emergence use of 2,4-D.

The soybean treatment combinations S47.1 to S47.1007 in which one of the soybean treatment combinations listed in the preceeding table is combined with post-emergence use of 2,4-D choline salt.

The soybean treatment combinations S48.1 to SS48.1007 in which one of the soybean treatment combinations listed in the preceeding table is combined with post-emergence use of dicamba.

The soybean treatment combinations S49.1 to S49.1007 in which one of the soybean treatment combinations listed in the preceeding table is combined with post-emergence use of dicamba ethanolamine salt.

The soybean treatment combinations S50.1 to S50.1007 in which one of the soybean treatment combinations listed in the preceeding table is combined with post-emergence use of dicamba diglycolamine salt.

The soybean treatment combinations S51.1 to S51.1007 in which one of the soybean treatment combinations listed in the preceeding table is combined with post-emergence use of dicamba potassium.

The soybean treatment combinations S52.1 to S52.1007 in which one of the soybean treatment combinations listed in the preceeding table is combined with post-emergence use of dicamba BAPMA salt.

Also in particular, the active compounds of the inventive mixtures and further herbicides can be used in any of the cotton treatment combinations outlined below that consist of pre-plant burn down, pre-emergence, post-emergence and pre-harvest desiccation/defoliation treatments. These treatment combinations can be particularly suitable if the cotton crop, besides being HPPD tolerant, is tolerant to the action of one or more herbicides present in the treatment combination, including tolerance that is a result of breeding and/or genetic modification. Such tolerant plants include glufosinate tolerant cotton, glyphosate tolerant cotton and cotton that is tolerant to auxin herbicides (e. g. 2,4-D, dicamba) and/or PPO herbicides (e. g. carfentrazone-ethyl, saflufenacil, sulfentrazone, trifludimoxazin, pyraflufen-ethyl, oxyfluorfen). For post-emergence treatments, it is also possible to avoid direct contact between the herbicide spray solution and the cotton crop by means of shielding or directed spray; this can be particularly suitable for, amongst others, L-glufosinate and herbicides that are PSI inhibitors (e. g. fluometuron, thidiazuron, diuron), ALS inhibitors (e. g. pyrithiobac sodium) or PPO inhibitors (e. g. carfentrazone-ethyl, saflufenacil, sulfentrazone, trifludimoxazin, sulfentrazone, pyraflufen-ethyl, oxyfluorfen). The following active compounds of the inventive mixtures and further herbicides are particularly suitable as pre-plant burn-down weed control components in such cotton treatment combinations: Glufosinate, glufosinate ammonium, glufosinate sodium, L-glufosinate, L-glufosinate ammonium, L-glufosinate sodium, glyphosate, glyphosate dimethylammonium, glyphosate potassium, glyphosate isopropylammonium, paraquat, trifludimoxazin, saflufenacil, 2,4-D, 2,4-D choline salt, dicamba, dicamba ethanolamine salt, dicamba diglycolamine salt, dicamba potassium and dicamba BAPMA salt (i. e. dicamba N,N-bis(3-aminopropyl)methylamine salt).

The following active compounds of the inventive mixtures and further herbicides are particularly suitable as pre-emergence weed control components in such cotton treatment combinations: isoxaflutole, pyroxasulfone, isoxaflutole/pyroxasulfone, isoxaflutole/pyroxasulfone/imazethapyr, isoxaflutole/pyroxasulfone/imazethapyr ammonium, isoxaflutole/pyroxasulfone/imazapic, isoxaflutole/pyroxasulfone/imazapic ammonium, isoxaflutole/pyroxasulfone/imazaquin, isoxaflutole/pyroxasulfone/imazaquin ammonium, isoxaflutole/mesotrione, isoxaflutole/mesotrione/pyroxasulfone, mesotrione/pyroxasulfone, pyroxasulfone/imazethapyr, pyroxasulfone/imazethapyr ammonium, isoxaflutole/imazethapyr, isoxaflutole/imazethapyr ammonium, mesotrione/imazethapyr, mesotrione/imazethapyr ammonium, prometryne, fluometuron, thidiazuron, diuron, acetochlor, metolachlor, (S)-metolachlor, dimethenamid, dimethenamid-P, clomazone, pendimethalin, trifluralin, fomesafen, oxyfluorfen, trifludimoxazin, saflufenacil, saflufenacil/trifludimoxazin, flumioxazin, sulfentrazone, bicyclopyrone, tembotrione and mesotrione.

The following active compounds of the inventive mixtures and further herbicides are particularly suitable as post-emergence weed control components in such cotton treatment combinations: Glufosinate, glufosinate ammonium, glufosinate sodium, L-glufosinate, L-glufosinate ammonium, L-glufosinate sodium, glyphosate, glyphosate dimethylammonium, glyphosate potassium, glyphosate isopropylammonium, imazamox, imazamox ammnonium, imazethapyr, imazethapyr ammonium, pyrithiobac sodium, acetochlor, metolachlor, (S)-metolachlor, dimethenamid, dimethenamid-P, pyroxasulfone, isoxaflutole, topramezone, bicyclopyrone, tembotrione, mesotrione, isoxaflutole/mesotrione, isoxaflutole/topramezone, mesotrione/topramezone, isoxaflutole/tolpyralate, fenquinotrione, tolpyralate, carfentrazone-ethyl, saflufenacil, sulfentrazone, trifludimoxazin, saflufenacil/trifludimoxazin, pyraflufen-ethyl, fluthiacet-methyl, tiafenacil, oxyfluorfen, fomesafen, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6, S-3100), isoxaflutole/pyroxasulfone, isoxaflutole/pyroxasulfone/imazethapyr, isoxaflutole/pyroxasulfone/imazethapyr ammonium, isoxaflutole/pyroxasulfone/imazamox, isoxaflutole/pyroxasulfone/imazamox ammonium, isoxaflutole/mesotrione/pyroxasulfone, mesotrione/pyroxasulfone, topramezone/pyroxasulfone, pyroxasulfone/imazamox, pyroxasulfone/imazamox ammonium, clethodim, cycloxydim, sethoxydim, tepraloxydim, 2,4-D, 2,4-D choline salt, dicamba, dicamba sodium, dicamba ethanolamine salt, dicamba diglycolamine salt, dicamba potassium and dicamba BAPMA salt.

The following active compounds of the inventive mixtures and further herbicides are particularly suitable as pre-harvest desiccation/defoliation components in such cotton treatment combinations: ethephon, cyclanilide, thidiazuron, diuron, tribufos, carfentrazone-ethyl, saflufenacil, trifludimoxazin, pyraflufen-ethyl, flumiclorac-pentyl, fluthiacet-methyl.

Particularly suitable cotton treatment combinations of active compounds of the inventive mixtures and further herbicides are:

The cotton treatment combinations C1.1 to C1.1475 in which one of the cotton treatment combinations listed in the following table is combined with post-emergence use of glufosinate.

| Treatment combination | Pre-plant burn-down | Pre-emergence | Pre-harvest desiccation/ defoliation |
|---|---|---|---|
| C-1 | Glufosinate | Isoxaflutole | - |
| C-2 | Glufosinate | Pyroxasulfone | - |
| C-3 | Glufosinate | Isoxaflutole + pyroxasulfone | - |
| C-4 | Glufosinate | Isoxaflutole + pyroxasulfone + imazethapyr | - |
| C-5 | Glufosinate | Isoxaflutole + pyroxasulfone + imazethapyr ammonium | - |
| C-6 | Glufosinate | Isoxaflutole + pyroxasulfone + imazapic | - |
| C-7 | Glufosinate | Isoxaflutole + pyroxasulfone + imazapic ammonium | - |
| C-8 | Glufosinate | Isoxaflutole + pyroxasulfone + imazaquin | - |
| C-9 | Glufosinate | Isoxaflutole + pyroxasulfone + imazaquin ammonium | - |
| C-10 | Glufosinate | Isoxaflutole + mesotrione | - |
| C-11 | Glufosinate | Isoxaflutole + mesotrione + pyroxasulfone | - |
| C-12 | Glufosinate | Mesotrione + pyroxasulfone | - |
| C-13 | Glufosinate | Pyroxasulfone + imazethapyr | - |
| C-14 | Glufosinate | Pyroxasulfone + imazethapyr ammonium | - |
| C-15 | Glufosinate | Isoxaflutole + imazethapyr | - |
| C-16 | Glufosinate | Isoxaflutole + imazethapyr ammonium | - |
| C-17 | Glufosinate | Mesotrione + imazethapyr | - |
| C-18 | Glufosinate | Mesotrione + imazethapyr ammonium | - |
| C-19 | Glufosinate | Prometryne | - |
| C-20 | Glufosinate | Fluometuron | - |
| C-21 | Glufosinate | Thidiazuron | - |
| C-22 | Glufosinate | Diuron | - |
| C-23 | Glufosinate | Acetochlor | - |
| C-24 | Glufosinate | Metolachlor | - |
| C-25 | Glufosinate | (S)-Metolachlor | - |
| C-26 | Glufosinate | Dimethenamid | - |
| C-27 | Glufosinate | Dimethenamid-P | - |
| C-28 | Glufosinate | Clomazone | - |
| C-29 | Glufosinate | Pendimethalin | - |
| C-30 | Glufosinate | Trifluralin | - |
| C-31 | Glufosinate | Fomesafen | - |
| C-32 | Glufosinate | Oxyfluorfen | - |
| C-33 | Glufosinate | Saflufenacil | - |
| C-34 | Glufosinate | Trifludimoxazin | - |
| C-35 | Glufosinate | Saflufenacil + trifludimoxazin | - |

(continued)

| Treatment combination | Pre-plant burn-down | Pre-emergence | Pre-harvest desiccation/ defoliation |
|---|---|---|---|
| C-36 | Glufosinate | Flumioxazin | - |
| C-37 | Glufosinate | Sulfentrazone | - |
| C-38 | Glufosinate | Bicyclopyrone | - |
| C-39 | Glufosinate | Tembotrione | - |
| C-40 | Glufosinate | Mesotrione | - |
| C-41 | Glufosinate ammonium | Isoxaflutole | - |
| C-42 | Glufosinate ammonium | Pyroxasulfone | - |
| C-43 | Glufosinate ammonium | Isoxaflutole + pyroxasulfone | - |
| C-44 | Glufosinate ammonium | Isoxaflutole + pyroxasulfone + imazethapyr | - |
| C-45 | Glufosinate ammonium | Isoxaflutole + pyroxasulfone + imazethapyr ammonium | - |
| C-46 | Glufosinate ammonium | Isoxaflutole + pyroxasulfone + imazapic | - |
| C-47 | Glufosinate ammonium | Isoxaflutole + pyroxasulfone + imazapic ammonium | - |
| C-48 | Glufosinate ammonium | Isoxaflutole + pyroxasulfone + imazaquin | - |
| C-49 | Glufosinate ammonium | Isoxaflutole + pyroxasulfone + imazaquin ammonium | - |
| C-50 | Glufosinate ammonium | Isoxaflutole + mesotrione | - |
| C-51 | Glufosinate ammonium | Isoxaflutole + mesotrione + pyroxasulfone | - |
| C-52 | Glufosinate ammonium | Mesotrione + pyroxasulfone | - |
| C-53 | Glufosinate ammonium | Pyroxasulfone + imazethapyr | - |
| C-54 | Glufosinate ammonium | Pyroxasulfone + imazethapyr ammonium | - |
| C-55 | Glufosinate ammonium | Isoxaflutole + imazethapyr | - |
| C-56 | Glufosinate ammonium | Isoxaflutole + imazethapyr ammonium | - |
| C-57 | Glufosinate ammonium | Mesotrione + imazethapyr | - |
| C-58 | Glufosinate ammonium | Mesotrione + imazethapyr ammonium | - |
| C-59 | Glufosinate ammonium | Prometryne | - |

(continued)

| Treatment combination | Pre-plant burn-down | Pre-emergence | Pre-harvest desiccation/ defoliation |
|---|---|---|---|
| C-60 | Glufosinate ammonium | Fluometuron | - |
| C-61 | Glufosinate ammonium | Thidiazuron | - |
| C-62 | Glufosinate ammonium | Diuron | - |
| C-63 | Glufosinate ammonium | Acetochlor | - |
| C-64 | Glufosinate ammonium | Metolachlor | - |
| C-65 | Glufosinate ammonium | (S)-Metolachlor | - |
| C-66 | Glufosinate ammonium | Dimethenamid | - |
| C-67 | Glufosinate ammonium | Dimethenamid-P | - |
| C-68 | Glufosinate ammonium | Clomazone | - |
| C-69 | Glufosinate ammonium | Pendimethalin | - |
| C-70 | Glufosinate ammonium | Trifluralin | - |
| C-71 | Glufosinate ammonium | Fomesafen | - |
| C-72 | Glufosinate ammonium | Oxyfluorfen | - |
| C-73 | Glufosinate ammonium | Saflufenacil | - |
| C-74 | Glufosinate ammonium | Trifludimoxazin | - |
| C-75 | Glufosinate ammonium | Saflufenacil + trifludimoxazin | - |
| C-76 | Glufosinate ammonium | Flumioxazin | - |
| C-77 | Glufosinate ammonium | Sulfentrazone | - |
| C-78 | Glufosinate ammonium | Bicyclopyrone | - |
| C-79 | Glufosinate ammonium | Tembotrione | - |
| C-80 | Glufosinate ammonium | Mesotrione | - |
| C-81 | L-Glufosinate | Isoxaflutole | - |

(continued)

| Treatment combination | Pre-plant burn-down | Pre-emergence | Pre-harvest desiccation/ defoliation |
|---|---|---|---|
| C-82 | L-Glufosinate | Pyroxasulfone | - |
| C-83 | L-Glufosinate | Isoxaflutole + pyroxasulfone | - |
| C-84 | L-Glufosinate | Isoxaflutole + pyroxasulfone + imazethapyr | - |
| C-85 | L-Glufosinate | Isoxaflutole + pyroxasulfone + imazethapyr ammonium | - |
| C-86 | L-Glufosinate | Isoxaflutole + pyroxasulfone + imazapic | - |
| C-87 | L-Glufosinate | Isoxaflutole + pyroxasulfone + imazapic ammonium | - |
| C-88 | L-Glufosinate | Isoxaflutole + pyroxasulfone + imazaquin | - |
| C-89 | L-Glufosinate | Isoxaflutole + pyroxasulfone + imazaquin ammonium | - |
| C-90 | L-Glufosinate | Isoxaflutole + mesotrione | - |
| C-91 | L-Glufosinate | Isoxaflutole + mesotrione + pyroxasulfone | - |
| C-92 | L-Glufosinate | Mesotrione + pyroxasulfone | - |
| C-93 | L-Glufosinate | Pyroxasulfone + imazethapyr | - |
| C-94 | L-Glufosinate | Pyroxasulfone + imazethapyr ammonium | - |
| C-95 | L-Glufosinate | Isoxaflutole + imazethapyr | - |
| C-96 | L-Glufosinate | Isoxaflutole + imazethapyr ammonium | - |
| C-97 | L-Glufosinate | Mesotrione + imazethapyr | - |
| C-98 | L-Glufosinate | Mesotrione + imazethapyr ammonium | - |
| C-99 | L-Glufosinate | Prometryne | - |
| C-100 | L-Glufosinate | Fluometuron | - |
| C-101 | L-Glufosinate | Thidiazuron | - |
| C-102 | L-Glufosinate | Diuron | - |
| C-103 | L-Glufosinate | Acetochlor | - |
| C-104 | L-Glufosinate | Metolachlor | - |
| C-105 | L-Glufosinate | (S)-Metolachlor | - |
| C-106 | L-Glufosinate | Dimethenamid | - |
| C-107 | L-Glufosinate | Dimethenamid-P | - |
| C-108 | L-Glufosinate | Clomazone | - |
| C-109 | L-Glufosinate | Pendimethalin | - |
| C-110 | L-Glufosinate | Trifluralin | - |
| C-111 | L-Glufosinate | Fomesafen | - |
| C-112 | L-Glufosinate | Oxyfluorfen | - |
| C-113 | L-Glufosinate | Saflufenacil | - |
| C-114 | L-Glufosinate | Trifludimoxazin | - |
| C-115 | L-Glufosinate | Saflufenacil + trifludimoxazin | - |
| C-116 | L-Glufosinate | Flumioxazin | - |

(continued)

| Treatment combination | Pre-plant burn-down | Pre-emergence | Pre-harvest desiccation/ defoliation |
|---|---|---|---|
| C-117 | L-Glufosinate | Sulfentrazone | - |
| C-118 | L-Glufosinate | Bicyclopyrone | - |
| C-119 | L-Glufosinate | Tembotrione | - |
| C-120 | L-Glufosinate | Mesotrione | - |
| C-121 | L-Glufosinate ammonium | Isoxaflutole | - |
| C-122 | L-Glufosinate ammonium | Pyroxasulfone | - |
| C-123 | L-Glufosinate ammonium | Isoxaflutole + pyroxasulfone | - |
| C-124 | L-Glufosinate ammonium | Isoxaflutole + pyroxasulfone + imazethapyr | - |
| C-125 | L-Glufosinate ammonium | Isoxaflutole + pyroxasulfone + imazethapyr ammonium | - |
| C-126 | L-Glufosinate ammonium | Isoxaflutole + pyroxasulfone + imazapic | - |
| C-127 | L-Glufosinate ammonium | Isoxaflutole + pyroxasulfone + imazapic ammonium | - |
| C-128 | L-Glufosinate ammonium | Isoxaflutole + pyroxasulfone + imazaquin | - |
| C-129 | L-Glufosinate ammonium | Isoxaflutole + pyroxasulfone + imazaquin ammonium | - |
| C-130 | L-Glufosinate ammonium | Isoxaflutole + mesotrione | - |
| C-131 | L-Glufosinate ammonium | Isoxaflutole + mesotrione + pyroxasulfone | - |
| C-132 | L-Glufosinate ammonium | Mesotrione + pyroxasulfone | - |
| C-133 | L-Glufosinate ammonium | Pyroxasulfone + imazethapyr | - |
| C-134 | L-Glufosinate ammonium | Pyroxasulfone + imazethapyr ammonium | - |
| C-135 | L-Glufosinate ammonium | Isoxaflutole + imazethapyr | - |
| C-136 | L-Glufosinate ammonium | Isoxaflutole + imazethapyr ammonium | - |
| C-137 | L-Glufosinate ammonium | Mesotrione + imazethapyr | - |
| C-138 | L-Glufosinate ammonium | Mesotrione + imazethapyr ammonium | - |
| C-139 | L-Glufosinate ammonium | Prometryne | - |

(continued)

| Treatment combination | Pre-plant burn-down | Pre-emergence | Pre-harvest desiccation/ defoliation |
|---|---|---|---|
| C-140 | L-Glufosinate ammonium | Fluometuron | - |
| C-141 | L-Glufosinate ammonium | Thidiazuron | - |
| C-142 | L-Glufosinate ammonium | Diuron | - |
| C-143 | L-Glufosinate ammonium | Acetochlor | - |
| C-144 | L-Glufosinate ammonium | Metolachlor | - |
| C-145 | L-Glufosinate ammonium | (S)-Metolachlor | - |
| C-146 | L-Glufosinate ammonium | Dimethenamid | - |
| C-147 | L-Glufosinate ammonium | Dimethenamid-P | - |
| C-148 | L-Glufosinate ammonium | Clomazone | - |
| C-149 | L-Glufosinate ammonium | Pendimethalin | - |
| C-150 | L-Glufosinate ammonium | Trifluralin | - |
| C-151 | L-Glufosinate ammonium | Fomesafen | - |
| C-152 | L-Glufosinate ammonium | Oxyfluorfen | - |
| C-153 | L-Glufosinate ammonium | Saflufenacil | - |
| C-154 | L-Glufosinate ammonium | Trifludimoxazin | - |
| C-155 | L-Glufosinate ammonium | Saflufenacil + trifludimoxazin | - |
| C-156 | L-Glufosinate ammonium | Flumioxazin | - |
| C-157 | L-Glufosinate ammonium | Sulfentrazone | - |
| C-158 | L-Glufosinate ammonium | Bicyclopyrone | - |
| C-159 | L-Glufosinate ammonium | Tembotrione | - |
| C-160 | L-Glufosinate ammonium | Mesotrione | - |
| C-161 | L-Glufosinate sodium | Isoxaflutole | - |

(continued)

| Treatment combination | Pre-plant burn-down | Pre-emergence | Pre-harvest desiccation/ defoliation |
|---|---|---|---|
| C-162 | L-Glufosinate sodium | Pyroxasulfone | - |
| C-163 | L-Glufosinate sodium | Isoxaflutole + pyroxasulfone | - |
| C-164 | L-Glufosinate sodium | Isoxaflutole + pyroxasulfone + imazethapyr | - |
| C-165 | L-Glufosinate sodium | Isoxaflutole + pyroxasulfone + imazethapyr ammonium | - |
| C-166 | L-Glufosinate sodium | Isoxaflutole + pyroxasulfone + imazapic | - |
| C-167 | L-Glufosinate sodium | Isoxaflutole + pyroxasulfone + imazapic ammonium | - |
| C-168 | L-Glufosinate sodium | Isoxaflutole + pyroxasulfone + imazaquin | - |
| C-169 | L-Glufosinate sodium | Isoxaflutole + pyroxasulfone + imazaquin ammonium | - |
| C-170 | L-Glufosinate sodium | Isoxaflutole + mesotrione | - |
| C-171 | L-Glufosinate sodium | Isoxaflutole + mesotrione + pyroxasulfone | - |
| C-172 | L-Glufosinate sodium | Mesotrione + pyroxasulfone | - |
| C-173 | L-Glufosinate sodium | Pyroxasulfone + imazethapyr | - |
| C-174 | L-Glufosinate sodium | Pyroxasulfone + imazethapyr ammonium | - |
| C-175 | L-Glufosinate sodium | Isoxaflutole + imazethapyr | - |
| C-176 | L-Glufosinate sodium | Isoxaflutole + imazethapyr ammonium | - |
| C-177 | L-Glufosinate sodium | Mesotrione + imazethapyr | - |
| C-178 | L-Glufosinate sodium | Mesotrione + imazethapyr ammonium | - |
| C-179 | L-Glufosinate sodium | Prometryne | - |
| C-180 | L-Glufosinate sodium | Fluometuron | - |
| C-181 | L-Glufosinate sodium | Thidiazuron | - |
| C-182 | L-Glufosinate sodium | Diuron | - |
| C-183 | L-Glufosinate sodium | Acetochlor | - |
| C-184 | L-Glufosinate sodium | Metolachlor | - |
| C-185 | L-Glufosinate sodium | (S)-Metolachlor | - |
| C-186 | L-Glufosinate sodium | Dimethenamid | - |
| C-187 | L-Glufosinate sodium | Dimethenamid-P | - |
| C-188 | L-Glufosinate sodium | Clomazone | - |
| C-189 | L-Glufosinate sodium | Pendimethalin | - |
| C-190 | L-Glufosinate sodium | Trifluralin | - |
| C-191 | L-Glufosinate sodium | Fomesafen | - |
| C-192 | L-Glufosinate sodium | Oxyfluorfen | - |
| C-193 | L-Glufosinate sodium | Saflufenacil | - |
| C-194 | L-Glufosinate sodium | Trifludimoxazin | - |
| C-195 | L-Glufosinate sodium | Saflufenacil + trifludimoxazin | - |
| C-196 | L-Glufosinate sodium | Flumioxazin | - |

(continued)

| Treatment combination | Pre-plant burn-down | Pre-emergence | Pre-harvest desiccation/ defoliation |
|---|---|---|---|
| C-197 | L-Glufosinate sodium | Sulfentrazone | - |
| C-198 | L-Glufosinate sodium | Bicyclopyrone | - |
| C-199 | L-Glufosinate sodium | Tembotrione | - |
| C-200 | L-Glufosinate sodium | Mesotrione | - |
| C-201 | Glyphosate | Isoxaflutole | - |
| C-202 | Glyphosate | Pyroxasulfone | - |
| C-203 | Glyphosate | Isoxaflutole + pyroxasulfone | - |
| C-204 | Glyphosate | Isoxaflutole + pyroxasulfone + imazethapyr | - |
| C-205 | Glyphosate | Isoxaflutole + pyroxasulfone + imazethapyr ammonium | - |
| C-206 | Glyphosate | Isoxaflutole + pyroxasulfone + imazapic | - |
| C-207 | Glyphosate | Isoxaflutole + pyroxasulfone + imazapic ammonium | - |
| C-208 | Glyphosate | Isoxaflutole + pyroxasulfone + imazaquin | - |
| C-209 | Glyphosate | Isoxaflutole + pyroxasulfone + imazaquin ammonium | - |
| C-210 | Glyphosate | Isoxaflutole + mesotrione | - |
| C-211 | Glyphosate | Isoxaflutole + mesotrione + pyroxasulfone | - |
| C-212 | Glyphosate | Mesotrione + pyroxasulfone | - |
| C-213 | Glyphosate | Pyroxasulfone + imazethapyr | - |
| C-214 | Glyphosate | Pyroxasulfone + imazethapyr ammonium | - |
| C-215 | Glyphosate | Isoxaflutole + imazethapyr | - |
| C-216 | Glyphosate | Isoxaflutole + imazethapyr ammonium | - |
| C-217 | Glyphosate | Mesotrione + imazethapyr | - |
| C-218 | Glyphosate | Mesotrione + imazethapyr ammonium | - |
| C-219 | Glyphosate | Prometryne | - |
| C-220 | Glyphosate | Fluometuron | - |
| C-221 | Glyphosate | Thidiazuron | - |
| C-222 | Glyphosate | Diuron | - |
| C-223 | Glyphosate | Acetochlor | - |
| C-224 | Glyphosate | Metolachlor | - |
| C-225 | Glyphosate | (S)-Metolachlor | - |
| C-226 | Glyphosate | Dimethenamid | - |
| C-227 | Glyphosate | Dimethenamid-P | - |
| C-228 | Glyphosate | Clomazone | - |
| C-229 | Glyphosate | Pendimethalin | - |
| C-230 | Glyphosate | Trifluralin | - |
| C-231 | Glyphosate | Fomesafen | - |

(continued)

| Treatment combination | Pre-plant burn-down | Pre-emergence | Pre-harvest desiccation/defoliation |
|---|---|---|---|
| C-232 | Glyphosate | Oxyfluorfen | - |
| C-233 | Glyphosate | Saflufenacil | - |
| C-234 | Glyphosate | Trifludimoxazin | - |
| C-235 | Glyphosate | Saflufenacil + trifludimoxazin | - |
| C-236 | Glyphosate | Flumioxazin | - |
| C-237 | Glyphosate | Sulfentrazone | - |
| C-238 | Glyphosate | Bicyclopyrone | - |
| C-239 | Glyphosate | Tembotrione | - |
| C-240 | Glyphosate | Mesotrione | - |
| C-241 | Glyphosate dimethylammonium | Isoxaflutole | - |
| C-242 | Glyphosate dimethylammonium | Pyroxasulfone | - |
| C-243 | Glyphosate dimethylammonium | Isoxaflutole + pyroxasulfone | - |
| C-244 | Glyphosate dimethylammonium | Isoxaflutole + pyroxasulfone + imazethapyr | - |
| C-245 | Glyphosate dimethylammonium | Isoxaflutole + pyroxasulfone + imazethapyr ammonium | - |
| C-246 | Glyphosate dimethylammonium | Isoxaflutole + pyroxasulfone + imazapic | - |
| C-247 | Glyphosate dimethylammonium | Isoxaflutole + pyroxasulfone + imazapic ammonium | - |
| C-248 | Glyphosate dimethylammonium | Isoxaflutole + pyroxasulfone + imazaquin | - |
| C-249 | Glyphosate dimethylammonium | Isoxaflutole + pyroxasulfone + imazaquin ammonium | - |
| C-250 | Glyphosate dimethylammonium | Isoxaflutole + mesotrione | - |
| C-251 | Glyphosate dimethylammonium | Isoxaflutole + mesotrione + pyroxasulfone | - |
| C-252 | Glyphosate dimethylammonium | Mesotrione + pyroxasulfone | - |
| C-253 | Glyphosate dimethylammonium | Pyroxasulfone + imazethapyr | - |
| C-254 | Glyphosate dimethylammonium | Pyroxasulfone + imazethapyr ammonium | - |
| C-255 | Glyphosate dimethylammonium | Isoxaflutole + imazethapyr | - |
| C-256 | Glyphosate dimethylammonium | Isoxaflutole + imazethapyr ammonium | - |

(continued)

| Treatment combination | Pre-plant burn-down | Pre-emergence | Pre-harvest desiccation/ defoliation |
|---|---|---|---|
| C-257 | Glyphosate dimethylammonium | Mesotrione + imazethapyr | - |
| C-258 | Glyphosate dimethylammonium | Mesotrione + imazethapyr ammonium | - |
| C-259 | Glyphosate dimethylammonium | Prometryne | - |
| C-260 | Glyphosate dimethylammonium | Fluometuron | - |
| C-261 | Glyphosate dimethylammonium | Thidiazuron | - |
| C-262 | Glyphosate dimethylammonium | Diuron | - |
| C-263 | Glyphosate dimethylammonium | Acetochlor | - |
| C-264 | Glyphosate dimethylammonium | Metolachlor | - |
| C-265 | Glyphosate dimethylammonium | (S)-Metolachlor | - |
| C-266 | Glyphosate dimethylammonium | Dimethenamid | - |
| C-267 | Glyphosate dimethylammonium | Dimethenamid-P | - |
| C-268 | Glyphosate dimethylammonium | Clomazone | - |
| C-269 | Glyphosate dimethylammonium | Pendimethalin | - |
| C-270 | Glyphosate dimethylammonium | Trifluralin | - |
| C-271 | Glyphosate dimethylammonium | Fomesafen | - |
| C-272 | Glyphosate dimethylammonium | Oxyfluorfen | - |
| C-273 | Glyphosate dimethylammonium | Saflufenacil | - |
| C-274 | Glyphosate dimethylammonium | Trifludimoxazin | - |
| C-275 | Glyphosate dimethylammonium | Saflufenacil + trifludimoxazin | - |
| C-276 | Glyphosate dimethylammonium | Flumioxazin | - |
| C-277 | Glyphosate dimethylammonium | Sulfentrazone | - |
| C-278 | Glyphosate dimethylammonium | Bicyclopyrone | - |

(continued)

| Treatment combination | Pre-plant burn-down | Pre-emergence | Pre-harvest desiccation/ defoliation |
|---|---|---|---|
| C-279 | Glyphosate dimethylammonium | Tembotrione | - |
| C-280 | Glyphosate dimethylammonium | Mesotrione | - |
| C-281 | Glyphosate potassium | Isoxaflutole | - |
| C-282 | Glyphosate potassium | Pyroxasulfone | - |
| C-283 | Glyphosate potassium | Isoxaflutole + pyroxasulfone | - |
| C-284 | Glyphosate potassium | Isoxaflutole + pyroxasulfone + imazethapyr | - |
| C-285 | Glyphosate potassium | Isoxaflutole + pyroxasulfone + imazethapyr ammonium | - |
| C-286 | Glyphosate potassium | Isoxaflutole + pyroxasulfone + imazapic | - |
| C-287 | Glyphosate potassium | Isoxaflutole + pyroxasulfone + imazapic ammonium | - |
| C-288 | Glyphosate potassium | Isoxaflutole + pyroxasulfone + imazaquin | - |
| C-289 | Glyphosate potassium | Isoxaflutole + pyroxasulfone + imazaquin ammonium | - |
| C-290 | Glyphosate potassium | Isoxaflutole + mesotrione | - |
| C-291 | Glyphosate potassium | Isoxaflutole + mesotrione + pyroxasulfone | - |
| C-292 | Glyphosate potassium | Mesotrione + pyroxasulfone | - |
| C-293 | Glyphosate potassium | Pyroxasulfone + imazethapyr | - |
| C-294 | Glyphosate potassium | Pyroxasulfone + imazethapyr ammonium | - |
| C-295 | Glyphosate potassium | Isoxaflutole + imazethapyr | - |
| C-296 | Glyphosate potassium | Isoxaflutole + imazethapyr ammonium | - |
| C-297 | Glyphosate potassium | Mesotrione + imazethapyr | - |
| C-298 | Glyphosate potassium | Mesotrione + imazethapyr ammonium | - |
| C-299 | Glyphosate potassium | Prometryne | - |
| C-300 | Glyphosate potassium | Fluometuron | - |
| C-301 | Glyphosate potassium | Thidiazuron | - |
| C-302 | Glyphosate potassium | Diuron | - |
| C-303 | Glyphosate potassium | Acetochlor | - |
| C-304 | Glyphosate potassium | Metolachlor | - |
| C-305 | Glyphosate potassium | (S)-Metolachlor | - |
| C-306 | Glyphosate potassium | Dimethenamid | - |
| C-307 | Glyphosate potassium | Dimethenamid-P | - |
| C-308 | Glyphosate potassium | Clomazone | - |
| C-309 | Glyphosate potassium | Pendimethalin | - |
| C-310 | Glyphosate potassium | Trifluralin | - |
| C-311 | Glyphosate potassium | Fomesafen | - |

(continued)

| Treatment combination | Pre-plant burn-down | Pre-emergence | Pre-harvest desiccation/ defoliation |
|---|---|---|---|
| C-312 | Glyphosate potassium | Oxyfluorfen | - |
| C-313 | Glyphosate potassium | Saflufenacil | - |
| C-314 | Glyphosate potassium | Trifludimoxazin | - |
| C-315 | Glyphosate potassium | Saflufenacil + trifludimoxazin | - |
| C-316 | Glyphosate potassium | Flumioxazin | - |
| C-317 | Glyphosate potassium | Sulfentrazone | - |
| C-318 | Glyphosate potassium | Bicyclopyrone | - |
| C-319 | Glyphosate potassium | Tembotrione | - |
| C-320 | Glyphosate potassium | Mesotrione | - |
| C-321 | Glyphosate isopropylammonium | Isoxaflutole | - |
| C-322 | Glyphosate isopropylammonium | Pyroxasulfone | - |
| C-323 | Glyphosate isopropylammonium | Isoxaflutole + pyroxasulfone | - |
| C-324 | Glyphosate isopropylammonium | Isoxaflutole + pyroxasulfone + imazethapyr | - |
| C-325 | Glyphosate isopropylammonium | Isoxaflutole + pyroxasulfone + imazethapyr ammonium | - |
| C-326 | Glyphosate isopropylammonium | Isoxaflutole + pyroxasulfone + imazapic | - |
| C-327 | Glyphosate isopropylammonium | Isoxaflutole + pyroxasulfone + imazapic ammonium | - |
| C-328 | Glyphosate isopropylammonium | Isoxaflutole + pyroxasulfone + imazaquin | - |
| C-329 | Glyphosate isopropylammonium | Isoxaflutole + pyroxasulfone + imazaquin ammonium | - |
| C-330 | Glyphosate isopropylammonium | Isoxaflutole + mesotrione | - |
| C-331 | Glyphosate isopropylammonium | Isoxaflutole + mesotrione + pyroxasulfone | - |
| C-332 | Glyphosate isopropylammonium | Mesotrione + pyroxasulfone | - |
| C-333 | Glyphosate isopropylammonium | Pyroxasulfone + imazethapyr | - |
| C-334 | Glyphosate isopropylammonium | Pyroxasulfone + imazethapyr ammonium | - |
| C-335 | Glyphosate isopropylammonium | Isoxaflutole + imazethapyr | - |
| C-336 | Glyphosate isopropylammonium | Isoxaflutole + imazethapyr ammonium | - |

(continued)

| Treatment combination | Pre-plant burn-down | Pre-emergence | Pre-harvest desiccation/ defoliation |
|---|---|---|---|
| C-337 | Glyphosate isopropylammonium | Mesotrione + imazethapyr | - |
| C-338 | Glyphosate isopropylammonium | Mesotrione + imazethapyr ammonium | - |
| C-339 | Glyphosate isopropylammonium | Prometryne | - |
| C-340 | Glyphosate isopropylammonium | Fluometuron | - |
| C-341 | Glyphosate isopropylammonium | Thidiazuron | - |
| C-342 | Glyphosate isopropylammonium | Diuron | - |
| C-343 | Glyphosate isopropylammonium | Acetochlor | - |
| C-344 | Glyphosate isopropylammonium | Metolachlor | - |
| C-345 | Glyphosate isopropylammonium | (S)-Metolachlor | - |
| C-346 | Glyphosate isopropylammonium | Dimethenamid | - |
| C-347 | Glyphosate isopropylammonium | Dimethenamid-P | - |
| C-348 | Glyphosate isopropylammonium | Clomazone | - |
| C-349 | Glyphosate isopropylammonium | Pendimethalin | - |
| C-350 | Glyphosate isopropylammonium | Trifluralin | - |
| C-351 | Glyphosate isopropylammonium | Fomesafen | - |
| C-352 | Glyphosate isopropylammonium | Oxyfluorfen | - |
| C-353 | Glyphosate isopropylammonium | Saflufenacil | - |
| C-354 | Glyphosate isopropylammonium | Trifludimoxazin | - |
| C-355 | Glyphosate isopropylammonium | Saflufenacil + trifludimoxazin | - |
| C-356 | Glyphosate isopropylammonium | Flumioxazin | - |
| C-357 | Glyphosate isopropylammonium | Sulfentrazone | - |
| C-358 | Glyphosate isopropylammonium | Bicyclopyrone | - |

(continued)

| Treatment combination | Pre-plant burn-down | Pre-emergence | Pre-harvest desiccation/ defoliation |
|---|---|---|---|
| C-359 | Glyphosate isopropylammonium | Tembotrione | - |
| C-360 | Glyphosate isopropylammonium | Mesotrione | - |
| C-361 | Saflufenacil | Isoxaflutole | - |
| C-362 | Saflufenacil | Pyroxasulfone | - |
| C-363 | Saflufenacil | Isoxaflutole + pyroxasulfone | - |
| C-364 | Saflufenacil | Isoxaflutole + pyroxasulfone + imazethapyr | - |
| C-365 | Saflufenacil | Isoxaflutole + pyroxasulfone + imazethapyr ammonium | - |
| C-366 | Saflufenacil | Isoxaflutole + pyroxasulfone + imazapic | - |
| C-367 | Saflufenacil | Isoxaflutole + pyroxasulfone + imazapic ammonium | - |
| C-368 | Saflufenacil | Isoxaflutole + pyroxasulfone + imazaquin | - |
| C-369 | Saflufenacil | Isoxaflutole + pyroxasulfone + imazaquin ammonium | - |
| C-370 | Saflufenacil | Isoxaflutole + mesotrione | - |
| C-371 | Saflufenacil | Isoxaflutole + mesotrione + pyroxasulfone | - |
| C-372 | Saflufenacil | Mesotrione + pyroxasulfone | - |
| C-373 | Saflufenacil | Pyroxasulfone + imazethapyr | - |
| C-374 | Saflufenacil | Pyroxasulfone + imazethapyr ammonium | - |
| C-375 | Saflufenacil | Isoxaflutole + imazethapyr | - |
| C-376 | Saflufenacil | Isoxaflutole + imazethapyr ammonium | - |
| C-377 | Saflufenacil | Mesotrione + imazethapyr | - |
| C-378 | Saflufenacil | Mesotrione + imazethapyr ammonium | - |
| C-379 | Saflufenacil | Prometryne | - |
| C-380 | Saflufenacil | Fluometuron | - |
| C-381 | Saflufenacil | Thidiazuron | - |
| C-382 | Saflufenacil | Diuron | - |
| C-383 | Saflufenacil | Acetochlor | - |
| C-384 | Saflufenacil | Metolachlor | - |
| C-385 | Saflufenacil | (S)-Metolachlor | - |
| C-386 | Saflufenacil | Dimethenamid | - |
| C-387 | Saflufenacil | Dimethenamid-P | - |
| C-388 | Saflufenacil | Clomazone | - |
| C-389 | Saflufenacil | Pendimethalin | - |
| C-390 | Saflufenacil | Trifluralin | - |
| C-391 | Saflufenacil | Fomesafen | - |

(continued)

| Treatment combination | Pre-plant burn-down | Pre-emergence | Pre-harvest desiccation/ defoliation |
|---|---|---|---|
| C-392 | Saflufenacil | Oxyfluorfen | - |
| C-393 | Saflufenacil | Saflufenacil | - |
| C-394 | Saflufenacil | Trifludimoxazin | - |
| C-395 | Saflufenacil | Saflufenacil + trifludimoxazin | - |
| C-396 | Saflufenacil | Flumioxazin | - |
| C-397 | Saflufenacil | Sulfentrazone | - |
| C-398 | Saflufenacil | Bicyclopyrone | - |
| C-399 | Saflufenacil | Tembotrione | - |
| C-400 | Saflufenacil | Mesotrione | - |
| C-401 | Trifludimoxazin | Isoxaflutole | - |
| C-402 | Trifludimoxazin | Pyroxasulfone | - |
| C-403 | Trifludimoxazin | Isoxaflutole + pyroxasulfone | - |
| C-404 | Trifludimoxazin | Isoxaflutole + pyroxasulfone + imazethapyr | - |
| C-405 | Trifludimoxazin | Isoxaflutole + pyroxasulfone + imazethapyr ammonium | - |
| C-406 | Trifludimoxazin | Isoxaflutole + pyroxasulfone + imazapic | - |
| C-407 | Trifludimoxazin | Isoxaflutole + pyroxasulfone + imazapic ammonium | - |
| C-408 | Trifludimoxazin | Isoxaflutole + pyroxasulfone + imazaquin | - |
| C-409 | Trifludimoxazin | Isoxaflutole + pyroxasulfone + imazaquin ammonium | - |
| C-410 | Trifludimoxazin | Isoxaflutole + mesotrione | - |
| C-411 | Trifludimoxazin | Isoxaflutole + mesotrione + pyroxasulfone | - |
| C-412 | Trifludimoxazin | Mesotrione + pyroxasulfone | - |
| C-413 | Trifludimoxazin | Pyroxasulfone + imazethapyr | - |
| C-414 | Trifludimoxazin | Pyroxasulfone + imazethapyr ammonium | - |
| C-415 | Trifludimoxazin | Isoxaflutole + imazethapyr | - |
| C-416 | Trifludimoxazin | Isoxaflutole + imazethapyr ammonium | - |
| C-417 | Trifludimoxazin | Mesotrione + imazethapyr | - |
| C-418 | Trifludimoxazin | Mesotrione + imazethapyr ammonium | - |
| C-419 | Trifludimoxazin | Prometryne | - |
| C-420 | Trifludimoxazin | Fluometuron | - |
| C-421 | Trifludimoxazin | Thidiazuron | - |
| C-422 | Trifludimoxazin | Diuron | - |
| C-423 | Trifludimoxazin | Acetochlor | - |
| C-424 | Trifludimoxazin | Metolachlor | - |
| C-425 | Trifludimoxazin | (S)-Metolachlor | - |
| C-426 | Trifludimoxazin | Dimethenamid | - |

(continued)

| Treatment combination | Pre-plant burn-down | Pre-emergence | Pre-harvest desiccation/ defoliation |
|---|---|---|---|
| C-427 | Trifludimoxazin | Dimethenamid-P | - |
| C-428 | Trifludimoxazin | Clomazone | - |
| C-429 | Trifludimoxazin | Pendimethalin | - |
| C-430 | Trifludimoxazin | Trifluralin | - |
| C-431 | Trifludimoxazin | Fomesafen | - |
| C-432 | Trifludimoxazin | Oxyfluorfen | - |
| C-433 | Trifludimoxazin | Saflufenacil | - |
| C-434 | Trifludimoxazin | Trifludimoxazin | - |
| C-435 | Trifludimoxazin | Saflufenacil + trifludimoxazin | - |
| C-436 | Trifludimoxazin | Flumioxazin | - |
| C-437 | Trifludimoxazin | Sulfentrazone | - |
| C-438 | Trifludimoxazin | Bicyclopyrone | - |
| C-439 | Trifludimoxazin | Tembotrione | - |
| C-440 | Trifludimoxazin | Mesotrione | - |
| C-441 | Saflufenacil + trifludimoxazin | Isoxaflutole | - |
| C-442 | Saflufenacil + trifludimoxazin | Pyroxasulfone | - |
| C-443 | Saflufenacil + trifludimoxazin | Isoxaflutole + pyroxasulfone | - |
| C-444 | Saflufenacil + trifludimoxazin | Isoxaflutole + pyroxasulfone + imazethapyr | - |
| C-445 | Saflufenacil + trifludimoxazin | Isoxaflutole + pyroxasulfone + imazethapyr ammonium | - |
| C-446 | Saflufenacil + trifludimoxazin | Isoxaflutole + pyroxasulfone + imazapic | - |
| C-447 | Saflufenacil + trifludimoxazin | Isoxaflutole + pyroxasulfone + imazapic ammonium | - |
| C-448 | Saflufenacil + trifludimoxazin | Isoxaflutole + pyroxasulfone + imazaquin | - |
| C-449 | Saflufenacil + trifludimoxazin | Isoxaflutole + pyroxasulfone + imazaquin ammonium | - |
| C-450 | Saflufenacil + trifludimoxazin | Isoxaflutole + mesotrione | - |
| C-451 | Saflufenacil + trifludimoxazin | Isoxaflutole + mesotrione + pyroxasulfone | - |
| C-452 | Saflufenacil + trifludimoxazin | Mesotrione + pyroxasulfone | - |
| C-453 | Saflufenacil + trifludimoxazin | Pyroxasulfone + imazethapyr | - |

(continued)

| Treatment combination | Pre-plant burn-down | Pre-emergence | Pre-harvest desiccation/ defoliation |
|---|---|---|---|
| C-454 | Saflufenacil + trifludimoxazin | Pyroxasulfone + imazethapyr ammonium | - |
| C-455 | Saflufenacil + trifludimoxazin | Isoxaflutole + imazethapyr | - |
| C-456 | Saflufenacil + trifludimoxazin | Isoxaflutole + imazethapyr ammonium | - |
| C-457 | Saflufenacil + trifludimoxazin | Mesotrione + imazethapyr | - |
| C-458 | Saflufenacil + trifludimoxazin | Mesotrione + imazethapyr ammonium | - |
| C-459 | Saflufenacil + trifludimoxazin | Prometryne | - |
| C-460 | Saflufenacil + trifludimoxazin | Fluometuron | - |
| C-461 | Saflufenacil + trifludimoxazin | Thidiazuron | - |
| C-462 | Saflufenacil + trifludimoxazin | Diuron | - |
| C-463 | Saflufenacil + trifludimoxazin | Acetochlor | - |
| C-464 | Saflufenacil + trifludimoxazin | Metolachlor | - |
| C-465 | Saflufenacil + trifludimoxazin | (S)-Metolachlor | - |
| C-466 | Saflufenacil + trifludimoxazin | Dimethenamid | - |
| C-467 | Saflufenacil + trifludimoxazin | Dimethenamid-P | - |
| C-468 | Saflufenacil + trifludimoxazin | Clomazone | - |
| C-469 | Saflufenacil + trifludimoxazin | Pendimethalin | - |
| C-470 | Saflufenacil + trifludimoxazin | Trifluralin | - |
| C-471 | Saflufenacil + trifludimoxazin | Fomesafen | - |
| C-472 | Saflufenacil + trifludimoxazin | Oxyfluorfen | - |
| C-473 | Saflufenacil + trifludimoxazin | Saflufenacil | - |
| C-474 | Saflufenacil + trifludimoxazin | Trifludimoxazin | - |
| C-475 | Saflufenacil + trifludimoxazin | Saflufenacil + trifludimoxazin | - |

(continued)

| Treatment combination | Pre-plant burn-down | Pre-emergence | Pre-harvest desiccation/ defoliation |
|---|---|---|---|
| C-476 | Saflufenacil + trifludimoxazin | Flumioxazin | - |
| C-477 | Saflufenacil + trifludimoxazin | Sulfentrazone | - |
| C-478 | Saflufenacil + trifludimoxazin | Bicyclopyrone | - |
| C-479 | Saflufenacil + trifludimoxazin | Tembotrione | - |
| C-480 | Saflufenacil + trifludimoxazin | Mesotrione | - |
| C-481 | Dicamba | Isoxaflutole | - |
| C-482 | Dicamba | Pyroxasulfone | - |
| C-483 | Dicamba | Isoxaflutole + pyroxasulfone | - |
| C-484 | Dicamba | Isoxaflutole + pyroxasulfone + imazethapyr | - |
| C-485 | Dicamba | Isoxaflutole + pyroxasulfone + imazethapyr ammonium | - |
| C-486 | Dicamba | Isoxaflutole + pyroxasulfone + imazapic | - |
| C-487 | Dicamba | Isoxaflutole + pyroxasulfone + imazapic ammonium | - |
| C-488 | Dicamba | Isoxaflutole + pyroxasulfone + imazaquin | - |
| C-489 | Dicamba | Isoxaflutole + pyroxasulfone + imazaquin ammonium | - |
| C-490 | Dicamba | Isoxaflutole + mesotrione | - |
| C-491 | Dicamba | Isoxaflutole + mesotrione + pyroxasulfone | - |
| C-492 | Dicamba | Mesotrione + pyroxasulfone | - |
| C-493 | Dicamba | Pyroxasulfone + imazethapyr | - |
| C-494 | Dicamba | Pyroxasulfone + imazethapyr ammonium | - |
| C-495 | Dicamba | Isoxaflutole + imazethapyr | - |
| C-496 | Dicamba | Isoxaflutole + imazethapyr ammonium | - |
| C-497 | Dicamba | Mesotrione + imazethapyr | - |
| C-498 | Dicamba | Mesotrione + imazethapyr ammonium | - |
| C-499 | Dicamba | Prometryne | - |
| C-500 | Dicamba | Fluometuron | - |
| C-501 | Dicamba | Thidiazuron | - |
| C-502 | Dicamba | Diuron | - |
| C-503 | Dicamba | Acetochlor | - |
| C-504 | Dicamba | Metolachlor | - |
| C-505 | Dicamba | (S)-Metolachlor | - |
| C-506 | Dicamba | Dimethenamid | - |

(continued)

| Treatment combination | Pre-plant burn-down | Pre-emergence | Pre-harvest desiccation/ defoliation |
|---|---|---|---|
| C-507 | Dicamba | Dimethenamid-P | - |
| C-508 | Dicamba | Clomazone | - |
| C-509 | Dicamba | Pendimethalin | - |
| C-510 | Dicamba | Trifluralin | - |
| C-511 | Dicamba | Fomesafen | - |
| C-512 | Dicamba | Oxyfluorfen | - |
| C-513 | Dicamba | Saflufenacil | - |
| C-514 | Dicamba | Trifludimoxazin | - |
| C-515 | Dicamba | Saflufenacil + trifludimoxazin | - |
| C-516 | Dicamba | Flumioxazin | - |
| C-517 | Dicamba | Sulfentrazone | - |
| C-518 | Dicamba | Bicyclopyrone | - |
| C-519 | Dicamba | Tembotrione | - |
| C-520 | Dicamba | Mesotrione | - |
| C-521 | Dicamba ethanolamine salt | Isoxaflutole | - |
| C-522 | Dicamba ethanolamine salt | Pyroxasulfone | - |
| C-523 | Dicamba ethanolamine salt | Isoxaflutole + pyroxasulfone | - |
| C-524 | Dicamba ethanolamine salt | Isoxaflutole + pyroxasulfone + imazethapyr | - |
| C-525 | Dicamba ethanolamine salt | Isoxaflutole + pyroxasulfone + imazethapyr ammonium | - |
| C-526 | Dicamba ethanolamine salt | Isoxaflutole + pyroxasulfone + imazapic | - |
| C-527 | Dicamba ethanolamine salt | Isoxaflutole + pyroxasulfone + imazapic ammonium | - |
| C-528 | Dicamba ethanolamine salt | Isoxaflutole + pyroxasulfone + imazaquin | - |
| C-529 | Dicamba ethanolamine salt | Isoxaflutole + pyroxasulfone + imazaquin ammonium | - |
| C-530 | Dicamba ethanolamine salt | Isoxaflutole + mesotrione | - |
| C-531 | Dicamba ethanolamine salt | Isoxaflutole + mesotrione + pyroxasulfone | - |
| C-532 | Dicamba ethanolamine salt | Mesotrione + pyroxasulfone | - |
| C-533 | Dicamba ethanolamine salt | Pyroxasulfone + imazethapyr | - |

(continued)

| Treatment combination | Pre-plant burn-down | Pre-emergence | Pre-harvest desiccation/ defoliation |
|---|---|---|---|
| C-534 | Dicamba ethanolamine salt | Pyroxasulfone + imazethapyr ammonium | - |
| C-535 | Dicamba ethanolamine salt | Isoxaflutole + imazethapyr | - |
| C-536 | Dicamba ethanolamine salt | Isoxaflutole + imazethapyr ammonium | - |
| C-537 | Dicamba ethanolamine salt | Mesotrione + imazethapyr | - |
| C-538 | Dicamba ethanolamine salt | Mesotrione + imazethapyr ammonium | - |
| C-539 | Dicamba ethanolamine salt | Prometryne | - |
| C-540 | Dicamba ethanolamine salt | Fluometuron | - |
| C-541 | Dicamba ethanolamine salt | Thidiazuron | - |
| C-542 | Dicamba ethanolamine salt | Diuron | - |
| C-543 | Dicamba ethanolamine salt | Acetochlor | - |
| C-544 | Dicamba ethanolamine salt | Metolachlor | - |
| C-545 | Dicamba ethanolamine salt | (S)-Metolachlor | - |
| C-546 | Dicamba ethanolamine salt | Dimethenamid | - |
| C-547 | Dicamba ethanolamine salt | Dimethenamid-P | - |
| C-548 | Dicamba ethanolamine salt | Clomazone | - |
| C-549 | Dicamba ethanolamine salt | Pendimethalin | - |
| C-550 | Dicamba ethanolamine salt | Trifluralin | - |
| C-551 | Dicamba ethanolamine salt | Fomesafen | - |
| C-552 | Dicamba ethanolamine salt | Oxyfluorfen | - |
| C-553 | Dicamba ethanolamine salt | Saflufenacil | - |
| C-554 | Dicamba ethanolamine salt | Trifludimoxazin | - |
| C-555 | Dicamba ethanolamine salt | Saflufenacil + trifludimoxazin | - |

(continued)

| Treatment combination | Pre-plant burn-down | Pre-emergence | Pre-harvest desiccation/ defoliation |
|---|---|---|---|
| C-556 | Dicamba ethanolamine salt | Flumioxazin | - |
| C-557 | Dicamba ethanolamine salt | Sulfentrazone | - |
| C-558 | Dicamba ethanolamine salt | Bicyclopyrone | - |
| C-559 | Dicamba ethanolamine salt | Tembotrione | - |
| C-560 | Dicamba ethanolamine salt | Mesotrione | - |
| C-561 | Dicamba diglycolamine salt | Isoxaflutole | - |
| C-562 | Dicamba diglycolamine salt | Pyroxasulfone | - |
| C-563 | Dicamba diglycolamine salt | Isoxaflutole + pyroxasulfone | - |
| C-564 | Dicamba diglycolamine salt | Isoxaflutole + pyroxasulfone + imazethapyr | - |
| C-565 | Dicamba diglycolamine salt | Isoxaflutole + pyroxasulfone + imazethapyr ammonium | - |
| C-566 | Dicamba diglycolamine salt | Isoxaflutole + pyroxasulfone + imazapic | - |
| C-567 | Dicamba diglycolamine salt | Isoxaflutole + pyroxasulfone + imazapic ammonium | - |
| C-568 | Dicamba diglycolamine salt | Isoxaflutole + pyroxasulfone + imazaquin | - |
| C-569 | Dicamba diglycolamine salt | Isoxaflutole + pyroxasulfone + imazaquin ammonium | - |
| C-570 | Dicamba diglycolamine salt | Isoxaflutole + mesotrione | - |
| C-571 | Dicamba diglycolamine salt | Isoxaflutole + mesotrione + pyroxasulfone | - |
| C-572 | Dicamba diglycolamine salt | Mesotrione + pyroxasulfone | - |
| C-573 | Dicamba diglycolamine salt | Pyroxasulfone + imazethapyr | - |
| C-574 | Dicamba diglycolamine salt | Pyroxasulfone + imazethapyr ammonium | - |
| C-575 | Dicamba diglycolamine salt | Isoxaflutole + imazethapyr | - |
| C-576 | Dicamba diglycolamine salt | Isoxaflutole + imazethapyr ammonium | - |
| C-577 | Dicamba diglycolamine salt | Mesotrione + imazethapyr | - |

(continued)

| Treatment combination | Pre-plant burn-down | Pre-emergence | Pre-harvest desiccation/ defoliation |
|---|---|---|---|
| C-578 | Dicamba diglycolamine salt | Mesotrione + imazethapyr ammonium | - |
| C-579 | Dicamba diglycolamine salt | Prometryne | - |
| C-580 | Dicamba diglycolamine salt | Fluometuron | - |
| C-581 | Dicamba diglycolamine salt | Thidiazuron | - |
| C-582 | Dicamba diglycolamine salt | Diuron | - |
| C-583 | Dicamba diglycolamine salt | Acetochlor | - |
| C-584 | Dicamba diglycolamine salt | Metolachlor | - |
| C-585 | Dicamba diglycolamine salt | (S)-Metolachlor | - |
| C-586 | Dicamba diglycolamine salt | Dimethenamid | - |
| C-587 | Dicamba diglycolamine salt | Dimethenamid-P | - |
| C-588 | Dicamba diglycolamine salt | Clomazone | - |
| C-589 | Dicamba diglycolamine salt | Pendimethalin | - |
| C-590 | Dicamba diglycolamine salt | Trifluralin | - |
| C-591 | Dicamba diglycolamine salt | Fomesafen | - |
| C-592 | Dicamba diglycolamine salt | Oxyfluorfen | - |
| C-593 | Dicamba diglycolamine salt | Saflufenacil | - |
| C-594 | Dicamba diglycolamine salt | Trifludimoxazin | - |
| C-595 | Dicamba diglycolamine salt | Saflufenacil + trifludimoxazin | - |
| C-596 | Dicamba diglycolamine salt | Flumioxazin | - |
| C-597 | Dicamba diglycolamine salt | Sulfentrazone | - |
| C-598 | Dicamba diglycolamine salt | Bicyclopyrone | - |
| C-599 | Dicamba diglycolamine salt | Tembotrione | - |

(continued)

| Treatment combination | Pre-plant burn-down | Pre-emergence | Pre-harvest desiccation/ defoliation |
|---|---|---|---|
| C-600 | Dicamba diglycolamine salt | Mesotrione | - |
| C-601 | Dicamba potassium | Isoxaflutole | - |
| C-602 | Dicamba potassium | Pyroxasulfone | - |
| C-603 | Dicamba potassium | Isoxaflutole + pyroxasulfone | - |
| C-604 | Dicamba potassium | Isoxaflutole + pyroxasulfone + imazethapyr | - |
| C-605 | Dicamba potassium | Isoxaflutole + pyroxasulfone + imazethapyr ammonium | - |
| C-606 | Dicamba potassium | Isoxaflutole + pyroxasulfone + imazapic | - |
| C-607 | Dicamba potassium | Isoxaflutole + pyroxasulfone + imazapic ammonium | - |
| C-608 | Dicamba potassium | Isoxaflutole + pyroxasulfone + imazaquin | - |
| C-609 | Dicamba potassium | Isoxaflutole + pyroxasulfone + imazaquin ammonium | - |
| C-610 | Dicamba potassium | Isoxaflutole + mesotrione | - |
| C-611 | Dicamba potassium | Isoxaflutole + mesotrione + pyroxasulfone | - |
| C-612 | Dicamba potassium | Mesotrione + pyroxasulfone | - |
| C-613 | Dicamba potassium | Pyroxasulfone + imazethapyr | - |
| C-614 | Dicamba potassium | Pyroxasulfone + imazethapyr ammonium | - |
| C-615 | Dicamba potassium | Isoxaflutole + imazethapyr | - |
| C-616 | Dicamba potassium | Isoxaflutole + imazethapyr ammonium | - |
| C-617 | Dicamba potassium | Mesotrione + imazethapyr | - |
| C-618 | Dicamba potassium | Mesotrione + imazethapyr ammonium | - |
| C-619 | Dicamba potassium | Prometryne | - |
| C-620 | Dicamba potassium | Fluometuron | - |
| C-621 | Dicamba potassium | Thidiazuron | - |
| C-622 | Dicamba potassium | Diuron | - |
| C-623 | Dicamba potassium | Acetochlor | - |
| C-624 | Dicamba potassium | Metolachlor | - |
| C-625 | Dicamba potassium | (S)-Metolachlor | - |
| C-626 | Dicamba potassium | Dimethenamid | - |
| C-627 | Dicamba potassium | Dimethenamid-P | - |
| C-628 | Dicamba potassium | Clomazone | - |
| C-629 | Dicamba potassium | Pendimethalin | - |
| C-630 | Dicamba potassium | Trifluralin | - |
| C-631 | Dicamba potassium | Fomesafen | - |
| C-632 | Dicamba potassium | Oxyfluorfen | - |
| C-633 | Dicamba potassium | Saflufenacil | - |

(continued)

| Treatment combination | Pre-plant burn-down | Pre-emergence | Pre-harvest desiccation/ defoliation |
|---|---|---|---|
| C-634 | Dicamba potassium | Trifludimoxazin | - |
| C-635 | Dicamba potassium | Saflufenacil + trifludimoxazin | - |
| C-636 | Dicamba potassium | Flumioxazin | - |
| C-637 | Dicamba potassium | Sulfentrazone | - |
| C-638 | Dicamba potassium | Bicyclopyrone | - |
| C-639 | Dicamba potassium | Tembotrione | - |
| C-640 | Dicamba potassium | Mesotrione | - |
| C-641 | Dicamba BAPMA salt | Isoxaflutole | - |
| C-642 | Dicamba BAPMA salt | Pyroxasulfone | - |
| C-643 | Dicamba BAPMA salt | Isoxaflutole + pyroxasulfone | - |
| C-644 | Dicamba BAPMA salt | Isoxaflutole + pyroxasulfone + imazethapyr | - |
| C-645 | Dicamba BAPMA salt | Isoxaflutole + pyroxasulfone + imazethapyr ammonium | - |
| C-646 | Dicamba BAPMA salt | Isoxaflutole + pyroxasulfone + imazapic | - |
| C-647 | Dicamba BAPMA salt | Isoxaflutole + pyroxasulfone + imazapic ammonium | - |
| C-648 | Dicamba BAPMA salt | Isoxaflutole + pyroxasulfone + imazaquin | - |
| C-649 | Dicamba BAPMA salt | Isoxaflutole + pyroxasulfone + imazaquin ammonium | - |
| C-650 | Dicamba BAPMA salt | Isoxaflutole + mesotrione | - |
| C-651 | Dicamba BAPMA salt | Isoxaflutole + mesotrione + pyroxasulfone | - |
| C-652 | Dicamba BAPMA salt | Mesotrione + pyroxasulfone | - |
| C-653 | Dicamba BAPMA salt | Pyroxasulfone + imazethapyr | - |
| C-654 | Dicamba BAPMA salt | Pyroxasulfone + imazethapyr ammonium | - |
| C-655 | Dicamba BAPMA salt | Isoxaflutole + imazethapyr | - |
| C-656 | Dicamba BAPMA salt | Isoxaflutole + imazethapyr ammonium | - |
| C-657 | Dicamba BAPMA salt | Mesotrione + imazethapyr | - |
| C-658 | Dicamba BAPMA salt | Mesotrione + imazethapyr ammonium | - |
| C-659 | Dicamba BAPMA salt | Prometryne | - |
| C-660 | Dicamba BAPMA salt | Fluometuron | - |
| C-661 | Dicamba BAPMA salt | Thidiazuron | - |
| C-662 | Dicamba BAPMA salt | Diuron | - |
| C-663 | Dicamba BAPMA salt | Acetochlor | - |
| C-664 | Dicamba BAPMA salt | Metolachlor | - |
| C-665 | Dicamba BAPMA salt | (S)-Metolachlor | - |
| C-666 | Dicamba BAPMA salt | Dimethenamid | - |
| C-667 | Dicamba BAPMA salt | Dimethenamid-P | - |
| C-668 | Dicamba BAPMA salt | Clomazone | - |

(continued)

| Treatment combination | Pre-plant burn-down | Pre-emergence | Pre-harvest desiccation/ defoliation |
|---|---|---|---|
| C-669 | Dicamba BAPMA salt | Pendimethalin | - |
| C-670 | Dicamba BAPMA salt | Trifluralin | - |
| C-671 | Dicamba BAPMA salt | Fomesafen | - |
| C-672 | Dicamba BAPMA salt | Oxyfluorfen | - |
| C-673 | Dicamba BAPMA salt | Saflufenacil | - |
| C-674 | Dicamba BAPMA salt | Trifludimoxazin | - |
| C-675 | Dicamba BAPMA salt | Saflufenacil + trifludimoxazin | - |
| C-676 | Dicamba BAPMA salt | Flumioxazin | - |
| C-677 | Dicamba BAPMA salt | Sulfentrazone | - |
| C-678 | Dicamba BAPMA salt | Bicyclopyrone | - |
| C-679 | Dicamba BAPMA salt | Tembotrione | - |
| C-680 | Dicamba BAPMA salt | Mesotrione | - |
| C-681 | - | Isoxaflutole | - |
| C-682 | - | Pyroxasulfone | - |
| C-683 | - | Isoxaflutole + pyroxasulfone | - |
| C-684 | - | Isoxaflutole + pyroxasulfone + imazethapyr | - |
| C-685 | - | Isoxaflutole + pyroxasulfone + imazethapyr ammonium | - |
| C-686 | - | Isoxaflutole + pyroxasulfone + imazapic | - |
| C-687 | - | Isoxaflutole + pyroxasulfone + imazapic ammonium | - |
| C-688 | - | Isoxaflutole + pyroxasulfone + imazaquin | - |
| C-689 | - | Isoxaflutole + pyroxasulfone + imazaquin ammonium | - |
| C-690 | - | Isoxaflutole + mesotrione | - |
| C-691 | - | Isoxaflutole + mesotrione + pyroxasulfone | - |
| C-692 | - | Mesotrione + pyroxasulfone | - |
| C-693 | - | Pyroxasulfone + imazethapyr | - |
| C-694 | - | Pyroxasulfone + imazethapyr ammonium | - |
| C-695 | - | Isoxaflutole + imazethapyr | - |
| C-696 | - | Isoxaflutole + imazethapyr ammonium | - |
| C-697 | - | Mesotrione + imazethapyr | - |
| C-698 | - | Mesotrione + imazethapyr ammonium | - |
| C-699 | - | Prometryne | - |
| C-700 | - | Fluometuron | - |
| C-701 | - | Thidiazuron | - |
| C-702 | - | Diuron | - |
| C-703 | - | Acetochlor | - |

(continued)

| Treatment combination | Pre-plant burn-down | Pre-emergence | Pre-harvest desiccation/ defoliation |
|---|---|---|---|
| C-704 | - | Metolachlor | - |
| C-705 | - | (S)-Metolachlor | - |
| C-706 | - | Dimethenamid | - |
| C-707 | - | Dimethenamid-P | - |
| C-708 | - | Clomazone | - |
| C-709 | - | Pendimethalin | - |
| C-710 | - | Trifluralin | - |
| C-711 | - | Fomesafen | - |
| C-712 | - | Oxyfluorfen | - |
| C-713 | - | Saflufenacil | - |
| C-714 | - | Trifludimoxazin | - |
| C-715 | - | Saflufenacil + trifludimoxazin | - |
| C-716 | - | Flumioxazin | - |
| C-717 | - | Sulfentrazone | - |
| C-718 | - | Bicyclopyrone | - |
| C-719 | - | Tembotrione | - |
| C-720 | - | Mesotrione | - |
| C-721 | Glufosinate | - | - |
| C-722 | Glufosinate ammonium | - | - |
| C-723 | L-Glufosinate | - | - |
| C-724 | L-Glufosinate ammonium | - | - |
| C-725 | L-Glufosinate sodium | - | - |
| C-726 | Glyphosate | - | - |
| C-727 | Glyphosate dimethylammonium | - | - |
| C-728 | Glyphosate potassium | - | - |
| C-729 | Glyphosate isopropylammonium | - | - |
| C-730 | Saflufenacil | - | - |
| C-731 | Trifludimoxazin | - | - |
| C-732 | Saflufenacil + trifludimoxazin | - | - |
| C-733 | Dicamba | - | - |
| C-734 | Dicamba ethanolamine salt | - | - |
| C-735 | Dicamba diglycolamine salt | - | - |

(continued)

| Treatment combination | Pre-plant burn-down | Pre-emergence | Pre-harvest desiccation/ defoliation |
|---|---|---|---|
| C-736 | Dicamba potassium | - | - |
| C-737 | Dicamba BAPMA salt | - | - |
| C-738 | Glufosinate | Isoxaflutole | Saflufenacil |
| C-739 | Glufosinate | Pyroxasulfone | Saflufenacil |
| C-740 | Glufosinate | Isoxaflutole + pyroxasulfone | Saflufenacil |
| C-741 | Glufosinate | Isoxaflutole + pyroxasulfone + imazethapyr | Saflufenacil |
| C-742 | Glufosinate | Isoxaflutole + pyroxasulfone + imazethapyr ammonium | Saflufenacil |
| C-743 | Glufosinate | Isoxaflutole + pyroxasulfone + imazapic | Saflufenacil |
| C-744 | Glufosinate | Isoxaflutole + pyroxasulfone + imazapic ammonium | Saflufenacil |
| C-745 | Glufosinate | Isoxaflutole + pyroxasulfone + imazaquin | Saflufenacil |
| C-746 | Glufosinate | Isoxaflutole + pyroxasulfone + imazaquin ammonium | Saflufenacil |
| C-747 | Glufosinate | Isoxaflutole + mesotrione | Saflufenacil |
| C-748 | Glufosinate | Isoxaflutole + mesotrione + pyroxasulfone | Saflufenacil |
| C-749 | Glufosinate | Mesotrione + pyroxasulfone | Saflufenacil |
| C-750 | Glufosinate | Pyroxasulfone + imazethapyr | Saflufenacil |
| C-751 | Glufosinate | Pyroxasulfone + imazethapyr ammonium | Saflufenacil |
| C-752 | Glufosinate | Isoxaflutole + imazethapyr | Saflufenacil |
| C-753 | Glufosinate | Isoxaflutole + imazethapyr ammonium | Saflufenacil |
| C-754 | Glufosinate | Mesotrione + imazethapyr | Saflufenacil |
| C-755 | Glufosinate | Mesotrione + imazethapyr ammonium | Saflufenacil |
| C-756 | Glufosinate | Prometryne | Saflufenacil |
| C-757 | Glufosinate | Fluometuron | Saflufenacil |
| C-758 | Glufosinate | Thidiazuron | Saflufenacil |
| C-759 | Glufosinate | Diuron | Saflufenacil |
| C-760 | Glufosinate | Acetochlor | Saflufenacil |
| C-761 | Glufosinate | Metolachlor | Saflufenacil |
| C-762 | Glufosinate | (S)-Metolachlor | Saflufenacil |
| C-763 | Glufosinate | Dimethenamid | Saflufenacil |
| C-764 | Glufosinate | Dimethenamid-P | Saflufenacil |
| C-765 | Glufosinate | Clomazone | Saflufenacil |
| C-766 | Glufosinate | Pendimethalin | Saflufenacil |
| C-767 | Glufosinate | Trifluralin | Saflufenacil |
| C-768 | Glufosinate | Fomesafen | Saflufenacil |
| C-769 | Glufosinate | Oxyfluorfen | Saflufenacil |
| C-770 | Glufosinate | Saflufenacil | Saflufenacil |

(continued)

| Treatment combination | Pre-plant burn-down | Pre-emergence | Pre-harvest desiccation/ defoliation |
|---|---|---|---|
| C-771 | Glufosinate | Trifludimoxazin | Saflufenacil |
| C-772 | Glufosinate | Saflufenacil + trifludimoxazin | Saflufenacil |
| C-773 | Glufosinate | Flumioxazin | Saflufenacil |
| C-774 | Glufosinate | Sulfentrazone | Saflufenacil |
| C-775 | Glufosinate | Bicyclopyrone | Saflufenacil |
| C-776 | Glufosinate | Tembotrione | Saflufenacil |
| C-777 | Glufosinate | Mesotrione | Saflufenacil |
| C-778 | Glufosinate ammonium | Isoxaflutole | Saflufenacil |
| C-779 | Glufosinate ammonium | Pyroxasulfone | Saflufenacil |
| C-780 | Glufosinate ammonium | Isoxaflutole + pyroxasulfone | Saflufenacil |
| C-781 | Glufosinate ammonium | Isoxaflutole + pyroxasulfone + imazethapyr | Saflufenacil |
| C-782 | Glufosinate ammonium | Isoxaflutole + pyroxasulfone + imazethapyr ammonium | Saflufenacil |
| C-783 | Glufosinate ammonium | Isoxaflutole + pyroxasulfone + imazapic | Saflufenacil |
| C-784 | Glufosinate ammonium | Isoxaflutole + pyroxasulfone + imazapic ammonium | Saflufenacil |
| C-785 | Glufosinate ammonium | Isoxaflutole + pyroxasulfone + imazaquin | Saflufenacil |
| C-786 | Glufosinate ammonium | Isoxaflutole + pyroxasul-fone + imazaquin ammonium | Saflufenacil |
| C-787 | Glufosinate ammonium | Isoxaflutole + mesotrione | Saflufenacil |
| C-788 | Glufosinate ammonium | Isoxaflutole + mesotrione + pyroxasulfone | Saflufenacil |
| C-789 | Glufosinate ammonium | Mesotrione + pyroxasulfone | Saflufenacil |
| C-790 | Glufosinate ammonium | Pyroxasulfone + imazethapyr | Saflufenacil |
| C-791 | Glufosinate ammonium | Pyroxasulfone + imazethapyr ammonium | Saflufenacil |
| C-792 | Glufosinate ammonium | Isoxaflutole + imazethapyr | Saflufenacil |
| C-793 | Glufosinate ammonium | Isoxaflutole + imazethapyr ammonium | Saflufenacil |
| C-794 | Glufosinate ammonium | Mesotrione + imazethapyr | Saflufenacil |

(continued)

| Treatment combination | Pre-plant burn-down | Pre-emergence | Pre-harvest desiccation/ defoliation |
|---|---|---|---|
| C-795 | Glufosinate ammonium | Mesotrione + imazethapyr ammonium | Saflufenacil |
| C-796 | Glufosinate ammonium | Prometryne | Saflufenacil |
| C-797 | Glufosinate ammonium | Fluometuron | Saflufenacil |
| C-798 | Glufosinate ammonium | Thidiazuron | Saflufenacil |
| C-799 | Glufosinate ammonium | Diuron | Saflufenacil |
| C-800 | Glufosinate ammonium | Acetochlor | Saflufenacil |
| C-801 | Glufosinate ammonium | Metolachlor | Saflufenacil |
| C-802 | Glufosinate ammonium | (S)-Metolachlor | Saflufenacil |
| C-803 | Glufosinate ammonium | Dimethenamid | Saflufenacil |
| C-804 | Glufosinate ammonium | Dimethenamid-P | Saflufenacil |
| C-805 | Glufosinate ammonium | Clomazone | Saflufenacil |
| C-806 | Glufosinate ammonium | Pendimethalin | Saflufenacil |
| C-807 | Glufosinate ammonium | Trifluralin | Saflufenacil |
| C-808 | Glufosinate ammonium | Fomesafen | Saflufenacil |
| C-809 | Glufosinate ammonium | Oxyfluorfen | Saflufenacil |
| C-810 | Glufosinate ammonium | Saflufenacil | Saflufenacil |
| C-811 | Glufosinate ammonium | Trifludimoxazin | Saflufenacil |
| C-812 | Glufosinate ammonium | Saflufenacil + trifludimoxazin | Saflufenacil |
| C-813 | Glufosinate ammonium | Flumioxazin | Saflufenacil |
| C-814 | Glufosinate ammonium | Sulfentrazone | Saflufenacil |
| C-815 | Glufosinate ammonium | Bicyclopyrone | Saflufenacil |
| C-816 | Glufosinate ammonium | Tembotrione | Saflufenacil |

(continued)

| Treatment combination | Pre-plant burn-down | Pre-emergence | Pre-harvest desiccation/ defoliation |
|---|---|---|---|
| C-817 | Glufosinate ammonium | Mesotrione | Saflufenacil |
| C-818 | L-Glufosinate | Isoxaflutole | Saflufenacil |
| C-819 | L-Glufosinate | Pyroxasulfone | Saflufenacil |
| C-820 | L-Glufosinate | Isoxaflutole + pyroxasulfone | Saflufenacil |
| C-821 | L-Glufosinate | Isoxaflutole + pyroxasulfone + imazethapyr | Saflufenacil |
| C-822 | L-Glufosinate | Isoxaflutole + pyroxasulfone + imazethapyr ammonium | Saflufenacil |
| C-823 | L-Glufosinate | Isoxaflutole + pyroxasulfone + imazapic | Saflufenacil |
| C-824 | L-Glufosinate | Isoxaflutole + pyroxasulfone + imazapic ammonium | Saflufenacil |
| C-825 | L-Glufosinate | Isoxaflutole + pyroxasulfone + imazaquin | Saflufenacil |
| C-826 | L-Glufosinate | Isoxaflutole + pyroxasulfone + imazaquin ammonium | Saflufenacil |
| C-827 | L-Glufosinate | Isoxaflutole + mesotrione | Saflufenacil |
| C-828 | L-Glufosinate | Isoxaflutole + mesotrione + pyroxasulfone | Saflufenacil |
| C-829 | L-Glufosinate | Mesotrione + pyroxasulfone | Saflufenacil |
| C-830 | L-Glufosinate | Pyroxasulfone + imazethapyr | Saflufenacil |
| C-831 | L-Glufosinate | Pyroxasulfone + imazethapyr ammonium | Saflufenacil |
| C-832 | L-Glufosinate | Isoxaflutole + imazethapyr | Saflufenacil |
| C-833 | L-Glufosinate | Isoxaflutole + imazethapyr ammonium | Saflufenacil |
| C-834 | L-Glufosinate | Mesotrione + imazethapyr | Saflufenacil |
| C-835 | L-Glufosinate | Mesotrione + imazethapyr ammonium | Saflufenacil |
| C-836 | L-Glufosinate | Prometryne | Saflufenacil |
| C-837 | L-Glufosinate | Fluometuron | Saflufenacil |
| C-838 | L-Glufosinate | Thidiazuron | Saflufenacil |
| C-839 | L-Glufosinate | Diuron | Saflufenacil |
| C-840 | L-Glufosinate | Acetochlor | Saflufenacil |
| C-841 | L-Glufosinate | Metolachlor | Saflufenacil |
| C-842 | L-Glufosinate | (S)-Metolachlor | Saflufenacil |
| C-843 | L-Glufosinate | Dimethenamid | Saflufenacil |
| C-844 | L-Glufosinate | Dimethenamid-P | Saflufenacil |
| C-845 | L-Glufosinate | Clomazone | Saflufenacil |
| C-846 | L-Glufosinate | Pendimethalin | Saflufenacil |
| C-847 | L-Glufosinate | Trifluralin | Saflufenacil |
| C-848 | L-Glufosinate | Fomesafen | Saflufenacil |
| C-849 | L-Glufosinate | Oxyfluorfen | Saflufenacil |
| C-850 | L-Glufosinate | Saflufenacil | Saflufenacil |

(continued)

| Treatment combination | Pre-plant burn-down | Pre-emergence | Pre-harvest desiccation/ defoliation |
|---|---|---|---|
| C-851 | L-Glufosinate | Trifludimoxazin | Saflufenacil |
| C-852 | L-Glufosinate | Saflufenacil + trifludimoxazin | Saflufenacil |
| C-853 | L-Glufosinate | Flumioxazin | Saflufenacil |
| C-854 | L-Glufosinate | Sulfentrazone | Saflufenacil |
| C-855 | L-Glufosinate | Bicyclopyrone | Saflufenacil |
| C-856 | L-Glufosinate | Tembotrione | Saflufenacil |
| C-857 | L-Glufosinate | Mesotrione | Saflufenacil |
| C-858 | L-Glufosinate ammonium | Isoxaflutole | Saflufenacil |
| C-859 | L-Glufosinate ammonium | Pyroxasulfone | Saflufenacil |
| C-860 | L-Glufosinate ammonium | Isoxaflutole + pyroxasulfone | Saflufenacil |
| C-861 | L-Glufosinate ammonium | Isoxaflutole + pyroxasulfone + imazethapyr | Saflufenacil |
| C-862 | L-Glufosinate ammonium | Isoxaflutole + pyroxasulfone + imazethapyr ammonium | Saflufenacil |
| C-863 | L-Glufosinate ammonium | Isoxaflutole + pyroxasulfone + imazapic | Saflufenacil |
| C-864 | L-Glufosinate ammonium | Isoxaflutole + pyroxasulfone + imazapic ammonium | Saflufenacil |
| C-865 | L-Glufosinate ammonium | Isoxaflutole + pyroxasulfone + imazaquin | Saflufenacil |
| C-866 | L-Glufosinate ammonium | Isoxaflutole + pyroxasulfone + imazaquin ammonium | Saflufenacil |
| C-867 | L-Glufosinate ammonium | Isoxaflutole + mesotrione | Saflufenacil |
| C-868 | L-Glufosinate ammonium | Isoxaflutole + mesotrione + pyroxasulfone | Saflufenacil |
| C-869 | L-Glufosinate ammonium | Mesotrione + pyroxasulfone | Saflufenacil |
| C-870 | L-Glufosinate ammonium | Pyroxasulfone + imazethapyr | Saflufenacil |
| C-871 | L-Glufosinate ammonium | Pyroxasulfone + imazethapyr ammonium | Saflufenacil |
| C-872 | L-Glufosinate ammonium | Isoxaflutole + imazethapyr | Saflufenacil |
| C-873 | L-Glufosinate ammonium | Isoxaflutole + imazethapyr ammonium | Saflufenacil |
| C-874 | L-Glufosinate ammonium | Mesotrione + imazethapyr | Saflufenacil |

(continued)

| Treatment combination | Pre-plant burn-down | Pre-emergence | Pre-harvest desiccation/ defoliation |
|---|---|---|---|
| C-875 | L-Glufosinate ammonium | Mesotrione + imazethapyr ammonium | Saflufenacil |
| C-876 | L-Glufosinate ammonium | Prometryne | Saflufenacil |
| C-877 | L-Glufosinate ammonium | Fluometuron | Saflufenacil |
| C-878 | L-Glufosinate ammonium | Thidiazuron | Saflufenacil |
| C-879 | L-Glufosinate ammonium | Diuron | Saflufenacil |
| C-880 | L-Glufosinate ammonium | Acetochlor | Saflufenacil |
| C-881 | L-Glufosinate ammonium | Metolachlor | Saflufenacil |
| C-882 | L-Glufosinate ammonium | (S)-Metolachlor | Saflufenacil |
| C-883 | L-Glufosinate ammonium | Dimethenamid | Saflufenacil |
| C-884 | L-Glufosinate ammonium | Dimethenamid-P | Saflufenacil |
| C-885 | L-Glufosinate ammonium | Clomazone | Saflufenacil |
| C-886 | L-Glufosinate ammonium | Pendimethalin | Saflufenacil |
| C-887 | L-Glufosinate ammonium | Trifluralin | Saflufenacil |
| C-888 | L-Glufosinate ammonium | Fomesafen | Saflufenacil |
| C-889 | L-Glufosinate ammonium | Oxyfluorfen | Saflufenacil |
| C-890 | L-Glufosinate ammonium | Saflufenacil | Saflufenacil |
| C-891 | L-Glufosinate ammonium | Trifludimoxazin | Saflufenacil |
| C-892 | L-Glufosinate ammonium | Saflufenacil + trifludimoxazin | Saflufenacil |
| C-893 | L-Glufosinate ammonium | Flumioxazin | Saflufenacil |
| C-894 | L-Glufosinate ammonium | Sulfentrazone | Saflufenacil |
| C-895 | L-Glufosinate ammonium | Bicyclopyrone | Saflufenacil |
| C-896 | L-Glufosinate ammonium | Tembotrione | Saflufenacil |

(continued)

| Treatment combination | Pre-plant burn-down | Pre-emergence | Pre-harvest desiccation/ defoliation |
|---|---|---|---|
| C-897 | L-Glufosinate ammonium | Mesotrione | Saflufenacil |
| C-898 | L-Glufosinate sodium | Isoxaflutole | Saflufenacil |
| C-899 | L-Glufosinate sodium | Pyroxasulfone | Saflufenacil |
| C-900 | L-Glufosinate sodium | Isoxaflutole + pyroxasulfone | Saflufenacil |
| C-901 | L-Glufosinate sodium | Isoxaflutole + pyroxasulfone + imazethapyr | Saflufenacil |
| C-902 | L-Glufosinate sodium | Isoxaflutole + pyroxasulfone + imazethapyr ammonium | Saflufenacil |
| C-903 | L-Glufosinate sodium | Isoxaflutole + pyroxasulfone + imazapic | Saflufenacil |
| C-904 | L-Glufosinate sodium | Isoxaflutole + pyroxasulfone + imazapic ammonium | Saflufenacil |
| C-905 | L-Glufosinate sodium | Isoxaflutole + pyroxasulfone + imazaquin | Saflufenacil |
| C-906 | L-Glufosinate sodium | Isoxaflutole + pyroxasulfone + imazaquin ammonium | Saflufenacil |
| C-907 | L-Glufosinate sodium | Isoxaflutole + mesotrione | Saflufenacil |
| C-908 | L-Glufosinate sodium | Isoxaflutole + mesotrione + pyroxasulfone | Saflufenacil |
| C-909 | L-Glufosinate sodium | Mesotrione + pyroxasulfone | Saflufenacil |
| C-910 | L-Glufosinate sodium | Pyroxasulfone + imazethapyr | Saflufenacil |
| C-911 | L-Glufosinate sodium | Pyroxasulfone + imazethapyr ammonium | Saflufenacil |
| C-912 | L-Glufosinate sodium | Isoxaflutole + imazethapyr | Saflufenacil |
| C-913 | L-Glufosinate sodium | Isoxaflutole + imazethapyr ammonium | Saflufenacil |
| C-914 | L-Glufosinate sodium | Mesotrione + imazethapyr | Saflufenacil |
| C-915 | L-Glufosinate sodium | Mesotrione + imazethapyr ammonium | Saflufenacil |
| C-916 | L-Glufosinate sodium | Prometryne | Saflufenacil |
| C-917 | L-Glufosinate sodium | Fluometuron | Saflufenacil |
| C-918 | L-Glufosinate sodium | Thidiazuron | Saflufenacil |
| C-919 | L-Glufosinate sodium | Diuron | Saflufenacil |
| C-920 | L-Glufosinate sodium | Acetochlor | Saflufenacil |
| C-921 | L-Glufosinate sodium | Metolachlor | Saflufenacil |
| C-922 | L-Glufosinate sodium | (S)-Metolachlor | Saflufenacil |
| C-923 | L-Glufosinate sodium | Dimethenamid | Saflufenacil |
| C-924 | L-Glufosinate sodium | Dimethenamid-P | Saflufenacil |
| C-925 | L-Glufosinate sodium | Clomazone | Saflufenacil |
| C-926 | L-Glufosinate sodium | Pendimethalin | Saflufenacil |
| C-927 | L-Glufosinate sodium | Trifluralin | Saflufenacil |
| C-928 | L-Glufosinate sodium | Fomesafen | Saflufenacil |
| C-929 | L-Glufosinate sodium | Oxyfluorfen | Saflufenacil |
| C-930 | L-Glufosinate sodium | Saflufenacil | Saflufenacil |

(continued)

| Treatment combination | Pre-plant burn-down | Pre-emergence | Pre-harvest desiccation/ defoliation |
|---|---|---|---|
| C-931 | L-Glufosinate sodium | Trifludimoxazin | Saflufenacil |
| C-932 | L-Glufosinate sodium | Saflufenacil + trifludimoxazin | Saflufenacil |
| C-933 | L-Glufosinate sodium | Flumioxazin | Saflufenacil |
| C-934 | L-Glufosinate sodium | Sulfentrazone | Saflufenacil |
| C-935 | L-Glufosinate sodium | Bicyclopyrone | Saflufenacil |
| C-936 | L-Glufosinate sodium | Tembotrione | Saflufenacil |
| C-937 | L-Glufosinate sodium | Mesotrione | Saflufenacil |
| C-938 | Glyphosate | Isoxaflutole | Saflufenacil |
| C-939 | Glyphosate | Pyroxasulfone | Saflufenacil |
| C-940 | Glyphosate | Isoxaflutole + pyroxasulfone | Saflufenacil |
| C-941 | Glyphosate | Isoxaflutole + pyroxasulfone + imazethapyr | Saflufenacil |
| C-942 | Glyphosate | Isoxaflutole + pyroxasulfone + imazethapyr ammonium | Saflufenacil |
| C-943 | Glyphosate | Isoxaflutole + pyroxasulfone + imazapic | Saflufenacil |
| C-944 | Glyphosate | Isoxaflutole + pyroxasulfone + imazapic ammonium | Saflufenacil |
| C-945 | Glyphosate | Isoxaflutole + pyroxasulfone + imazaquin | Saflufenacil |
| C-946 | Glyphosate | Isoxaflutole + pyroxasulfone + imazaquin ammonium | Saflufenacil |
| C-947 | Glyphosate | Isoxaflutole + mesotrione | Saflufenacil |
| C-948 | Glyphosate | Isoxaflutole + mesotrione + pyroxasulfone | Saflufenacil |
| C-949 | Glyphosate | Mesotrione + pyroxasulfone | Saflufenacil |
| C-950 | Glyphosate | Pyroxasulfone + imazethapyr | Saflufenacil |
| C-951 | Glyphosate | Pyroxasulfone + imazethapyr ammonium | Saflufenacil |
| C-952 | Glyphosate | Isoxaflutole + imazethapyr | Saflufenacil |
| C-953 | Glyphosate | Isoxaflutole + imazethapyr ammonium | Saflufenacil |
| C-954 | Glyphosate | Mesotrione + imazethapyr | Saflufenacil |
| C-955 | Glyphosate | Mesotrione + imazethapyr ammonium | Saflufenacil |
| C-956 | Glyphosate | Prometryne | Saflufenacil |
| C-957 | Glyphosate | Fluometuron | Saflufenacil |
| C-958 | Glyphosate | Thidiazuron | Saflufenacil |
| C-959 | Glyphosate | Diuron | Saflufenacil |
| C-960 | Glyphosate | Acetochlor | Saflufenacil |
| C-961 | Glyphosate | Metolachlor | Saflufenacil |
| C-962 | Glyphosate | (S)-Metolachlor | Saflufenacil |
| C-963 | Glyphosate | Dimethenamid | Saflufenacil |
| C-964 | Glyphosate | Dimethenamid-P | Saflufenacil |
| C-965 | Glyphosate | Clomazone | Saflufenacil |

(continued)

| Treatment combination | Pre-plant burn-down | Pre-emergence | Pre-harvest desiccation/ defoliation |
|---|---|---|---|
| C-966 | Glyphosate | Pendimethalin | Saflufenacil |
| C-967 | Glyphosate | Trifluralin | Saflufenacil |
| C-968 | Glyphosate | Fomesafen | Saflufenacil |
| C-969 | Glyphosate | Oxyfluorfen | Saflufenacil |
| C-970 | Glyphosate | Saflufenacil | Saflufenacil |
| C-971 | Glyphosate | Trifludimoxazin | Saflufenacil |
| C-972 | Glyphosate | Saflufenacil + trifludimoxazin | Saflufenacil |
| C-973 | Glyphosate | Flumioxazin | Saflufenacil |
| C-974 | Glyphosate | Sulfentrazone | Saflufenacil |
| C-975 | Glyphosate | Bicyclopyrone | Saflufenacil |
| C-976 | Glyphosate | Tembotrione | Saflufenacil |
| C-977 | Glyphosate | Mesotrione | Saflufenacil |
| C-978 | Glyphosate dimethylammonium | Isoxaflutole | Saflufenacil |
| C-979 | Glyphosate dimethylammonium | Pyroxasulfone | Saflufenacil |
| C-980 | Glyphosate dimethylammonium | Isoxaflutole + pyroxasulfone | Saflufenacil |
| C-981 | Glyphosate dimethylammonium | Isoxaflutole + pyroxasulfone + imazethapyr | Saflufenacil |
| C-982 | Glyphosate dimethylammonium | Isoxaflutole + pyroxasulfone + imazethapyr ammonium | Saflufenacil |
| C-983 | Glyphosate dimethylammonium | Isoxaflutole + pyroxasulfone + imazapic | Saflufenacil |
| C-984 | Glyphosate dimethylammonium | Isoxaflutole + pyroxasulfone + imazapic ammonium | Saflufenacil |
| C-985 | Glyphosate dimethylammonium | Isoxaflutole + pyroxasulfone + imazaquin | Saflufenacil |
| C-986 | Glyphosate dimethylammonium | Isoxaflutole + pyroxasulfone + imazaquin ammonium | Saflufenacil |
| C-987 | Glyphosate dimethylammonium | Isoxaflutole + mesotrione | Saflufenacil |
| C-988 | Glyphosate dimethylammonium | Isoxaflutole + mesotrione + pyroxasulfone | Saflufenacil |
| C-989 | Glyphosate dimethylammonium | Mesotrione + pyroxasulfone | Saflufenacil |
| C-990 | Glyphosate dimethylammonium | Pyroxasulfone + imazethapyr | Saflufenacil |
| C-991 | Glyphosate dimethylammonium | Pyroxasulfone + imazethapyr ammonium | Saflufenacil |
| C-992 | Glyphosate dimethylammonium | Isoxaflutole + imazethapyr | Saflufenacil |

(continued)

| Treatment combination | Pre-plant burn-down | Pre-emergence | Pre-harvest desiccation/ defoliation |
|---|---|---|---|
| C-993 | Glyphosate dimethylammonium | Isoxaflutole + imazethapyr ammonium | Saflufenacil |
| C-994 | Glyphosate dimethylammonium | Mesotrione + imazethapyr | Saflufenacil |
| C-995 | Glyphosate dimethylammonium | Mesotrione + imazethapyr ammonium | Saflufenacil |
| C-996 | Glyphosate dimethylammonium | Prometryne | Saflufenacil |
| C-997 | Glyphosate dimethylammonium | Fluometuron | Saflufenacil |
| C-998 | Glyphosate dimethylammonium | Thidiazuron | Saflufenacil |
| C-999 | Glyphosate dimethylammo-nium | Diuron | Saflufenacil |
| C-1000 | Glyphosate dimethylammonium | Acetochlor | Saflufenacil |
| C-1001 | Glyphosate dimethylammonium | Metolachlor | Saflufenacil |
| C-1002 | Glyphosate dimethylammonium | (S)-Metolachlor | Saflufenacil |
| C-1003 | Glyphosate dimethylammonium | Dimethenamid | Saflufenacil |
| C-1004 | Glyphosate dimethylammonium | Dimethenamid-P | Saflufenacil |
| C-1005 | Glyphosate dimethylammonium | Clomazone | Saflufenacil |
| C-1006 | Glyphosate dimethylammonium | Pendimethalin | Saflufenacil |
| C-1007 | Glyphosate dimethylammonium | Trifluralin | Saflufenacil |
| C-1008 | Glyphosate dimethylammonium | Fomesafen | Saflufenacil |
| C-1009 | Glyphosate dimethylammonium | Oxyfluorfen | Saflufenacil |
| C-1010 | Glyphosate dimethylammonium | Saflufenacil | Saflufenacil |
| C-1011 | Glyphosate dimethylammonium | Trifludimoxazin | Saflufenacil |
| C-1012 | Glyphosate dimethylammonium | Saflufenacil + trifludimoxazin | Saflufenacil |
| C-1013 | Glyphosate dimethylammonium | Flumioxazin | Saflufenacil |
| C-1014 | Glyphosate dimethylammonium | Sulfentrazone | Saflufenacil |

(continued)

| Treatment combination | Pre-plant burn-down | Pre-emergence | Pre-harvest desiccation/ defoliation |
|---|---|---|---|
| C-1015 | Glyphosate dimethylammonium | Bicyclopyrone | Saflufenacil |
| C-1016 | Glyphosate dimethylammonium | Tembotrione | Saflufenacil |
| C-1017 | Glyphosate dimethylammonium | Mesotrione | Saflufenacil |
| C-1018 | Glyphosate potassium | Isoxaflutole | Saflufenacil |
| C-1019 | Glyphosate potassium | Pyroxasulfone | Saflufenacil |
| C-1020 | Glyphosate potassium | Isoxaflutole + pyroxasulfone | Saflufenacil |
| C-1021 | Glyphosate potassium | Isoxaflutole + pyroxasulfone + imazethapyr | Saflufenacil |
| C-1022 | Glyphosate potassium | Isoxaflutole + pyroxasulfone + imazethapyr ammonium | Saflufenacil |
| C-1023 | Glyphosate potassium | Isoxaflutole + pyroxasulfone + imazapic | Saflufenacil |
| C-1024 | Glyphosate potassium | Isoxaflutole + pyroxasulfone + imazapic ammonium | Saflufenacil |
| C-1025 | Glyphosate potassium | Isoxaflutole + pyroxasulfone + imazaquin | Saflufenacil |
| C-1026 | Glyphosate potassium | Isoxaflutole + pyroxasulfone + imazaquin ammonium | Saflufenacil |
| C-1027 | Glyphosate potassium | Isoxaflutole + mesotrione | Saflufenacil |
| C-1028 | Glyphosate potassium | Isoxaflutole + mesotrione + pyroxasulfone | Saflufenacil |
| C-1029 | Glyphosate potassium | Mesotrione + pyroxasulfone | Saflufenacil |
| C-1030 | Glyphosate potassium | Pyroxasulfone + imazethapyr | Saflufenacil |
| C-1031 | Glyphosate potassium | Pyroxasulfone + imazethapyr ammonium | Saflufenacil |
| C-1032 | Glyphosate potassium | Isoxaflutole + imazethapyr | Saflufenacil |
| C-1033 | Glyphosate potassium | Isoxaflutole + imazethapyr ammonium | Saflufenacil |
| C-1034 | Glyphosate potassium | Mesotrione + imazethapyr | Saflufenacil |
| C-1035 | Glyphosate potassium | Mesotrione + imazethapyr ammonium | Saflufenacil |
| C-1036 | Glyphosate potassium | Prometryne | Saflufenacil |
| C-1037 | Glyphosate potassium | Fluometuron | Saflufenacil |
| C-1038 | Glyphosate potassium | Thidiazuron | Saflufenacil |
| C-1039 | Glyphosate potassium | Diuron | Saflufenacil |
| C-1040 | Glyphosate potassium | Acetochlor | Saflufenacil |
| C-1041 | Glyphosate potassium | Metolachlor | Saflufenacil |
| C-1042 | Glyphosate potassium | (S)-Metolachlor | Saflufenacil |
| C-1043 | Glyphosate potassium | Dimethenamid | Saflufenacil |
| C-1044 | Glyphosate potassium | Dimethenamid-P | Saflufenacil |
| C-1045 | Glyphosate potassium | Clomazone | Saflufenacil |
| C-1046 | Glyphosate potassium | Pendimethalin | Saflufenacil |
| C-1047 | Glyphosate potassium | Trifluralin | Saflufenacil |

(continued)

| Treatment combination | Pre-plant burn-down | Pre-emergence | Pre-harvest desiccation/ defoliation |
|---|---|---|---|
| C-1048 | Glyphosate potassium | Fomesafen | Saflufenacil |
| C-1049 | Glyphosate potassium | Oxyfluorfen | Saflufenacil |
| C-1050 | Glyphosate potassium | Saflufenacil | Saflufenacil |
| C-1051 | Glyphosate potassium | Trifludimoxazin | Saflufenacil |
| C-1052 | Glyphosate potassium | Saflufenacil + trifludimoxazin | Saflufenacil |
| C-1053 | Glyphosate potassium | Flumioxazin | Saflufenacil |
| C-1054 | Glyphosate potassium | Sulfentrazone | Saflufenacil |
| C-1055 | Glyphosate potassium | Bicyclopyrone | Saflufenacil |
| C-1056 | Glyphosate potassium | Tembotrione | Saflufenacil |
| C-1057 | Glyphosate potassium | Mesotrione | Saflufenacil |
| C-1058 | Glyphosate isopropylammonium | Isoxaflutole | Saflufenacil |
| C-1059 | Glyphosate isopropylammonium | Pyroxasulfone | Saflufenacil |
| C-1060 | Glyphosate isopropylammonium | Isoxaflutole + pyroxasulfone | Saflufenacil |
| C-1061 | Glyphosate isopropylammonium | Isoxaflutole + pyroxasulfone + imazethapyr | Saflufenacil |
| C-1062 | Glyphosate isopropylammonium | Isoxaflutole + pyroxasulfone + imazethapyr ammonium | Saflufenacil |
| C-1063 | Glyphosate isopropylammonium | Isoxaflutole + pyroxasulfone + imazapic | Saflufenacil |
| C-1064 | Glyphosate isopropylammonium | Isoxaflutole + pyroxasulfone + imazapic ammonium | Saflufenacil |
| C-1065 | Glyphosate isopropylammonium | Isoxaflutole + pyroxasulfone + imazaquin | Saflufenacil |
| C-1066 | Glyphosate isopropylammonium | Isoxaflutole + pyroxasulfone + imazaquin ammonium | Saflufenacil |
| C-1067 | Glyphosate isopropylammonium | Isoxaflutole + mesotrione | Saflufenacil |
| C-1068 | Glyphosate isopropylammonium | Isoxaflutole + mesotrione + pyroxasulfone | Saflufenacil |
| C-1069 | Glyphosate isopropylammonium | Mesotrione + pyroxasulfone | Saflufenacil |
| C-1070 | Glyphosate isopropylammonium | Pyroxasulfone + imazethapyr | Saflufenacil |
| C-1071 | Glyphosate isopropylammonium | Pyroxasulfone + imazethapyr ammonium | Saflufenacil |
| C-1072 | Glyphosate isopropylammonium | Isoxaflutole + imazethapyr | Saflufenacil |
| C-1073 | Glyphosate isopropylammonium | Isoxaflutole + imazethapyr ammonium | Saflufenacil |

(continued)

| Treatment combination | Pre-plant burn-down | Pre-emergence | Pre-harvest desiccation/ defoliation |
|---|---|---|---|
| C-1074 | Glyphosate isopropylammonium | Mesotrione + imazethapyr | Saflufenacil |
| C-1075 | Glyphosate isopropylammonium | Mesotrione + imazethapyr ammonium | Saflufenacil |
| C-1076 | Glyphosate isopropylammonium | Prometryne | Saflufenacil |
| C-1077 | Glyphosate isopropylammonium | Fluometuron | Saflufenacil |
| C-1078 | Glyphosate isopropylammonium | Thidiazuron | Saflufenacil |
| C-1079 | Glyphosate isopropylammonium | Diuron | Saflufenacil |
| C-1080 | Glyphosate isopropylammonium | Acetochlor | Saflufenacil |
| C-1081 | Glyphosate isopropylammonium | Metolachlor | Saflufenacil |
| C-1082 | Glyphosate isopropylammonium | (S)-Metolachlor | Saflufenacil |
| C-1083 | Glyphosate isopropylammonium | Dimethenamid | Saflufenacil |
| C-1084 | Glyphosate isopropylammonium | Dimethenamid-P | Saflufenacil |
| C-1085 | Glyphosate isopropylammonium | Clomazone | Saflufenacil |
| C-1086 | Glyphosate isopropylammonium | Pendimethalin | Saflufenacil |
| C-1087 | Glyphosate isopropylammonium | Trifluralin | Saflufenacil |
| C-1088 | Glyphosate isopropylammonium | Fomesafen | Saflufenacil |
| C-1089 | Glyphosate isopropylammonium | Oxyfluorfen | Saflufenacil |
| C-1090 | Glyphosate isopropylammonium | Saflufenacil | Saflufenacil |
| C-1091 | Glyphosate isopropylammonium | Trifludimoxazin | Saflufenacil |
| C-1092 | Glyphosate isopropylammonium | Saflufenacil + trifludimoxazin | Saflufenacil |
| C-1093 | Glyphosate isopropylammonium | Flumioxazin | Saflufenacil |
| C-1094 | Glyphosate isopropylammonium | Sulfentrazone | Saflufenacil |
| C-1095 | Glyphosate isopropylammonium | Bicyclopyrone | Saflufenacil |

(continued)

| Treatment combination | Pre-plant burn-down | Pre-emergence | Pre-harvest desiccation/defoliation |
|---|---|---|---|
| C-1096 | Glyphosate isopropylammonium | Tembotrione | Saflufenacil |
| C-1097 | Glyphosate isopropylammonium | Mesotrione | Saflufenacil |
| C-1098 | Saflufenacil | Isoxaflutole | Saflufenacil |
| C-1099 | Saflufenacil | Pyroxasulfone | Saflufenacil |
| C-1100 | Saflufenacil | Isoxaflutole + pyroxasulfone | Saflufenacil |
| C-1101 | Saflufenacil | Isoxaflutole + pyroxasulfone + imazethapyr | Saflufenacil |
| C-1102 | Saflufenacil | Isoxaflutole + pyroxasulfone + imazethapyr ammonium | Saflufenacil |
| C-1103 | Saflufenacil | Isoxaflutole + pyroxasulfone + imazapic | Saflufenacil |
| C-1104 | Saflufenacil | Isoxaflutole + pyroxasulfone + imazapic ammonium | Saflufenacil |
| C-1105 | Saflufenacil | Isoxaflutole + pyroxasulfone + imazaquin | Saflufenacil |
| C-1106 | Saflufenacil | Isoxaflutole + pyroxasulfone + imazaquin ammonium | Saflufenacil |
| C-1107 | Saflufenacil | Isoxaflutole + mesotrione | Saflufenacil |
| C-1108 | Saflufenacil | Isoxaflutole + mesotrione + pyroxasulfone | Saflufenacil |
| C-1109 | Saflufenacil | Mesotrione + pyroxasulfone | Saflufenacil |
| C-1110 | Saflufenacil | Pyroxasulfone + imazethapyr | Saflufenacil |
| C-1111 | Saflufenacil | Pyroxasulfone + imazethapyr ammonium | Saflufenacil |
| C-1112 | Saflufenacil | Isoxaflutole + imazethapyr | Saflufenacil |
| C-1113 | Saflufenacil | Isoxaflutole + imazethapyr ammonium | Saflufenacil |
| C-1114 | Saflufenacil | Mesotrione + imazethapyr | Saflufenacil |
| C-1115 | Saflufenacil | Mesotrione + imazethapyr ammonium | Saflufenacil |
| C-1116 | Saflufenacil | Prometryne | Saflufenacil |
| C-1117 | Saflufenacil | Fluometuron | Saflufenacil |
| C-1118 | Saflufenacil | Thidiazuron | Saflufenacil |
| C-1119 | Saflufenacil | Diuron | Saflufenacil |
| C-1120 | Saflufenacil | Acetochlor | Saflufenacil |
| C-1121 | Saflufenacil | Metolachlor | Saflufenacil |
| C-1122 | Saflufenacil | (S)-Metolachlor | Saflufenacil |
| C-1123 | Saflufenacil | Dimethenamid | Saflufenacil |
| C-1124 | Saflufenacil | Dimethenamid-P | Saflufenacil |
| C-1125 | Saflufenacil | Clomazone | Saflufenacil |
| C-1126 | Saflufenacil | Pendimethalin | Saflufenacil |
| C-1127 | Saflufenacil | Trifluralin | Saflufenacil |
| C-1128 | Saflufenacil | Fomesafen | Saflufenacil |

(continued)

| Treatment combination | Pre-plant burn-down | Pre-emergence | Pre-harvest desiccation/ defoliation |
|---|---|---|---|
| C-1129 | Saflufenacil | Oxyfluorfen | Saflufenacil |
| C-1130 | Saflufenacil | Saflufenacil | Saflufenacil |
| C-1131 | Saflufenacil | Trifludimoxazin | Saflufenacil |
| C-1132 | Saflufenacil | Saflufenacil + trifludimoxazin | Saflufenacil |
| C-1133 | Saflufenacil | Flumioxazin | Saflufenacil |
| C-1134 | Saflufenacil | Sulfentrazone | Saflufenacil |
| C-1135 | Saflufenacil | Bicyclopyrone | Saflufenacil |
| C-1136 | Saflufenacil | Tembotrione | Saflufenacil |
| C-1137 | Saflufenacil | Mesotrione | Saflufenacil |
| C-1138 | Trifludimoxazin | Isoxaflutole | Saflufenacil |
| C-1139 | Trifludimoxazin | Pyroxasulfone | Saflufenacil |
| C-1140 | Trifludimoxazin | Isoxaflutole + pyroxasulfone | Saflufenacil |
| C-1141 | Trifludimoxazin | Isoxaflutole + pyroxasulfone + imazethapyr | Saflufenacil |
| C-1142 | Trifludimoxazin | Isoxaflutole + pyroxasulfone + imazethapyr ammonium | Saflufenacil |
| C-1143 | Trifludimoxazin | Isoxaflutole + pyroxasulfone + imazapic | Saflufenacil |
| C-1144 | Trifludimoxazin | Isoxaflutole + pyroxasulfone + imazapic ammonium | Saflufenacil |
| C-1145 | Trifludimoxazin | Isoxaflutole + pyroxasulfone + imazaquin | Saflufenacil |
| C-1146 | Trifludimoxazin | Isoxaflutole + pyroxasulfone + imazaquin ammonium | Saflufenacil |
| C-1147 | Trifludimoxazin | Isoxaflutole + mesotrione | Saflufenacil |
| C-1148 | Trifludimoxazin | Isoxaflutole + mesotrione + pyroxasulfone | Saflufenacil |
| C-1149 | Trifludimoxazin | Mesotrione + pyroxasulfone | Saflufenacil |
| C-1150 | Trifludimoxazin | Pyroxasulfone + imazethapyr | Saflufenacil |
| C-1151 | Trifludimoxazin | Pyroxasulfone + imazethapyr ammonium | Saflufenacil |
| C-1152 | Trifludimoxazin | Isoxaflutole + imazethapyr | Saflufenacil |
| C-1153 | Trifludimoxazin | Isoxaflutole + imazethapyr ammonium | Saflufenacil |
| C-1154 | Trifludimoxazin | Mesotrione + imazethapyr | Saflufenacil |
| C-1155 | Trifludimoxazin | Mesotrione + imazethapyr ammonium | Saflufenacil |
| C-1156 | Trifludimoxazin | Prometryne | Saflufenacil |
| C-1157 | Trifludimoxazin | Fluometuron | Saflufenacil |
| C-1158 | Trifludimoxazin | Thidiazuron | Saflufenacil |
| C-1159 | Trifludimoxazin | Diuron | Saflufenacil |
| C-1160 | Trifludimoxazin | Acetochlor | Saflufenacil |
| C-1161 | Trifludimoxazin | Metolachlor | Saflufenacil |
| C-1162 | Trifludimoxazin | (S)-Metolachlor | Saflufenacil |
| C-1163 | Trifludimoxazin | Dimethenamid | Saflufenacil |

(continued)

| Treatment combination | Pre-plant burn-down | Pre-emergence | Pre-harvest desiccation/ defoliation |
|---|---|---|---|
| C-1164 | Trifludimoxazin | Dimethenamid-P | Saflufenacil |
| C-1165 | Trifludimoxazin | Clomazone | Saflufenacil |
| C-1166 | Trifludimoxazin | Pendimethalin | Saflufenacil |
| C-1167 | Trifludimoxazin | Trifluralin | Saflufenacil |
| C-1168 | Trifludimoxazin | Fomesafen | Saflufenacil |
| C-1169 | Trifludimoxazin | Oxyfluorfen | Saflufenacil |
| C-1170 | Trifludimoxazin | Saflufenacil | Saflufenacil |
| C-1171 | Trifludimoxazin | Trifludimoxazin | Saflufenacil |
| C-1172 | Trifludimoxazin | Saflufenacil + trifludimoxazin | Saflufenacil |
| C-1173 | Trifludimoxazin | Flumioxazin | Saflufenacil |
| C-1174 | Trifludimoxazin | Sulfentrazone | Saflufenacil |
| C-1175 | Trifludimoxazin | Bicyclopyrone | Saflufenacil |
| C-1176 | Trifludimoxazin | Tembotrione | Saflufenacil |
| C-1177 | Trifludimoxazin | Mesotrione | Saflufenacil |
| C-1178 | Saflufenacil + trifludimoxazin | Isoxaflutole | Saflufenacil |
| C-1179 | Saflufenacil + trifludimoxazin | Pyroxasulfone | Saflufenacil |
| C-1180 | Saflufenacil + trifludimoxazin | Isoxaflutole + pyroxasulfone | Saflufenacil |
| C-1181 | Saflufenacil + trifludimoxazin | Isoxaflutole + pyroxasulfone + imazethapyr | Saflufenacil |
| C-1182 | Saflufenacil + trifludimoxazin | Isoxaflutole + pyroxasulfone + imazethapyr ammonium | Saflufenacil |
| C-1183 | Saflufenacil + trifludimoxazin | Isoxaflutole + pyroxasulfone + imazapic | Saflufenacil |
| C-1184 | Saflufenacil + trifludimoxazin | Isoxaflutole + pyroxasulfone + imazapic ammonium | Saflufenacil |
| C-1185 | Saflufenacil + trifludimoxazin | Isoxaflutole + pyroxasulfone + imazaquin | Saflufenacil |
| C-1186 | Saflufenacil + trifludimoxazin | Isoxaflutole + pyroxasulfone + imazaquin ammonium | Saflufenacil |
| C-1187 | Saflufenacil + trifludimoxazin | Isoxaflutole + mesotrione | Saflufenacil |
| C-1188 | Saflufenacil + trifludimoxazin | Isoxaflutole + mesotrione + pyroxasulfone | Saflufenacil |
| C-1189 | Saflufenacil + trifludimoxazin | Mesotrione + pyroxasulfone | Saflufenacil |
| C-1190 | Saflufenacil + trifludimoxazin | Pyroxasulfone + imazethapyr | Saflufenacil |

(continued)

| Treatment combination | Pre-plant burn-down | Pre-emergence | Pre-harvest desiccation/ defoliation |
|---|---|---|---|
| C-1191 | Saflufenacil + trifludimoxazin | Pyroxasulfone + imazethapyr ammonium | Saflufenacil |
| C-1192 | Saflufenacil + trifludimoxazin | Isoxaflutole + imazethapyr | Saflufenacil |
| C-1193 | Saflufenacil + trifludimoxazin | Isoxaflutole + imazethapyr ammonium | Saflufenacil |
| C-1194 | Saflufenacil + trifludimoxazin | Mesotrione + imazethapyr | Saflufenacil |
| C-1195 | Saflufenacil + trifludimoxazin | Mesotrione + imazethapyr ammonium | Saflufenacil |
| C-1196 | Saflufenacil + trifludimoxazin | Prometryne | Saflufenacil |
| C-1197 | Saflufenacil + trifludimoxazin | Fluometuron | Saflufenacil |
| C-1198 | Saflufenacil + trifludimoxazin | Thidiazuron | Saflufenacil |
| C-1199 | Saflufenacil + trifludimoxazin | Diuron | Saflufenacil |
| C-1200 | Saflufenacil + trifludimoxazin | Acetochlor | Saflufenacil |
| C-1201 | Saflufenacil + trifludimoxazin | Metolachlor | Saflufenacil |
| C-1202 | Saflufenacil + trifludimoxazin | (S)-Metolachlor | Saflufenacil |
| C-1203 | Saflufenacil + trifludimoxazin | Dimethenamid | Saflufenacil |
| C-1204 | Saflufenacil + trifludimoxazin | Dimethenamid-P | Saflufenacil |
| C-1205 | Saflufenacil + trifludimoxazin | Clomazone | Saflufenacil |
| C-1206 | Saflufenacil + trifludimoxazin | Pendimethalin | Saflufenacil |
| C-1207 | Saflufenacil + trifludimoxazin | Trifluralin | Saflufenacil |
| C-1208 | Saflufenacil + trifludimoxazin | Fomesafen | Saflufenacil |
| C-1209 | Saflufenacil + trifludimoxazin | Oxyfluorfen | Saflufenacil |
| C-1210 | Saflufenacil + trifludimoxazin | Saflufenacil | Saflufenacil |
| C-1211 | Saflufenacil + trifludimoxazin | Trifludimoxazin | Saflufenacil |
| C-1212 | Saflufenacil + trifludimoxazin | Saflufenacil + trifludimoxazin | Saflufenacil |

(continued)

| Treatment combination | Pre-plant burn-down | Pre-emergence | Pre-harvest desiccation/ defoliation |
|---|---|---|---|
| C-1213 | Saflufenacil + trifludimoxazin | Flumioxazin | Saflufenacil |
| C-1214 | Saflufenacil + trifludimoxazin | Sulfentrazone | Saflufenacil |
| C-1215 | Saflufenacil + trifludimoxazin | Bicyclopyrone | Saflufenacil |
| C-1216 | Saflufenacil + trifludimoxazin | Tembotrione | Saflufenacil |
| C-1217 | Saflufenacil + trifludimoxazin | Mesotrione | Saflufenacil |
| C-1218 | Dicamba | Isoxaflutole | Saflufenacil |
| C-1219 | Dicamba | Pyroxasulfone | Saflufenacil |
| C-1220 | Dicamba | Isoxaflutole + pyroxasulfone | Saflufenacil |
| C-1221 | Dicamba | Isoxaflutole + pyroxasulfone + imazethapyr | Saflufenacil |
| C-1222 | Dicamba | Isoxaflutole + pyroxasulfone + imazethapyr ammonium | Saflufenacil |
| C-1223 | Dicamba | Isoxaflutole + pyroxasulfone + imazapic | Saflufenacil |
| C-1224 | Dicamba | Isoxaflutole + pyroxasulfone + imazapic ammonium | Saflufenacil |
| C-1225 | Dicamba | Isoxaflutole + pyroxasulfone + imazaquin | Saflufenacil |
| C-1226 | Dicamba | Isoxaflutole + pyroxasulfone + imazaquin ammonium | Saflufenacil |
| C-1227 | Dicamba | Isoxaflutole + mesotrione | Saflufenacil |
| C-1228 | Dicamba | Isoxaflutole + mesotrione + pyroxasulfone | Saflufenacil |
| C-1229 | Dicamba | Mesotrione + pyroxasulfone | Saflufenacil |
| C-1230 | Dicamba | Pyroxasulfone + imazethapyr | Saflufenacil |
| C-1231 | Dicamba | Pyroxasulfone + imazethapyr ammonium | Saflufenacil |
| C-1232 | Dicamba | Isoxaflutole + imazethapyr | Saflufenacil |
| C-1233 | Dicamba | Isoxaflutole + imazethapyr ammonium | Saflufenacil |
| C-1234 | Dicamba | Mesotrione + imazethapyr | Saflufenacil |
| C-1235 | Dicamba | Mesotrione + imazethapyr ammonium | Saflufenacil |
| C-1236 | Dicamba | Prometryne | Saflufenacil |
| C-1237 | Dicamba | Fluometuron | Saflufenacil |
| C-1238 | Dicamba | Thidiazuron | Saflufenacil |
| C-1239 | Dicamba | Diuron | Saflufenacil |
| C-1240 | Dicamba | Acetochlor | Saflufenacil |
| C-1241 | Dicamba | Metolachlor | Saflufenacil |
| C-1242 | Dicamba | (S)-Metolachlor | Saflufenacil |
| C-1243 | Dicamba | Dimethenamid | Saflufenacil |

(continued)

| Treatment combination | Pre-plant burn-down | Pre-emergence | Pre-harvest desiccation/ defoliation |
|---|---|---|---|
| C-1244 | Dicamba | Dimethenamid-P | Saflufenacil |
| C-1245 | Dicamba | Clomazone | Saflufenacil |
| C-1246 | Dicamba | Pendimethalin | Saflufenacil |
| C-1247 | Dicamba | Trifluralin | Saflufenacil |
| C-1248 | Dicamba | Fomesafen | Saflufenacil |
| C-1249 | Dicamba | Oxyfluorfen | Saflufenacil |
| C-1250 | Dicamba | Saflufenacil | Saflufenacil |
| C-1251 | Dicamba | Trifludimoxazin | Saflufenacil |
| C-1252 | Dicamba | Saflufenacil + trifludimoxazin | Saflufenacil |
| C-1253 | Dicamba | Flumioxazin | Saflufenacil |
| C-1254 | Dicamba | Sulfentrazone | Saflufenacil |
| C-1255 | Dicamba | Bicyclopyrone | Saflufenacil |
| C-1256 | Dicamba | Tembotrione | Saflufenacil |
| C-1257 | Dicamba | Mesotrione | Saflufenacil |
| C-1258 | Dicamba ethanolamine salt | Isoxaflutole | Saflufenacil |
| C-1259 | Dicamba ethanolamine salt | Pyroxasulfone | Saflufenacil |
| C-1260 | Dicamba ethanolamine salt | Isoxaflutole + pyroxasulfone | Saflufenacil |
| C-1261 | Dicamba ethanolamine salt | Isoxaflutole + pyroxasulfone + imazethapyr | Saflufenacil |
| C-1262 | Dicamba ethanolamine salt | Isoxaflutole + pyroxasulfone + imazethapyr ammonium | Saflufenacil |
| C-1263 | Dicamba ethanolamine salt | Isoxaflutole + pyroxasulfone + imazapic | Saflufenacil |
| C-1264 | Dicamba ethanolamine salt | Isoxaflutole + pyroxasulfone + imazapic ammonium | Saflufenacil |
| C-1265 | Dicamba ethanolamine salt | Isoxaflutole + pyroxasulfone + imazaquin | Saflufenacil |
| C-1266 | Dicamba ethanolamine salt | Isoxaflutole + pyroxasulfone + imazaquin ammonium | Saflufenacil |
| C-1267 | Dicamba ethanolamine salt | Isoxaflutole + mesotrione | Saflufenacil |
| C-1268 | Dicamba ethanolamine salt | Isoxaflutole + mesotrione + pyroxasulfone | Saflufenacil |
| C-1269 | Dicamba ethanolamine salt | Mesotrione + pyroxasulfone | Saflufenacil |
| C-1270 | Dicamba ethanolamine salt | Pyroxasulfone + imazethapyr | Saflufenacil |

(continued)

| Treatment combination | Pre-plant burn-down | Pre-emergence | Pre-harvest desiccation/ defoliation |
|---|---|---|---|
| C-1271 | Dicamba ethanolamine salt | Pyroxasulfone + imazethapyr ammonium | Saflufenacil |
| C-1272 | Dicamba ethanolamine salt | Isoxaflutole + imazethapyr | Saflufenacil |
| C-1273 | Dicamba ethanolamine salt | Isoxaflutole + imazethapyr ammonium | Saflufenacil |
| C-1274 | Dicamba ethanolamine salt | Mesotrione + imazethapyr | Saflufenacil |
| C-1275 | Dicamba ethanolamine salt | Mesotrione + imazethapyr ammonium | Saflufenacil |
| C-1276 | Dicamba ethanolamine salt | Prometryne | Saflufenacil |
| C-1277 | Dicamba ethanolamine salt | Fluometuron | Saflufenacil |
| C-1278 | Dicamba ethanolamine salt | Thidiazuron | Saflufenacil |
| C-1279 | Dicamba ethanolamine salt | Diuron | Saflufenacil |
| C-1280 | Dicamba ethanolamine salt | Acetochlor | Saflufenacil |
| C-1281 | Dicamba ethanolamine salt | Metolachlor | Saflufenacil |
| C-1282 | Dicamba ethanolamine salt | (S)-Metolachlor | Saflufenacil |
| C-1283 | Dicamba ethanolamine salt | Dimethenamid | Saflufenacil |
| C-1284 | Dicamba ethanolamine salt | Dimethenamid-P | Saflufenacil |
| C-1285 | Dicamba ethanolamine salt | Clomazone | Saflufenacil |
| C-1286 | Dicamba ethanolamine salt | Pendimethalin | Saflufenacil |
| C-1287 | Dicamba ethanolamine salt | Trifluralin | Saflufenacil |
| C-1288 | Dicamba ethanolamine salt | Fomesafen | Saflufenacil |
| C-1289 | Dicamba ethanolamine salt | Oxyfluorfen | Saflufenacil |
| C-1290 | Dicamba ethanolamine salt | Saflufenacil | Saflufenacil |
| C-1291 | Dicamba ethanolamine salt | Trifludimoxazin | Saflufenacil |
| C-1292 | Dicamba ethanolamine salt | Saflufenacil + trifludimoxazin | Saflufenacil |

(continued)

| Treatment combination | Pre-plant burn-down | Pre-emergence | Pre-harvest desiccation/ defoliation |
|---|---|---|---|
| C-1293 | Dicamba ethanolamine salt | Flumioxazin | Saflufenacil |
| C-1294 | Dicamba ethanolamine salt | Sulfentrazone | Saflufenacil |
| C-1295 | Dicamba ethanolamine salt | Bicyclopyrone | Saflufenacil |
| C-1296 | Dicamba ethanolamine salt | Tembotrione | Saflufenacil |
| C-1297 | Dicamba ethanolamine salt | Mesotrione | Saflufenacil |
| C-1298 | Dicamba diglycolamine salt | Isoxaflutole | Saflufenacil |
| C-1299 | Dicamba diglycolamine salt | Pyroxasulfone | Saflufenacil |
| C-1300 | Dicamba diglycolamine salt | Isoxaflutole + pyroxasulfone | Saflufenacil |
| C-1301 | Dicamba diglycolamine salt | Isoxaflutole + pyroxasulfone + imazethapyr | Saflufenacil |
| C-1302 | Dicamba diglycolamine salt | Isoxaflutole + pyroxasulfone + imazethapyr ammonium | Saflufenacil |
| C-1303 | Dicamba diglycolamine salt | Isoxaflutole + pyroxasulfone + imazapic | Saflufenacil |
| C-1304 | Dicamba diglycolamine salt | Isoxaflutole + pyroxasulfone + imazapic ammonium | Saflufenacil |
| C-1305 | Dicamba diglycolamine salt | Isoxaflutole + pyroxasulfone + imazaquin | Saflufenacil |
| C-1306 | Dicamba diglycolamine salt | Isoxaflutole + pyroxasulfone + imazaquin ammonium | Saflufenacil |
| C-1307 | Dicamba diglycolamine salt | Isoxaflutole + mesotrione | Saflufenacil |
| C-1308 | Dicamba diglycolamine salt | Isoxaflutole + mesotrione + pyroxasulfone | Saflufenacil |
| C-1309 | Dicamba diglycolamine salt | Mesotrione + pyroxasulfone | Saflufenacil |
| C-1310 | Dicamba diglycolamine salt | Pyroxasulfone + imazethapyr | Saflufenacil |
| C-1311 | Dicamba diglycolamine salt | Pyroxasulfone + imazethapyr ammonium | Saflufenacil |
| C-1312 | Dicamba diglycolamine salt | Isoxaflutole + imazethapyr | Saflufenacil |
| C-1313 | Dicamba diglycolamine salt | Isoxaflutole + imazethapyr ammonium | Saflufenacil |
| C-1314 | Dicamba diglycolamine salt | Mesotrione + imazethapyr | Saflufenacil |

(continued)

| Treatment combination | Pre-plant burn-down | Pre-emergence | Pre-harvest desiccation/defoliation |
|---|---|---|---|
| C-1315 | Dicamba diglycolamine salt | Mesotrione + imazethapyr ammonium | Saflufenacil |
| C-1316 | Dicamba diglycolamine salt | Prometryne | Saflufenacil |
| C-1317 | Dicamba diglycolamine salt | Fluometuron | Saflufenacil |
| C-1318 | Dicamba diglycolamine salt | Thidiazuron | Saflufenacil |
| C-1319 | Dicamba diglycolamine salt | Diuron | Saflufenacil |
| C-1320 | Dicamba diglycolamine salt | Acetochlor | Saflufenacil |
| C-1321 | Dicamba diglycolamine salt | Metolachlor | Saflufenacil |
| C-1322 | Dicamba diglycolamine salt | (S)-Metolachlor | Saflufenacil |
| C-1323 | Dicamba diglycolamine salt | Dimethenamid | Saflufenacil |
| C-1324 | Dicamba diglycolamine salt | Dimethenamid-P | Saflufenacil |
| C-1325 | Dicamba diglycolamine salt | Clomazone | Saflufenacil |
| C-1326 | Dicamba diglycolamine salt | Pendimethalin | Saflufenacil |
| C-1327 | Dicamba diglycolamine salt | Trifluralin | Saflufenacil |
| C-1328 | Dicamba diglycolamine salt | Fomesafen | Saflufenacil |
| C-1329 | Dicamba diglycolamine salt | Oxyfluorfen | Saflufenacil |
| C-1330 | Dicamba diglycolamine salt | Saflufenacil | Saflufenacil |
| C-1331 | Dicamba diglycolamine salt | Trifludimoxazin | Saflufenacil |
| C-1332 | Dicamba diglycolamine salt | Saflufenacil + trifludimoxazin | Saflufenacil |
| C-1333 | Dicamba diglycolamine salt | Flumioxazin | Saflufenacil |
| C-1334 | Dicamba diglycolamine salt | Sulfentrazone | Saflufenacil |
| C-1335 | Dicamba diglycolamine salt | Bicyclopyrone | Saflufenacil |
| C-1336 | Dicamba diglycolamine salt | Tembotrione | Saflufenacil |

(continued)

| Treatment combination | Pre-plant burn-down | Pre-emergence | Pre-harvest desiccation/ defoliation |
|---|---|---|---|
| C-1337 | Dicamba diglycolamine salt | Mesotrione | Saflufenacil |
| C-1338 | Dicamba potassium | Isoxaflutole | Saflufenacil |
| C-1339 | Dicamba potassium | Pyroxasulfone | Saflufenacil |
| C-1340 | Dicamba potassium | Isoxaflutole + pyroxasulfone | Saflufenacil |
| C-1341 | Dicamba potassium | Isoxaflutole + pyroxasulfone + imazethapyr | Saflufenacil |
| C-1342 | Dicamba potassium | Isoxaflutole + pyroxasulfone + imazethapyr ammonium | Saflufenacil |
| C-1343 | Dicamba potassium | Isoxaflutole + pyroxasulfone + imazapic | Saflufenacil |
| C-1344 | Dicamba potassium | Isoxaflutole + pyroxasulfone + imazapic ammonium | Saflufenacil |
| C-1345 | Dicamba potassium | Isoxaflutole + pyroxasulfone + imazaquin | Saflufenacil |
| C-1346 | Dicamba potassium | Isoxaflutole + pyroxasulfone + imazaquin ammonium | Saflufenacil |
| C-1347 | Dicamba potassium | Isoxaflutole + mesotrione | Saflufenacil |
| C-1348 | Dicamba potassium | Isoxaflutole + mesotrione + pyroxasulfone | Saflufenacil |
| C-1349 | Dicamba potassium | Mesotrione + pyroxasulfone | Saflufenacil |
| C-1350 | Dicamba potassium | Pyroxasulfone + imazethapyr | Saflufenacil |
| C-1351 | Dicamba potassium | Pyroxasulfone + imazethapyr ammonium | Saflufenacil |
| C-1352 | Dicamba potassium | Isoxaflutole + imazethapyr | Saflufenacil |
| C-1353 | Dicamba potassium | Isoxaflutole + imazethapyr ammonium | Saflufenacil |
| C-1354 | Dicamba potassium | Mesotrione + imazethapyr | Saflufenacil |
| C-1355 | Dicamba potassium | Mesotrione + imazethapyr ammonium | Saflufenacil |
| C-1356 | Dicamba potassium | Prometryne | Saflufenacil |
| C-1357 | Dicamba potassium | Fluometuron | Saflufenacil |
| C-1358 | Dicamba potassium | Thidiazuron | Saflufenacil |
| C-1359 | Dicamba potassium | Diuron | Saflufenacil |
| C-1360 | Dicamba potassium | Acetochlor | Saflufenacil |
| C-1361 | Dicamba potassium | Metolachlor | Saflufenacil |
| C-1362 | Dicamba potassium | (S)-Metolachlor | Saflufenacil |
| C-1363 | Dicamba potassium | Dimethenamid | Saflufenacil |
| C-1364 | Dicamba potassium | Dimethenamid-P | Saflufenacil |
| C-1365 | Dicamba potassium | Clomazone | Saflufenacil |
| C-1366 | Dicamba potassium | Pendimethalin | Saflufenacil |
| C-1367 | Dicamba potassium | Trifluralin | Saflufenacil |
| C-1368 | Dicamba potassium | Fomesafen | Saflufenacil |
| C-1369 | Dicamba potassium | Oxyfluorfen | Saflufenacil |
| C-1370 | Dicamba potassium | Saflufenacil | Saflufenacil |

(continued)

| Treatment combination | Pre-plant burn-down | Pre-emergence | Pre-harvest desiccation/ defoliation |
|---|---|---|---|
| C-1371 | Dicamba potassium | Trifludimoxazin | Saflufenacil |
| C-1372 | Dicamba potassium | Saflufenacil + trifludimoxazin | Saflufenacil |
| C-1373 | Dicamba potassium | Flumioxazin | Saflufenacil |
| C-1374 | Dicamba potassium | Sulfentrazone | Saflufenacil |
| C-1375 | Dicamba potassium | Bicyclopyrone | Saflufenacil |
| C-1376 | Dicamba potassium | Tembotrione | Saflufenacil |
| C-1377 | Dicamba potassium | Mesotrione | Saflufenacil |
| C-1378 | Dicamba BAPMA salt | Isoxaflutole | Saflufenacil |
| C-1379 | Dicamba BAPMA salt | Pyroxasulfone | Saflufenacil |
| C-1380 | Dicamba BAPMA salt | Isoxaflutole + pyroxasulfone | Saflufenacil |
| C-1381 | Dicamba BAPMA salt | Isoxaflutole + pyroxasulfone + imazethapyr | Saflufenacil |
| C-1382 | Dicamba BAPMA salt | Isoxaflutole + pyroxasulfone + imazethapyr ammonium | Saflufenacil |
| C-1383 | Dicamba BAPMA salt | Isoxaflutole + pyroxasulfone + imazapic | Saflufenacil |
| C-1384 | Dicamba BAPMA salt | Isoxaflutole + pyroxasul-fone + imazapic ammonium | Saflufenacil |
| C-1385 | Dicamba BAPMA salt | Isoxaflutole + pyroxasulfone + imazaquin | Saflufenacil |
| C-1386 | Dicamba BAPMA salt | Isoxaflutole + pyroxasulfone + imazaquin ammonium | Saflufenacil |
| C-1387 | Dicamba BAPMA salt | Isoxaflutole + mesotrione | Saflufenacil |
| C-1388 | Dicamba BAPMA salt | Isoxaflutole + mesotrione + pyroxasulfone | Saflufenacil |
| C-1389 | Dicamba BAPMA salt | Mesotrione + pyroxasulfone | Saflufenacil |
| C-1390 | Dicamba BAPMA salt | Pyroxasulfone + imazethapyr | Saflufenacil |
| C-1391 | Dicamba BAPMA salt | Pyroxasulfone + imazethapyr ammonium | Saflufenacil |
| C-1392 | Dicamba BAPMA salt | Isoxaflutole + imazethapyr | Saflufenacil |
| C-1393 | Dicamba BAPMA salt | Isoxaflutole + imazethapyr ammonium | Saflufenacil |
| C-1394 | Dicamba BAPMA salt | Mesotrione + imazethapyr | Saflufenacil |
| C-1395 | Dicamba BAPMA salt | Mesotrione + imazethapyr ammonium | Saflufenacil |
| C-1396 | Dicamba BAPMA salt | Prometryne | Saflufenacil |
| C-1397 | Dicamba BAPMA salt | Fluometuron | Saflufenacil |
| C-1398 | Dicamba BAPMA salt | Thidiazuron | Saflufenacil |
| C-1399 | Dicamba BAPMA salt | Diuron | Saflufenacil |
| C-1400 | Dicamba BAPMA salt | Acetochlor | Saflufenacil |
| C-1401 | Dicamba BAPMA salt | Metolachlor | Saflufenacil |
| C-1402 | Dicamba BAPMA salt | (S)-Metolachlor | Saflufenacil |
| C-1403 | Dicamba BAPMA salt | Dimethenamid | Saflufenacil |
| C-1404 | Dicamba BAPMA salt | Dimethenamid-P | Saflufenacil |
| C-1405 | Dicamba BAPMA salt | Clomazone | Saflufenacil |

(continued)

| Treatment combination | Pre-plant burn-down | Pre-emergence | Pre-harvest desiccation/defoliation |
|---|---|---|---|
| C-1406 | Dicamba BAPMA salt | Pendimethalin | Saflufenacil |
| C-1407 | Dicamba BAPMA salt | Trifluralin | Saflufenacil |
| C-1408 | Dicamba BAPMA salt | Fomesafen | Saflufenacil |
| C-1409 | Dicamba BAPMA salt | Oxyfluorfen | Saflufenacil |
| C-1410 | Dicamba BAPMA salt | Saflufenacil | Saflufenacil |
| C-1411 | Dicamba BAPMA salt | Trifludimoxazin | Saflufenacil |
| C-1412 | Dicamba BAPMA salt | Saflufenacil + trifludimoxazin | Saflufenacil |
| C-1413 | Dicamba BAPMA salt | Flumioxazin | Saflufenacil |
| C-1414 | Dicamba BAPMA salt | Sulfentrazone | Saflufenacil |
| C-1415 | Dicamba BAPMA salt | Bicyclopyrone | Saflufenacil |
| C-1416 | Dicamba BAPMA salt | Tembotrione | Saflufenacil |
| C-1417 | Dicamba BAPMA salt | Mesotrione | Saflufenacil |
| C-1418 | - | Isoxaflutole | Saflufenacil |
| C-1419 | - | Pyroxasulfone | Saflufenacil |
| C-1420 | - | Isoxaflutole + pyroxasulfone | Saflufenacil |
| C-1421 | - | Isoxaflutole + pyroxasulfone + imazethapyr | Saflufenacil |
| C-1422 | - | Isoxaflutole + pyroxasulfone + imazethapyr ammonium | Saflufenacil |
| C-1423 | - | Isoxaflutole + pyroxasulfone + imazapic | Saflufenacil |
| C-1424 | - | Isoxaflutole + pyroxasulfone + imazapic ammonium | Saflufenacil |
| C-1425 | - | Isoxaflutole + pyroxasulfone + imazaquin | Saflufenacil |
| C-1426 | - | Isoxaflutole + pyroxasulfone + imazaquin ammonium | Saflufenacil |
| C-1427 | - | Isoxaflutole + mesotrione | Saflufenacil |
| C-1428 | - | Isoxaflutole + mesotrione + pyroxasulfone | Saflufenacil |
| C-1429 | - | Mesotrione + pyroxasulfone | Saflufenacil |
| C-1430 | - | Pyroxasulfone + imazethapyr | Saflufenacil |
| C-1431 | - | Pyroxasulfone + imazethapyr ammonium | Saflufenacil |
| C-1432 | - | Isoxaflutole + imazethapyr | Saflufenacil |
| C-1433 | - | Isoxaflutole + imazethapyr ammonium | Saflufenacil |
| C-1434 | - | Mesotrione + imazethapyr | Saflufenacil |
| C-1435 | - | Mesotrione + imazethapyr ammonium | Saflufenacil |
| C-1436 | - | Prometryne | Saflufenacil |
| C-1437 | - | Fluometuron | Saflufenacil |
| C-1438 | - | Thidiazuron | Saflufenacil |
| C-1439 | - | Diuron | Saflufenacil |
| C-1440 | - | Acetochlor | Saflufenacil |

(continued)

| Treatment combination | Pre-plant burn-down | Pre-emergence | Pre-harvest desiccation/ defoliation |
|---|---|---|---|
| C-1441 | - | Metolachlor | Saflufenacil |
| C-1442 | - | (S)-Metolachlor | Saflufenacil |
| C-1443 | - | Dimethenamid | Saflufenacil |
| C-1444 | - | Dimethenamid-P | Saflufenacil |
| C-1445 | - | Clomazone | Saflufenacil |
| C-1446 | - | Pendimethalin | Saflufenacil |
| C-1447 | - | Trifluralin | Saflufenacil |
| C-1448 | - | Fomesafen | Saflufenacil |
| C-1449 | - | Oxyfluorfen | Saflufenacil |
| C-1450 | - | Saflufenacil | Saflufenacil |
| C-1451 | - | Trifludimoxazin | Saflufenacil |
| C-1452 | - | Saflufenacil + trifludimoxazin | Saflufenacil |
| C-1453 | - | Flumioxazin | Saflufenacil |
| C-1454 | - | Sulfentrazone | Saflufenacil |
| C-1455 | - | Bicyclopyrone | Saflufenacil |
| C-1456 | - | Tembotrione | Saflufenacil |
| C-1457 | - | Mesotrione | Saflufenacil |
| C-1458 | Glufosinate | - | Saflufenacil |
| C-1459 | Glufosinate ammonium | - | Saflufenacil |
| C-1460 | L-Glufosinate | - | Saflufenacil |
| C-1461 | L-Glufosinate ammonium | - | Saflufenacil |
| C-1462 | L-Glufosinate sodium | - | Saflufenacil |
| C-1463 | Glyphosate | - | Saflufenacil |
| C-1464 | Glyphosate dimethylammonium | - | Saflufenacil |
| C-1465 | Glyphosate potassium | - | Saflufenacil |
| C-1466 | Glyphosate isopropylammonium | - | Saflufenacil |
| C-1467 | Saflufenacil | - | Saflufenacil |
| C-1468 | Trifludimoxazin | - | Saflufenacil |
| C-1469 | Saflufenacil + trifludimoxazin | - | Saflufenacil |
| C-1470 | Dicamba | - | Saflufenacil |
| C-1471 | Dicamba ethanolamine salt | - | Saflufenacil |
| C-1472 | Dicamba diglycolamine salt | - | Saflufenacil |

(continued)

| Treatment combination | Pre-plant burn-down | Pre-emergence | Pre-harvest desiccation/ defoliation |
|---|---|---|---|
| C-1473 | Dicamba potassium | - | Saflufenacil |
| C-1474 | Dicamba BAPMA salt | - | Saflufenacil |
| C-1475 | - | - | Saflufenacil |

The cotton treatment combinations C2.1 to C2.1475 in which one of the cotton treatment combinations listed in the preceeding table is combined with post-emergence use of glufosinate ammonium.

The cotton treatment combinations C3.1 to C3.1475 in which one of the cotton treatment combinations listed in the preceeding table is combined with post-emergence use of L-glufosinate.

The cotton treatment combinations C4.1 to C4.1475 in which one of the cotton treatment combinations listed in the preceeding table is combined with post-emergence use of L-glufosinate ammonium.

The cotton treatment combinations C5.1 to C5.1475 in which one of the cotton treatment combinations listed in the preceeding table is combined with post-emergence use of L-glufosinate sodium.

The cotton treatment combinations C6.1 to C6.1475 in which one of the cotton treatment combinations listed in the preceeding table is combined with post-emergence use of glyphosate.

The cotton treatment combinations C7.1 to C7.1475 in which one of the cotton treatment combinations listed in the preceeding table is combined with post-emergence use of glyphosate dimethylammonium.

The cotton treatment combinations C8.1 to C8.1475 in which one of the cotton treatment combinations listed in the preceeding table is combined with post-emergence use of glyphosate potassium.

The cotton treatment combinations C9.1 to C9.1475 in which one of the cotton treatment combinations listed in the preceeding table is combined with post-emergence use of glyphosate isopropylammonium.

The cotton treatment combinations C10.1 to C10.1475 in which one of the cotton treatment combinations listed in the preceeding table is combined with post-emergence use of imazamox.

The cotton treatment combinations C11.1 to C11.1475 in which one of the cotton treatment combinations listed in the preceeding table is combined with post-emergence use of imazamox ammonium.

The cotton treatment combinations C12.1 to C12.1475 in which one of the cotton treatment combinations listed in the preceeding table is combined with post-emergence use of imazethapyr.

The cotton treatment combinations C13.1 to C13.1475 in which one of the cotton treatment combinations listed in the preceeding table is combined with post-emergence use of imazethapyr ammonium.

The cotton treatment combinations C14.1 to C14.1475 in which one of the cotton treatment combinations listed in the preceeding table is combined with post-emergence use of pyrithiobac sodium.

The cotton treatment combinations C15.1 to C15.1475 in which one of the cotton treatment combinations listed in the preceeding table is combined with post-emergence use of acetochlor

The cotton treatment combinations C16.1 to C16.1475 in which one of the cotton treatment combinations listed in the preceeding table is combined with post-emergence use of metolachlor.

The cotton treatment combinations C17.1 to C17.1475 in which one of the cotton treatment combinations listed in the preceeding table is combined with post-emergence use of (S)-metolachlor.

The cotton treatment combinations C18.1 to C18.1475 in which one of the cotton treatment combinations listed in the preceeding table is combined with post-emergence use of dimethenamid.

The cotton treatment combinations C19.1 to C19.1475 in which one of the cotton treatment combinations listed in the preceeding table is combined with post-emergence use of dimethenamid-P.

The cotton treatment combinations C20.1 to C20.1475 in which one of the cotton treatment combinations listed in the preceeding table is combined with post-emergence use of pyroxasulfone.

The cotton treatment combinations C21.1 to C21.1475 in which one of the cotton treatment combinations listed in the preceeding table is combined with post-emergence use of isoxaflutole.

The cotton treatment combinations C22.1 to C22.1475 in which one of the cotton treatment combinations listed in the preceeding table is combined with post-emergence use of topramezone.

The cotton treatment combinations C23.1 to C23.1475 in which one of the cotton treatment combinations listed in the preceeding table is combined with post-emergence use of bicyclopyrone.

The cotton treatment combinations C24.1 to C24.1475 in which one of the cotton treatment combinations listed in the preceeding table is combined with post-emergence use of tembotrione.

The cotton treatment combinations C25.1 to C25.1475 in which one of the cotton treatment combinations listed in the preceeding table is combined with post-emergence use of mesotrione.

The cotton treatment combinations C26.1 to C26.1475 in which one of the cotton treatment combinations listed in the preceeding table is combined with post-emergence use of isoxaflutole and mesotrione.

The cotton treatment combinations C27.1 to C27.1475 in which one of the cotton treatment combinations listed in the preceeding table is combined with post-emergence use of isoxaflutole and topramezone.

The cotton treatment combinations C28.1 to C28.1475 in which one of the cotton treatment combinations listed in the preceeding table is combined with post-emergence use of mesotrione and topramezone.

The cotton treatment combinations C29.1 to C29.1475 in which one of the cotton treatment combinations listed in the preceeding table is combined with post-emergence use of isoxaflutole and tolpyralate.

The cotton treatment combinations C30.1 to C30.1475 in which one of the cotton treatment combinations listed in the preceeding table is combined with post-emergence use of fenquinotrione.

The cotton treatment combinations C31.1 to C31.1475 in which one of the cotton treatment combinations listed in the preceeding table is combined with post-emergence use of tolpyralate.

The cotton treatment combinations C32.1 to C32.1475 in which one of the cotton treatment combinations listed in the preceeding table is combined with post-emergence use of carfentrazone-ethyl.

The cotton treatment combinations C33.1 to C33.1475 in which one of the cotton treatment combinations listed in the preceeding table is combined with post-emergence use of saflufenacil.

The cotton treatment combinations C34.1 to C34.1475 in which one of the cotton treatment combinations listed in the preceeding table is combined with post-emergence use of sulfentrazone.

The cotton treatment combinations C35.1 to C35.1475 in which one of the cotton treatment combinations listed in the preceeding table is combined with post-emergence use of trifludimoxazin.

The cotton treatment combinations C36.1 to C36.1475 in which one of the cotton treatment combinations listed in the preceeding table is combined with post-emergence use of saflufenacil and trifludimoxazin.

The cotton treatment combinations C37.1 to C37.1475 in which one of the cotton treatment combinations listed in the preceeding table is combined with post-emergence use of pyraflufenethyl.

The cotton treatment combinations C38.1 to C38.1475 in which one of the cotton treatment combinations listed in the preceeding table is combined with post-emergence use of fluthiacetmethyl.

The cotton treatment combinations C39.1 to C39.1475 in which one of the cotton treatment combinations listed in the preceeding table is combined with post-emergence use of tiafenacil.

The cotton treatment combinations C40.1 to C40.1475 in which one of the cotton treatment combinations listed in the preceeding table is combined with post-emergence use of oxyfluorfen.

The cotton treatment combinations C41.1 to C41.1475 in which one of the cotton treatment combinations listed in the preceeding table is combined with post-emergence use of fomesafen.

The cotton treatment combinations C42.1 to C42.1475 in which one of the cotton treatment combinations listed in the preceeding table is combined with post-emergence use of ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6, S-3100).

The cotton treatment combinations C43.1 to C43.1475 in which one of the cotton treatment combinations listed in the preceeding table is combined with post-emergence use of isoxaflutole and pyroxasulfone.

The cotton treatment combinations C44.1 to C44.1475 in which one of the cotton treatment combinations listed in the preceeding table is combined with post-emergence use of isoxaflutole, pyroxasulfone and imazethapyr.

The cotton treatment combinations C45.1 to C45.1475 in which one of the cotton treatment combinations listed in the preceeding table is combined with post-emergence use of isoxaflutole, pyroxasulfone and imazethapyr ammonium.

The cotton treatment combinations C46.1 to C46.1475 in which one of the cotton treatment combinations listed in the preceeding table is combined with post-emergence use of isoxaflutole, pyroxasulfone and imazamox.

The cotton treatment combinations C47.1 to C47.1475 in which one of the cotton treatment combinations listed in the preceeding table is combined with post-emergence use of isoxaflutole, pyroxasulfone and imazamox ammonium.

The cotton treatment combinations C48.1 to C48.1475 in which one of the cotton treatment combinations listed in the preceeding table is combined with post-emergence use of isoxaflutole, mesotrione and pyroxasulfone.

The cotton treatment combinations C49.1 to C49.1475 in which one of the cotton treatment combinations listed in the preceeding table is combined with post-emergence use of mesotrione and pyroxasulfone.

The cotton treatment combinations C50.1 to C50.1475 in which one of the cotton treatment combinations listed in the preceeding table is combined with post-emergence use of topramezone and pyroxasulfone.

The cotton treatment combinations C51.1 to C51.1475 in which one of the cotton treatment combinations listed in the preceeding table is combined with post-emergence use of pyroxasulfone and imazamox.

The cotton treatment combinations C52.1 to C52.1475 in which one of the cotton treatment combinations listed in the preceeding table is combined with post-emergence use of pyroxasulfone and imazamox ammonium.

The cotton treatment combinations C53.1 to C53.1475 in which one of the cotton treatment combinations listed in the preceeding table is combined with post-emergence use of clethodim.

The cotton treatment combinations C54.1 to C54.1475 in which one of the cotton treatment combinations listed in the preceeding table is combined with post-emergence use of cycloxydim.

The cotton treatment combinations C55.1 to C55.1475 in which one of the cotton treatment combinations listed in the preceeding table is combined with post-emergence use of sethoxydim.

The cotton treatment combinations C56.1 to C56.1475 in which one of the cotton treatment combinations listed in the preceeding table is combined with post-emergence use of tepraloxydim.

The cotton treatment combinations C57.1 to C57.1475 in which one of the cotton treatment combinations listed in the preceeding table is combined with post-emergence use of 2,4-D. The cotton treatment combinations C58.1 to C58.1475 in which one of the cotton treatment combinations listed in the preceeding table is combined with post-emergence use of 2,4-D choline salt.

The cotton treatment combinations C59.1 to C59.1475 in which one of the cotton treatment combinations listed in the preceeding table is combined with post-emergence use of dicamba. The cotton treatment combinations C60.1 to C60.1475 in which one of the cotton treatment combinations listed in the preceeding table is combined with post-emergence use of dicamba sodium.

The cotton treatment combinations C61.1 to C61.1475 in which one of the cotton treatment combinations listed in the preceeding table is combined with post-emergence use of dicamba ethanolamine salt.

The cotton treatment combinations C62.1 to C62.1475 in which one of the cotton treatment combinations listed in the preceeding table is combined with post-emergence use of dicamba diglycolamine salt.

The cotton treatment combinations C63.1 to C63.1475 in which one of the cotton treatment combinations listed in the preceeding table is combined with post-emergence use of dicamba potassium.

The cotton treatment combinations C64.1 to C64.1475 in which one of the cotton treatment combinations listed in the preceeding table is combined with post-emergence use of dicamba BAPMA salt.

The abovementioned properties and advantages are necessary under practical weed control conditions to keep the soybeans or cotton free from undesired competing plants and thus to guarantee and/or increase the yields from the qualitative and quantitative point of view. These novel combinations markedly exceed the technical state of the art with a view to the properties described.

While the active compounds of the inventive mixtures have an outstanding herbicidal activity against monocotyledonous and dicotyledonous weeds, the tolerant, or cross-tolerant, glufosinate tolerant soybeans and cotton are damaged only to a minor extent, or not at all.

As mentioned above, the inventive mixtures are suitable for controlling a large number of harmful plants in HPPD tolerant soybeans and cotton.

Thus, the terms "HPPD tolerant soybeans" and "HPPD tolerant cotton" as used herein includes also (soybean or cotton) plants which have been modified by mutagenesis, genetic engineering or breeding and mutation selection techniques in order to provide a new trait to a plant or to modify an already present trait.

Mutagenesis includes techniques of random mutagenesis using X-rays or mutagenic chemicals, but also techniques of targeted mutagenesis, in order to create mutations at a specific locus of a plant genome. Targeted mutagenesis techniques frequently use oligonucleotides or proteins like CRISPR/Cas, zinc-finger nucleases, TALENs or meganucleases to achieve the targeting effect. Genetic engineering usually uses recombinant DNA techniques to create modifications in a plant genome which under natural circumstances cannot readily be obtained by cross breeding, mutagenesis or natural recombination. Typically, one or more genes are integrated into the genome of a plant in order to add a trait or improve a trait. These integrated genes are also referred to as transgenes in the art, while plant comprising such transgenes are referred to as transgenic plants. The process of plant transformation usually produces several transformation events, wich differ in the genomic locus in which a transgene has been integrated. Plants comprising a specific transgene on a specific genomic locus are usually described as comprising a specific "event", which is referred to by a specific event name. HPPD tolerance has been created by using mutagenesis as well as using genetic engineering.

Transgenic soybean events comprising HPPD tolerance genes are for example, but not excluding others, FG72 (that confers tolerance to both HPPD inhibitors and glyphosate, commercially available as GT27® soybeans), FG72xLL55 (that confers tolerance to HPPD inhibitors such as isoxaflutole, and to glyphosate and glufosinate) and MGI (that confers tolerance to HPPD inhibitors such as isoxaflutole and mesotrione, and to glufosinate).

In other aspects, soybeans of the invention include those plants which have been subjected to genetic modifications other than HPPD tolerance by breeding, mutagenesis or genetic engineering, e.g. have been rendered tolerant to applications of specific other classes of herbicides, such as PPO inhibitors (e. g. saflufenacil, trifludimoxazin), AHAS inhibitors; auxinic herbicides such as dicamba or 2,4-D; bleaching herbicides such as hydroxyphenylpyruvate dioxygenase (HPPD) inhibitors (e. g. isoxaflutole, mesotrione, tembotrione, topramezone, bicyclopyrone) or phytoene desaturase (PDS) inhibitors; EPSPS inhibitors such as glyphosate; glutamine synthetase (GS) inhibitors such as glufosinate; lipid biosynthesis inhibitors such as acetyl CoA carboxylase (ACCase) inhibitors such as "dims" {e.g., cycloxydim, sethoxydim, clethodim, or tepraloxydim), "fops" {e.g. , clodinafop, diclofop, fluazifop, haloxyfop, or quizalofop), and "dens" (such as pinoxaden); or oxynil {i.e. bromoxynil or ioxynil) herbicides as a result of conventional methods of breeding or genetic engineering, Thus, soybeans of the invention can be made resistant to multiple classes of herbicides through multiple genetic modifications, such as for example the aforementioned FG72, FG72xLL55 and MGI soybeans; further examples of such resistance to multiple classes of herbicides include resistance to glyphosate, glufosinate, dicamba and HPPD inhibitors such as isoxaflutole or mesotrione;; glyphosate, PPO inhibitors and HPPD inhibitors; glufosinate, HPPD inhibitors and PPO inhibitors; glyphosate, glufosinate, HPPD inhibitors and PPO inhibitors; glyphosate, dicamba, HPPD inhibitors and PPO inhibitors; glyphosate, 2,4-D, HPPD inhibitors and PPO inhibitors; glyphosate, dicamba, glufosinate, HPPD inhibitors and PPO inhibitors; glyphosate, 2,4-D, glufosinate, HPPD inhibitors and PPO inhibitors; or to one of the aforementioned soybeans that are tolerant to further classes of herbicides such as AHAS inhibitors or ACCase inhibitors. These herbicide resistance technologies are, for example, described in Pest Management Science (at volume, year, page): 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein.

In addition to these classes of inhibitors, soybeans of the invention may also be tolerant to herbicides having other modes of action, for example, chlorophyll/carotenoid pigment inhibitors, cell membrane disrupters, photosynthesis inhibitors, cell division inhibitors, root inhibitors, shoot inhibitors, and combinations thereof.

Such additional tolerance traits may be expressed, e.g.: as mutant or wildtype PPO proteins, as mutant AHASL proteins, mutant ACCase proteins, mutant EPSPS proteins, or mutant glutamine synthetase proteins; or as mutant native, inbred, or transgenic aryloxyalkanoate dioxygenase (AAD or DHT), haloarylnitrilase (BXN), 2,2-dichloropropionic acid dehalogenase (DEH), glyphosate-N- acetyltransferase (GAT), glyphosate decarboxylase (GDC), glyphosate oxidoreductase (GOX), glutathione-S-transferase (GST), phosphinothricin acetyltransferase (PAT or bar), or CYP450s proteins having an herbicide-degrading activity.

Glufosinate tolerant soybeans hereof can also be stacked with other traits including, but not limited to, pesticidal traits such as Bt Cry and other proteins having pesticidal activity toward coleopteran, lepidopteran, nematode, or other pests; nutrition or nutraceutical traits such as modified oil content or oil profile traits, high protein or high amino acid concentration traits, and other trait types known in the art.

Transgenic cotton events comprising HPPD tolerance events are for example, but not excluding others, GHB811 and GHB814 that both confer tolerance to glyphosate and HPPD inhibitors such as isoxaflutole.

In other aspects, cotton plants of the invention include those plants which have been subjected to genetic modifications other than HPPD tolerance by breeding, mutagenesis or genetic engineering, e.g. have been rendered tolerant to applications of specific other classes of herbicides, such as PPO inhibitors (e. g. saflufenacil, trifludimoxazin), AHAS inhibitors; auxinic herbicides such as dicamba or 2,4-D; bleaching herbicides such as hydroxyphenylpyruvate dioxygenase (HPPD) inhibitors (e. g. isoxaflutole, mesotrione, tembotrione, topramezone, bicyclopyrone) or phytoene desaturase (PDS) inhibitors; EPSPS inhibitors such as glyphosate; glutamine synthetase (GS) inhibitors such as glufosinate; lipid biosynthesis inhibitors such as acetyl CoA carboxylase (ACCase) inhibitors such as "dims" {e.g., cyclyoxydim, sethoxydim, clethodim, or tepraloxydim), "fops" {e.g. , clodinafop, diclofop, fluazifop, haloxyfop, or quizalofop), and "dens" (such as pinoxaden); or oxynil {i.e. bromoxynil or ioxynil) herbicides as a result of conventional methods of breeding or genetic engineering, Thus, cotton plants of the invention can be made resistant to multiple classes of herbicides through multiple genetic modifications, such as for example resistance to glyphosate and HPPD inhibitors such as isoxaflutole; glyphosate, glufosinate and HPPD inhibitors such as isoxaflutole; glufosinate and HPPD inhibitors such as isoxaflutole; glyphosate, glufosinate, dicamba and HPPD inhibitors such as isoxaflutole; glyphosate, PPO inhibitors and HPPD inhibitors; glufosinate, HPPD inhibitors and PPO inhibitors; glyphosate, glufosinate, HPPD inhibitors and PPO inhibitors; glyphosate, dicamba, HPPD inhibitors and PPO inhibitors; glyphosate, 2,4-D, glufosinate, HPPD inhibitors and PPO inhibitors; glyphosate, dicamba, glufosinate, HPPD inhibitors and PPO inhibitors; or to one of the aforementioned cotton plants that are tolerant to further classes of herbicides such as AHAS inhibitors or ACCase inhibitors. These herbicide resistance technologies are, for example, described in Pest Management Science (at volume, year, page): 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein.

In addition to these classes of inhibitors, cotton plants of the invention may also be tolerant to herbicides having other modes of action, for example, chlorophyll/carotenoid pigment inhibitors, cell membrane disrupters, photosynthesis inhibitors, cell division inhibitors, root inhibitors, shoot inhibitors, and combinations thereof.

Such additional tolerance traits may be expressed, e.g.: as mutant or wildtype PPO proteins, as mutant AHASL proteins, mutant ACCase proteins, mutant EPSPS proteins, or mutant glutamine synthetase proteins; or as mutant native, inbred, or transgenic aryloxyalkanoate dioxygenase (AAD or DHT), haloarylnitrilase (BXN), 2,2-dichloropropionic acid dehalogenase (DEH), glyphosate-N- acetyltransferase (GAT), glyphosate decarboxylase (GDC), glyphosate oxidoreductase (GOX), glutathione-S-transferase (GST), phosphinothricin acetyltransferase (PAT or bar), or CYP450s proteins having an herbicide-degrading activity.

Glufosinate tolerant cotton plants hereof can also be stacked with other traits including, but not limited to, pesticidal traits such as Bt Cry and other proteins having pesticidal activity toward coleopteran, lepidopteran, nematode, or other pests; nutrition or nutraceutical traits such as modified oil content or oil profile traits, high protein or high amino acid concentration traits, and other trait types known in the art.

In all treatments according to the methods of the present invention, the inventive mixtures can be applied in conventional manner by using techniques as skilled person is familiar with. Suitable techniques include spraying, atomizing, dusting, spreading or watering. The type of application depends on the intended purpose in a well known manner; in any case, they should ensure the finest possible distribution of the active ingredients according to the invention.

In one embodiment, the inventive mixtures are applied to locus mainly by spraying, in particular foliar spraying of an aqueous dilution of the active ingredients of the mixture. Application can be carried out by customary spraying techniques using, for example, water as carrier and spray liquor rates of from about 10 to 2000 l/ha or 50 to 1000 l/ha (for example from 100 to 500 l/ha). Application of the inventive mixtures by the low-volume and the ultra-low-volume method is possible, as is their application in the form of microgranules.

The required application rate of the mixture of the pure active compounds depends on the density of the undesired vegetation, on the development stage of the plants, on the climatic conditions of the location where the mixture is used and on the application method.

In general, the rate of application of L-glufosinate is usually from 50 g/ha to 3000 g/ha and preferably in the range from 100 g/ha to 2000 g/ha or from 200 g/ha to 1500 g/ha of active substance (a.i.), and the rate of application of the secod herbicida compound II is from 1 g/ha to 2000 g/ha and preferably in the range from 5 g/ha to 1500 g/ha, more preferably from 25 g/ha to 900 g/ha of active substance (a.i.).

The examples which follow illustrate the invention without imposing any limitation.

Biological examples

Synergism can be described as an interaction where the combined effect of two or more compounds is greater than the sum of the individual effects of each of the compounds. The presence of a synergistic effect in terms of percent control, between two mixing partners (X and Y) can be calculated using the Colby equation (Colby, S. R., 1967, Calculating Synergistic and Antagonistic Responses in Herbicide Combinations, Weeds, 15, 21-22):

$$E = X + Y - \frac{XY}{100}$$

When the observed combined control effect is greater than the expected (calculated) combined control effect (E), then the combined effect is synergistic.

Biological tests can demonstrate the control efficacy of compounds, mixtures or compositions of this invention on specific weeds. However, the weed control afforded by the compounds, mixtures or compositions is not limited to these species. The analysis of synergism or antagonism between the mixtures or compositions is determined using Colby's equation.

**Claims**

1. A herbicidal mixture comprising

   1) isoxaflutole (compound I),
   2) pyroxasulfone (compound II),
   3) at least one imidazolinone herbicide selected from the group consisting of imazamox, imazapyr, imazapic, imazaquin and imazethapyr and their salts (compound III), and
   4) optionally at least one further herbicide selected from the group consisting of glyphosate and its salts, glufosinate and its salts, L-glufosinate (glufosinate-P) and its salts, dicamba and its salts and esters, 2,4-D and its salts and esters, bicyclopyrone, fenquinotrione, mesotrione, tembotrione, tolpyralate and topramezone (compound IV).

2. The herbicidal mixture as claimed in claim 1, wherein no compound IV is present.

3. The herbicidal mixture as claimed in claim 1 or 2, wherein compound III is selected from the group consisting of imazamox and imazamox ammonium.

4. The herbicidal mixture as claimed in claim 1 or 2, wherein compound III is selected from the group consisting of imazapic, imazapic ammonium, imazapyr, imazapyr ammonium, imazapyr isopropylammonium, imazaquin, imazethapyr and imazethapyr ammonium.

5. The herbicidal mixture as claimed in claim 1 or 2, wherein compound III is selected from the group consisting of imazethapyr and imazethapyr ammonium.

6. The herbicidal mixture as claimed in any of claims 1 or 3 to 5, wherein at least one compound IV is present.

7. The herbicidal mixture as claimed in claim 6, wherein the compound IV is selected from the group consisting of glyphosate and its salts, glufosinate and its salts, L-glufosinate (glufosinate-P) and its salts, dicamba and its salts and esters, 2,4-D and its salts and esters, mesotrione, tolpyralate and topramezone.

8. The herbicidal mixture as claimed as claimed in any of claims 1 to 7, wherein the weight ratio of compound I to compound II is from 15:1 to 1:15, and the weight ratio of compound I to compound III is from 15:1 to 1:15, and, if present, the weight ratio of compound I to compound IV is from 100:1 to 1:1000.

9. A pesticidal composition, comprising a liquid or solid carrier and a mixture as defined in any of claims 1 to 8.

10. A method for controlling undesirable vegetation, which method comprises applying a mixture according to claims 1 to 8 to a locus where undesirable vegetation is present or is expected to be present, in particular undesirable vegetation of the genus Amaranthus.

11. The method as claimed in claim 10, comprising application of the mixture as defined in claims 1 to 8 prior to emergence of the crop (pre-emergence).

12. The method as claimed in claim 10, comprising application of the mixture as defined in claims 1 to 8 prior to planting the crop.

13. The method as claimed in any of claims 10 to 13, wherein the crop is soybean, preferably herbicide-tolerant soybean.

14. The method as claimed in any of claims 10 to 13, wherein the crop is cotton, preferably herbicide-tolerant cotton.

15. The method as claimed in any of claims 10 to 14, wherein the components of the mixture as defined in any of claims 1 to 8 are applied simultaneously, that is jointly or separately, or in succession.

Europäisches
Patentamt

European
Patent Office

Office européen
des brevets

# EUROPEAN SEARCH REPORT

**Application Number**

EP 18 18 6930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2009/115603 A2 (BASF SE [DE]; SIEVERNICH BERND [DE]; SIMON ANJA [DE]; MOBERG WILLIAM K) 24 September 2009 (2009-09-24) * page 7, line 34; claim 2 * * page 9, lines 8-12 * | 1-15 | INV. A01N43/80 A01N43/50 A01P13/00 |
| Y | US 2008/153704 A1 (YAMAJI YOSHIHIRO [JP] ET AL) 26 June 2008 (2008-06-26) * paragraph [0192]; claims 8-11; table 16 * | 1-15 | |
| Y | WO 2009/112454 A2 (BASF SE [DE]; SIEVERNICH BERND [DE]; SIMON ANJA [DE]; MOBERG WILLIAM K) 17 September 2009 (2009-09-17) * claim 39; tables 1-3, 6-8, 11-16 * | 1-15 | |
| Y | CN 108 124 877 A (SHANDONG BINNONG TECH CO LTD) 8 June 2018 (2018-06-08) * abstract * | 1-15 | |
| Y | CN 106 818 786 A (SHANDONG WEIFANG RAINBOW CHEM) 13 June 2017 (2017-06-13) * abstract * | 1-15 | TECHNICAL FIELDS SEARCHED (IPC) A01N |
| A | WO 2009/141367 A2 (BASF SE [DE]; SIEVERNICH BERND [DE]; MOBERG WILLIAM KARL [DE]; SIMON A) 26 November 2009 (2009-11-26) * table 2 * | 1-15 | |

The present search report has been drawn up for all claims

| Place of search | Date of completion of the search | Examiner |
|---|---|---|
| Munich | 25 October 2018 | Lorusso, Patrizia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 18 18 6930

25-10-2018

| Patent document cited in search report | | Publication date | Patent family member(s) | | Publication date |
|---|---|---|---|---|---|
| WO 2009115603 | A2 | 24-09-2009 | NONE | | |
| US 2008153704 | A1 | 26-06-2008 | AR | 064606 A1 | 15-04-2009 |
| | | | AU | 2007335387 A1 | 26-06-2008 |
| | | | AU | 2010100642 A4 | 15-07-2010 |
| | | | BR | PI0721047 A2 | 29-07-2014 |
| | | | CA | 2671150 A1 | 26-06-2008 |
| | | | CA | 2851098 A1 | 26-06-2008 |
| | | | CL | 2007003725 A1 | 01-08-2008 |
| | | | CL | 2016000201 A1 | 09-09-2016 |
| | | | CL | 2016000202 A1 | 30-09-2016 |
| | | | CL | 2016000203 A1 | 30-09-2016 |
| | | | CL | 2016000204 A1 | 30-09-2016 |
| | | | CL | 2016000205 A1 | 30-09-2016 |
| | | | CL | 2016000206 A1 | 30-09-2016 |
| | | | CN | 101562976 A | 21-10-2009 |
| | | | CN | 103202308 A | 17-07-2013 |
| | | | CN | 103229769 A | 07-08-2013 |
| | | | CN | 103229770 A | 07-08-2013 |
| | | | CN | 103250708 A | 21-08-2013 |
| | | | CN | 103250709 A | 21-08-2013 |
| | | | CN | 104839179 A | 19-08-2015 |
| | | | CN | 104872148 A | 02-09-2015 |
| | | | CO | 6220878 A2 | 19-11-2010 |
| | | | CR | 10876 A | 30-07-2009 |
| | | | CY | 1116813 T1 | 15-03-2017 |
| | | | DK | 2123158 T3 | 11-01-2016 |
| | | | EA | 200970599 A1 | 30-12-2009 |
| | | | EA | 201200437 A1 | 30-07-2012 |
| | | | EA | 201200438 A1 | 30-07-2012 |
| | | | EA | 201200439 A1 | 30-07-2012 |
| | | | EA | 201200440 A1 | 30-07-2012 |
| | | | EA | 201200441 A1 | 30-07-2012 |
| | | | EA | 201200442 A1 | 30-07-2012 |
| | | | EC | SP099437 A | 31-07-2009 |
| | | | EP | 2123158 A1 | 25-11-2009 |
| | | | ES | 2550224 T3 | 05-11-2015 |
| | | | HR | P20151113 T1 | 20-11-2015 |
| | | | HU | E026078 T2 | 30-05-2016 |
| | | | IL | 199110 A | 24-09-2015 |
| | | | JP | 5322656 B2 | 23-10-2013 |
| | | | JP | WO2008075743 A1 | 15-04-2010 |
| | | | KR | 20090100340 A | 23-09-2009 |
| | | | NZ | 576518 A | 30-03-2012 |
| | | | NZ | 598102 A | 30-11-2012 |
| | | | NZ | 598103 A | 30-11-2012 |

EPO FORM P0459

For more details about this annex : see Official Journal of the European Patent Office, No. 12/82

page 1 of 3

# EP 3 603 399 A1

## ANNEX TO THE EUROPEAN SEARCH REPORT
## ON EUROPEAN PATENT APPLICATION NO.

EP 18 18 6930

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2018

| Patent document cited in search report | | | Publication date | Patent family member(s) | | | Publication date |
|---|---|---|---|---|---|---|---|
| | | | | NZ | 598104 | A | 30-11-2012 |
| | | | | NZ | 598105 | A | 30-11-2012 |
| | | | | NZ | 598106 | A | 30-11-2012 |
| | | | | NZ | 598107 | A | 30-11-2012 |
| | | | | PT | 2123158 | E | 26-11-2015 |
| | | | | SI | 2123158 | T1 | 29-01-2016 |
| | | | | UA | 97383 | C2 | 10-02-2012 |
| | | | | US | 2008153704 | A1 | 26-06-2008 |
| | | | | US | 2012058896 | A1 | 08-03-2012 |
| | | | | WO | 2008075743 | A1 | 26-06-2008 |
| WO 2009112454 | A2 | 17-09-2009 | | AR | 071556 | A1 | 30-06-2010 |
| | | | | AU | 2009224731 | A1 | 17-09-2009 |
| | | | | BR | PI0910335 | A2 | 22-09-2015 |
| | | | | CA | 2716674 | A1 | 17-09-2009 |
| | | | | CN | 102065692 | A | 18-05-2011 |
| | | | | CO | 6280582 | A2 | 20-05-2011 |
| | | | | CR | 11645 | A | 23-11-2010 |
| | | | | EA | 201001431 | A1 | 29-04-2011 |
| | | | | EC | SP10010490 | A | 30-10-2010 |
| | | | | EP | 2285220 | A2 | 23-02-2011 |
| | | | | PE | 18622009 | A1 | 17-01-2010 |
| | | | | TW | 200942532 | A | 16-10-2009 |
| | | | | UA | 102685 | C2 | 12-08-2013 |
| | | | | US | 2011015067 | A1 | 20-01-2011 |
| | | | | UY | 31696 | A1 | 30-09-2009 |
| | | | | WO | 2009112454 | A2 | 17-09-2009 |
| | | | | ZA | 201007160 | B | 26-08-2015 |
| CN 108124877 | A | 08-06-2018 | | NONE | | | |
| CN 106818786 | A | 13-06-2017 | | NONE | | | |
| WO 2009141367 | A2 | 26-11-2009 | | AR | 071858 | A1 | 21-07-2010 |
| | | | | AU | 2009248755 | A1 | 26-11-2009 |
| | | | | BR | PI0913114 | A2 | 04-08-2015 |
| | | | | CA | 2723310 | A1 | 26-11-2009 |
| | | | | CA | 2940381 | A1 | 26-11-2009 |
| | | | | CA | 2940383 | A1 | 26-11-2009 |
| | | | | CA | 3006377 | A1 | 26-11-2009 |
| | | | | CL | 2014002173 | A1 | 19-12-2014 |
| | | | | CL | 2014002174 | A1 | 19-12-2014 |
| | | | | CL | 2014002175 | A1 | 19-12-2014 |
| | | | | CN | 102036563 | A | 27-04-2011 |
| | | | | CR | 11796 | A | 10-01-2011 |
| | | | | EA | 201001768 | A1 | 30-06-2011 |

EPO FORM P0459

For more details about this annex : see Official Journal of the European Patent Office, No. 12/82

page 2 of 3

## ANNEX TO THE EUROPEAN SEARCH REPORT
## ON EUROPEAN PATENT APPLICATION NO.

EP 18 18 6930

25-10-2018

| Patent document cited in search report | Publication date | Patent family member(s) | Publication date |
|---|---|---|---|
| | | EP 2315525 A2 | 04-05-2011 |
| | | JP 5635977 B2 | 03-12-2014 |
| | | JP 2011520939 A | 21-07-2011 |
| | | SG 191594 A1 | 31-07-2013 |
| | | TW 201002206 A | 16-01-2010 |
| | | US 2011065579 A1 | 17-03-2011 |
| | | US 2017042159 A1 | 16-02-2017 |
| | | US 2017325455 A1 | 16-11-2017 |
| | | UY 31837 A | 14-12-2009 |
| | | WO 2009141367 A2 | 26-11-2009 |
| | | ZA 201009061 B | 26-08-2015 |

EPO FORM P0459

page 3 of 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Compendium of Pesticide Common Names website. Pesticide Manual V5.2. 2008
- Catalogue of pesticide formulation types and international coding system. Technical Monograph. CropLife International, May 2008
- **MOLLET ; GRUBEMANN.** Formulation technology. Wiley VCH, 2001
- New developments in crop protection product formulation. **KNOWLES.** Agrow Reports DS243. T&F Informa, 2005
- International Ed. or North American Ed. **MCCUTCHEON'S.** Emulsifiers & Detergents. McCutcheon's Directories, 2008, vol. 1
- Agrow Reports DS256. **KNOWLES.** Adjuvants and additives. T&F Informa, 2006
- *CHEMICAL ABSTRACTS,* 353292-31-6
- *Pest Management Science,* 2005, vol. 61, 246
- *PEST MANAGEMENT SCIENCE,* 2005, vol. 61, 258
- *PEST MANAGEMENT SCIENCE,* 2005, vol. 61, 277
- *PEST MANAGEMENT SCIENCE,* 2005, vol. 61, 269
- *PEST MANAGEMENT SCIENCE,* 2005, vol. 61, 286
- *PEST MANAGEMENT SCIENCE,* 2008, vol. 64, 326
- *PEST MANAGEMENT SCIENCE,* 2008, vol. 64, 332
- *Weed Science,* 2009, vol. 57, 108
- *Australian Journal of Agricultural Research,* 2007, vol. 58, 708
- *Science,* 2007, vol. 316, 1185
- **COLBY, S. R.** Calculating Synergistic and Antagonistic Responses in Herbicide Combinations. *Weeds,* 1967, vol. 15, 21-22